# EUROPÄISCHE PATENTSCHRIFT

(11) **EP 2 291 279 B1**
(45) Veröffentlichungstag und Bekanntmachung des Hinweises auf die Patenterteilung: **18.07.2018**
(21) Anmeldenummer: 09765554.2
(22) Anmeldetag: 09.06.2009
(51) Int. Cl.: B29C 47/64, B29B 7/48, B29C 47/40, B29C 47/38, B29C 47/62, B29C 47/60

(54) **SCHNECKENELEMENTE MIT REDUZIERTEM ENERGIEEINTRAG BEIM DRUCKAUFBAU**
SCREW ELEMENTS WITH REDUCED ENERGY INPUT DURING PRESSURE BUILD-UP
ÉLÉMENTS DE VIS SANS FIN À APPORT D'ÉNERGIE RÉDUIT PENDANT LA MONTÉE EN PRESSION

(30) Priorität: 20.06.2008 DE 102008029306
(43) Veröffentlichungstag der Anmeldung: 09.03.2011
(73) Patentinhaber: Covestro Deutschland AG, 51373 Leverkusen (DE)
(72) Erfinder: BIERDEL, Michael, 51373 Leverkusen (DE); KÖNIG, Thomas, 51375 Leverkusen (DE); LIESENFELDER, Ulrich, 51469 Bergisch Gladbach (DE)
(74) Vertreter: Levpat
(86) Internationale Anmeldenummer: PCT/EP2009/004122
(87) Internationale Veröffentlichungsnummer: WO 2009/152974

(56) Entgegenhaltungen:
- WO-A1-02/076707
- WO-A2-02/09919

## Beschreibung

Die Erfindung betrifft Schneckenelemente mit neuartigen, dicht kämmenden, selbstreinigenden, gleichsinnig drehenden Schneckenprofilen für mehrwellige Schneckenmaschinen mit paarweise gleichsinnig drehenden und paarweise exakt abschabenden Schneckenwellen und die Verwendung der Schneckenelemente in mehrwelligen Schneckenmaschinen. Gleichsinnig drehende Zwei- oder ggf. Mehrwellenmaschinen, deren Rotoren sich gegenseitig exakt abschaben, sind bereits seit langem bekannt (siehe z.B. DP 862 668). In der Polymerherstellung und Polymerverarbeitung haben Schneckenmaschinen, die auf dem Prinzip exakt abschabender Profile beruhen, eine vielfältige Nutzung erfahren. Dies beruht vor allem darauf, dass Polymerschmelzen an Oberflächen anhaften und unter üblichen Verarbeitungstemperaturen mit der Zeit degradieren, was durch die selbstreinigende Wirkung der exakt abschabenden Schnecken unterbunden wird. Regeln zur Erzeugung exakt abschabender Schneckenprofile sind beispielsweise in der Veröffentlichung [1] auf den Seiten 96 - 109 dargestellt ([1] = Klemens Kohlgrüber: Der gleichläufige Doppelschneckenextruder, Hanser Verlag, München, 2007). Hier ist auch beschrieben, dass ein vorgegebenes Schneckenprofil auf der 1. Welle eines Doppelschneckenextruders das Schneckenprofil auf der 2. Welle eines Doppelschneckenextruders bestimmt. Das Schneckenprofil auf der 1. Welle des Doppelschneckenextruders wird daher als das erzeugende Schneckenprofil bezeichnet. Das Schneckenprofil auf der 2. Welle des Doppelschneckenextruders folgt aus dem Schneckenprofil der 1. Welle des Doppelschneckenextruders und wird daher als das erzeugte Schneckenprofil bezeichnet. Bei einem Mehrwellenextruder werden das erzeugende Schneckenprofil und das erzeugte Schneckenprofil auf benachbarten Wellen immer abwechselnd eingesetzt.
Moderne Doppelschneckenextruder verfügen über ein Baukastensystem, bei dem verschiedene Schneckenelemente auf einer Kernwelle aufgezogen werden können. Hiermit kann der Fachmann den Doppelschneckenextruder an die jeweilige Verfahrensaufgabe anpassen.
Wie der Fachmann weiß und wie es zum Beispiel in [1] auf den Seiten 96 - 109 nachzulesen ist, ist das bekannte dicht kämmende, selbstreinigende, gleichsinnig drehende Erdmenger-Schneckenprofil durch die Angabe der drei Größen Gangzahl z, Schneckenaußenradius ra und Achsabstand a eindeutig definiert. Die Gangzahl z ist eine ganze Zahl, die größer oder gleich 1 ist. Eine weitere wichtige Kenngröße eines Schneckenprofils ist der Kernradius ri. Eine weitere wichtige Kenngröße eines Schneckenprofils ist die Gangtiefe h.

Die Bereiche eines Schneckenprofils, die gleich dem Schneckenaußenradius sind, werden als Kammbereiche bezeichnet. Die Bereiche eines Schneckenprofils, die gleich dem Kernradius sind, werden als Nutbereiche bezeichnet. Die Bereiche eines Schneckenprofils, die kleiner als der Schneckenaußenradius und größer als der Kernradius sind, werden als Flankenbereiche bezeichnet. Der Bereich eines Mehrwellenextruders, in dem sich zwei Gehäusebohrungen durchdringen, wird als Zwickelbereich bezeichnet. Die beiden Schnittpunkte von zwei Gehäusebohrungen werden als Gehäusezwickel bezeichnet.

Der Kammwinkel δ_kw eines z-gängigen Erdmenger-Schneckenprofils berechnet sich zu δ_kw=π/z-2*arccos(0,5*a/ra), wobei unter π die Kreiszahl (π≈3,14159) zu verstehen ist [1]. Aus der Formel zur Berechnung des Kammwinkels folgt, dass sich die Kammwinkel eines 1-gängigen und eines 2-gängigen Erdmenger-Schneckenprofils bei gleichem Achsabstand und bei gleichem Schneckenaußenradius um π/2 unterscheiden. Ist der Gehäuseradius rg gleich dem Außenradius ra, so berechnet sich der Öffnungswinkel δ_gz zwischen den beiden Gehäusezwickeln zu δ_gz=2*arccos(0,5*a/ra). Für eingängige Erdmenger-Schneckenprofile folgt daraus, dass der Zwickelbereich für ein Verhältnis von Schneckenaußenradius zu Achsabstand kleiner als etwa 0,707 durch den Kammbereich des Schneckenprofils abgedichtet ist.

Die Gehäusebereiche in der Umgebung der beiden Gehäusezwickel werden als Gehäusezwickelbereich bezeichnet. Im Rahmen der folgenden Ausführungen umfasst dieser Bereich in jeder Gehäusebohrung ausgehend von jedem der beiden Gehäusezwickel einen Winkel δ_gb bezogen auf den Mittelpunkt der Gehäusebohrungen, der sich aus der Differenz des Kammwinkels eines eingängigen Erdmenger-Schneckenprofils minus des Öffnungswinkels zwischen den beiden Gehäusezwickeln berechnet: δ_gb=π-4*arccos(0,5*a/ra).

Ferner werden in [1] der Aufbau, die Funktion und der Betrieb von Zwei- und Mehrwellenextrudern ausführlich erläutert. Ein eigenes Kapitel (Seiten 227 - 248) ist den Schneckenelementen und ihrer Wirkungsweise gewidmet. Hier werden der Aufbau und die Funktion von Förder-, Knet- und Mischelementen detailliert erläutert. Um den Übergang zwischen Schneckenelementen unterschiedlicher Gangzahl zu ermöglichen, werden häufig Unterlegscheiben als Distanzhülse eingesetzt. In Sonderfällen werden sogenannte Übergangselemente eingesetzt, die einen kontinuierlichen Übergang zwischen zwei Schneckenprofilen unterschiedlicher Gangzahl ermöglichen, wobei an jedem Punkt des Übergangs ein sich selbst reinigendes Paar von Schneckenprofilen vorliegt.

In dem Patent DP 813154 wird ein eingängiges, dicht kämmendes, selbstreinigendes, gleichsinnig drehendes Schneckenprofil gezeigt. Derartige Schneckenprofile besitzen den Vorteil, dass der Kammbereich den Zwickelbereich abdichtet, wodurch auf diesem Schneckenprofil basierende Förderelemente ein hohes Druckaufbauvermögen besitzen. Derartige Schneckenprofile besitzen den Nachteil, dass der Kammbereich sehr groß ist, wodurch es zu einer unerwünschten thermischen und mechanischen Belastung der zu verarbeitenden viskosen Fluide kommt.
In den Patenten US 4131371 A und DE 3412258 A1 werden exzentrische, dreigängige, dicht kämmende, selbstreinigende und gleichsinnig drehende Schneckenprofile gezeigt. Die Exzentrizität erfolgt immer derart, dass nur ein Kamm das Gehäuse abstreift. Derartige Schneckenprofile besitzen den Nachteil, dass der Zwickelbereich nicht abgedichtet wird, wodurch das Druckaufbauvermögen eines auf derartigen Schneckenprofilen beruhenden Förderelements gering ist.
In dem Patent DE 4239220 A1 wird ein 3-gängiges selbstreinigendes Schneckenprofil beschrieben, bei dem die Kammwinkel der 3 Kämme unterschiedlich groß sind. Lediglich der Kamm mit dem größten Kammwinkel berührt das Gehäuse. Derartige Schneckenprofile besitzen den Nachteil, dass der Zwickelbereich nicht abgedichtet wird, wodurch das Druckaufbauvermögen eines auf derartigen Schneckenprofilen beruhenden Förderelements gering ist.
In dem Patent EP 2131 A1 werden unter anderem dicht kämmende, selbstreinigende, gleichsinnig drehende Schneckenprofile gezeigt, bei denen zwei Kammbereiche das Gehäuse abstreifen und der Abstand eines zwischen zwei Nutbereichen liegenden Flankenbereichs zum Gehäuse kleiner oder gleich der halben Gangtiefe ist. Derartige Schneckenprofile besitzen den Nachteil, dass der Abstand des besagten Flankenbereichs zum Gehäuse so gering ist, dass dieser besagte Flankenbereich wie ein Strömungshindernis wirkt, der den Druckaufbau eines auf derartigen Schneckenprofilen beruhenden Förderelements behindert.

In der WO-A-0209919, die den Gegenstand des Oberbegriffs des Anspruchs 1 offenbart, werden Schneckenelemente mit höheren und gebrochenen Gangzahlen offenbart, die als Übergangselemente eingesetzt werden können. Es stellt sich daher, ausgehend vom Stand der Technik, die Aufgabe, Schneckenelemente für mehrwellige Schneckenmaschinen bereitzustellen, die gleichzeitig einen möglichst hohen Druckaufbau, eine möglichst niedrige thermische und mechanische Produktbeanspruchung und einen möglichst niedrigen Strömungswiderstand aufweisen.
Überraschend wurde gefunden, dass die Aufgabe durch Schneckenelemente mit einer definierten Abfolge von Flankenbereichen, Kammbereichen und Nutbereichen gelöst werden kann.
Gegenstand der Erfindung betrifft daher neuartige Schneckenelemente für mehrwellige Schneckenmaschinen, wobei ein erzeugendes und ein erzeugtes Schneckenprofil eine Abfolge von Abdichtungsbereich - Übergangsbereich - Kanalbereich - Übergangsbereich aufweisen.
Unter Abdichtungsbereich wird eine Abfolge von Kammbereich - Flankenbereich - Kammbereich verstanden. Unter Kanalbereich wird eine Abfolge von Nutbereich - Flankenbereich - Nutbereich verstanden. Unter Übergangsbereich wird eine Abfolge von Schneckenprofilbereichen verstanden, die mit einem Flankenbereich anfängt und mit einem Flankenbereich endet.
Dabei ist der Abdichtungsbereich erfindungsgemäßer Schneckenelemente erfindungsgemäß dadurch charakterisiert, dass
∘ der Flankenbereich bezogen auf den Drehpunkt des Schneckenprofils einen Winkel δ_fb1 besitzt, der größer oder gleich dem halben Öffnungswinkel zwischen den beiden Gehäusezwickeln ist (δ_fb1≥arccos(0,5*a/ra)) und der bevorzugt größer oder gleich dem Öffnungswinkel zwischen den beiden Gehäusezwickeln ist (δ_fb1≥2*arccos(0,5*a/ra)),
∘ ein Kammbereich bezogen auf den Drehpunkt des Schneckenprofils einen Winkel δ_kb1 besitzt, der kleiner oder gleich der Differenz des Kammwinkels eines eingängigen Erdmenger-Schneckenprofils minus des Öffnungswinkels zwischen den beiden Gehäusezwickeln ist (δ_kb1≤π-4*arccos(0,5*a/ra)) und der bevorzugt kleiner oder gleich dem Kammwinkel eines zweigängigen Erdmenger-Schneckenprofils ist (δ_kb1≤π/2-2*arccos(0,5*a/ra)),
∘ der andere Kammbereich bezogen auf den Drehpunkt des Schneckenprofils einen Winkel δ_kb2 besitzt, der kleiner oder gleich der Differenz des Kammwinkels eines eingängigen Erdmenger-Schneckenprofils minus des Öffnungswinkels zwischen den beiden Gehäusezwickeln ist (δ_kb2≤π-4*arccos(0,5*a/ra)) und der bevorzugt kleiner oder gleich dem Kammwinkel eines zweigängigen Erdmenger-Schneckenprofils ist (δ_kb2≤π/2-2*arccos(0,5*a/ra)).
Die Summe der Winkel der Kamm- und Flankenbereiche δ_kb1, δ_kb2 und δ_fb1 des Abdichtungsbereichs liegt bevorzugt im Bereich von 0,75*δ_gz bis 2*δ_gb+δ_gz. In einer besonders bevorzugten Ausführungsform liegt die Summe der Winkel der Kamm- und Flankenbereiche δ_kb1, δ_kb2 und δ_fb1 des Abdichtungsbereichs im Bereich von δ_gz bis δ_gb+δ_gz.

Der Kanalbereich erfindungsgemäßer Schneckenelemente ist erfindungsgemäß dadurch charakterisiert, dass
∘ der Flankenbereich bezogen auf den Drehpunkt des Schneckenprofils einen Winkel δ_fb2 besitzt, der größer oder gleich dem halben Öffnungswinkel zwischen den beiden Gehäusezwickeln ist (δ_fb2≥arccos(0,5*a/ra)) und der bevorzugt größer oder gleich dem Öffnungswinkel zwischen den beiden Gehäusezwickeln ist (δ_fb2≥2*arccos(0,5*a/ra)), und der minimale Abstand des Flankenbereichs von dem Schneckenradius ra größer als die halbe Gangtiefe h ist,
∘ ein Nutbereich bezogen auf den Drehpunkt des Schneckenprofils einen Winkel δ_nb1 besitzt, der kleiner oder gleich der Differenz des Kammwinkels eines eingängigen Erdmenger-Schneckenprofils minus des Öffnungswinkels zwischen den beiden Gehäusezwickeln ist (δ_nb1≤π-4*arccos(0,5*a/ra)) und der bevorzugt kleiner oder gleich dem Kammwinkel eines zweigängigen Erdmenger-Schneckenprofils ist (δ_nb1≤π/2-2*arccos(0,5*a/ra)),
∘ der andere Nutbereich bezogen auf den Drehpunkt des Schneckenprofils einen Winkel δ_nb2 besitzt, der kleiner oder gleich der Differenz des Kammwinkels eines eingängigen Erdmenger-Schneckenprofils minus des Öffnungswinkels zwischen den beiden Gehäusezwickeln ist (δ_nb2<π-4*arccos(0,5*a/ra)) und der bevorzugt kleiner oder gleich dem Kammwinkel eines zweigängigen Erdmenger-Schneckenprofils ist (δ_nb2≤π/2-2*arccos(0,5*a/ra)).

Die Summe der Winkel der Nut- und Flankenbereiche δ_nb1, δ_nb2 und δ_fb2 des Kanalbereichs liegt bevorzugt im Bereich von 0,75*δ_gz bis 2*δ_gb+δ_gz. In einer besonders bevorzugten Ausführungsform liegt die Summe der Winkel der Nut- und Flankenbereiche δ_nb1, δ_nb2 und δ_fb2 des Kanalbereichs im Bereich von δ_gz bis δ_gb+δ_gz.

Der Übergangsbereich ist dadurch charakterisiert, das er mit einem Flankenbereich anfängt und mit einem Flankenbereich endet. Bevorzugt besteht der Übergangsbereich aus einer Abfolge von Flankenbereich - Kammbereich - Flankenbereich oder aus einer Abfolge von Flankenbereich - Nutbereich - Flankenbereich oder aus einer Abfolge von Flankenbereich - Kammbereich - Flankenbereich - Nutbereich - Flankenbereich oder aus einer Abfolge von Flankenbereich - Nutbereich - Flankenbereich - Kammbereich - Flankenbereich. In einer besonders bevorzugten Ausführungsform besteht der Übergangsbereich aus einem Flankenbereich. In diesem Fall beginnt und endet der Übergangsbereich mit diesem einen besagten Flankenbereich.

Die Erfindung ist nicht auf Schneckenelemente aus der heutzutage üblichen Modulbauweise einer Schnecke aus Schneckenelementen und Kemwellen beschränkt, sondern auch auf Schnecken in Massivbauweise anwendbar. Daher sind unter dem Begriff Schneckenelemente auch Schnecken in Massivbauweise zu verstehen.
Die erfindungsgemäßen Schneckenelemente können als Förderelemente, Knetelemente und / oder Mischelemente verwendet werden.

Ein Förderelement zeichnet sich bekanntlich dadurch aus (siehe zum Beispiel [1], Seiten 227 - 248), dass das Schneckenprofil in Achsrichtung kontinuierlich schraubenförmig verdreht und fortgesetzt wird. Dabei kann das Förderelement rechts- oder linksgängig sein. Die Steigung des Förderelements liegt bevorzugt im Bereich des 0,1-fachen bis 10-fachen des Achsabstandes, wobei unter der Steigung die axiale Länge verstanden wird, die für eine vollständige Drehung des Schneckenprofils erforderlich ist, und die axiale Länge eines Förderelements liegt bevorzugt im Bereich des 0,1-fachen bis 10-fachen des Achsabstands.

Ein Knetelement zeichnet sich bekanntlich dadurch aus (siehe zum Beispiel [1], Seiten 227 - 248), dass das Schneckenprofil in Achsrichtung absatzweise in Form von Knetscheiben fortgeführt wird. Die Anordnung der Knetscheiben kann rechts- oder linksgängig oder neutral erfolgen. Die axiale Länge der Knetscheiben liegt bevorzugt im Bereich des 0,05-fachen bis 10-fachen des Achsabstands. Der axiale Abstand zwischen zwei benachbarten Knetscheiben liegt bevorzugt im Bereich des 0,002-fachen bis 0,1-fachen des Achsabstandes.

Mischelemente werden bekanntlich dadurch gebildet (siehe zum Beispiel [1], Seiten 227 - 248), dass Förderelemente mit Durchbrüchen in den Schneckenkämmen ausgeführt werden. Die Mischelemente können rechts- oder linksgängig sein. Ihre Steigung liegt bevorzugt im Bereich des 0,1-fachen bis 10-fachen des Achsabstandes und die axiale Länge der Elemente liegt bevorzugt im Bereich des 0,1-fachen bis 10-fachen des Achsabstandes. Die Durchbrüche haben bevorzugt die Form einer u- oder v-förmigen Nut, die bevorzugt gegenfördernd oder achsparallel angeordnet sind.

Dem Fachmann ist bekannt, dass direkt abschabende Schneckenprofile nicht direkt in einen Doppelschneckenextruder eingesetzt werden können, vielmehr sind Spiele zwischen den Schnecken erforderlich. Hierfür sind in [1] auf den Seiten 28 ff verschiedene mögliche Strategien beschrieben.

Für die Schneckenprofile erfindungsgemäßer Schneckenelemente können Spiele im Bereich von 0,001 bis 0,1, bezogen auf den Durchmesser des Schneckenprofils, verwendet werden, bevorzugt 0,002 bis 0,05 und besonders bevorzugt 0,004 bis 0,02. Die Spiele können, wie dem Fachmann bekannt ist, zwischen Schnecke und Gehäuse und zwischen Schnecke und Schnecke unterschiedlich groß oder gleich sein. Die Spiele können auch konstant oder, in den angegebenen Grenzen, variabel sein. Es ist auch möglich, innerhalb der Spiele ein Schneckenprofil zu verschieben. Mögliche Spielstrategien sind die in [1] auf den Seiten 28 ff beschriebene Möglichkeit der Achsabstand-Vergrößerung, der Längsschnitt-Äquidistanten und der Raumäquidistanten, die alle dem Fachmann bekannt sind. Bei der Achsabstand-Vergrößerung wird ein Schneckenprofil kleineren Durchmessers konstruiert und um den Betrag des Spiels zwischen den Schnecken auseinandergerückt. Bei der Methode der Längsschnitt-Äquidistanten wird die Längsschnitt-Profilkurve (parallel zur Achse) um das halbe Spiel Schnecke-Schnecke nach innen verschoben. Bei der Methode der Raumäquidistanten wird, ausgehend von der Raumkurve, auf der die Schneckenelemente sich abreinigen, das Schneckenelement in der Richtung senkrecht zu den Flächen des exakt abschabenden Profils um das halbe Spiel zwischen Schnecke und Schnecke verkleinert. Bevorzugt wird die Längsschnitt-Äquidistante und die Raumäquidistante, besonders bevorzugt die Raumäquidistante verwendet. Generell lassen sich ebene, dicht kämmende, selbstreinigende, gleichsinnig drehende Schneckenprofile durch das im Folgenden beschriebene allgemeine Verfahren erzeugen.

Das allgemeine Verfahren zur Erzeugung von ebenen, dicht kämmenden, selbstreinigenden, gleichsinnig drehenden Schneckenprofilen mit einem wählbaren Achsabstand a zwischen den Drehachsen eines erzeugenden und eines erzeugten Schneckenprofils, ist dadurch charakterisiert, dass das erzeugende Schneckenprofil aus n Kreisbögen und das erzeugte Schneckenprofil aus n' Kreisbögen gebildet wird, wobei
- das erzeugende Schneckenprofil und das erzeugte Schneckenprofil in einer Ebene liegen,
- die Drehachse des erzeugenden Schneckenprofils und die Drehachse des erzeugten Schneckenprofils jeweils senkrecht auf der besagten Ebene der Schneckenprofile stehen, wobei der Schnittpunkt der Drehachse des erzeugenden Schneckenprofils mit der besagten Ebene als Drehpunkt des erzeugenden Schneckenprofils und der Schnittpunkt der Drehachse des erzeugten Schneckenprofils mit der besagten Ebene als Drehpunkt des erzeugten Schneckenprofils bezeichnet wird,
- die Anzahl der Kreisbögen n des erzeugenden Schneckenprofils gewählt wird, wobei n eine ganze Zahl ist, die größer oder gleich 1 ist,
- ein Außenradius ra des erzeugenden Schneckenprofils gewählt wird, wobei ra einen Wert annehmen kann, der größer als 0 (ra>0) und kleiner oder gleich dem Achsabstand (ra≤a) ist,
- ein Kernradius ri des erzeugenden Schneckenprofils gewählt wird, wobei ri einen Wert annehmen kann, der größer oder gleich 0 (ri≥0) und kleiner oder gleich ra (ri≤ra) ist,
- die Kreisbögen des erzeugenden Schneckenprofils im oder gegen den Uhrzeigersinn um die Drehachse des erzeugenden Schneckenprofils entsprechend den nachfolgenden Anordnungsregeln derart angeordnet werden, dass:
   ∘ alle Kreisbögen des erzeugenden Schneckenprofils derart tangential ineinander übergehen, dass sich ein geschlossenes, konvexes Schneckenprofil ergibt, wobei ein Kreisbogen, dessen Radius gleich 0 ist, wie ein Kreisbogen behandelt wird, dessen Radius gleich eps ist, wobei eps eine sehr kleine positive reelle Zahl ist, die gegen 0 strebt (eps<<1, eps→0),
   ∘ jeder der Kreisbögen des erzeugenden Schneckenprofils innerhalb oder auf den Grenzen eines Kreisrings mit dem Außenradius ra und dem Kernradius ri liegt, dessen Mittelpunkt auf dem Drehpunkt des erzeugenden Schneckenprofils liegt,
   ∘ mindestens einer der Kreisbögen des erzeugenden Schneckenprofils den Außenradius ra des erzeugenden Schneckenprofils berührt,
   ∘ mindestens einer der Kreisbögen des erzeugenden Schneckenprofils den Kernradius ri des erzeugenden Schneckenprofils berührt,
- die Größe eines ersten Kreisbogens des erzeugenden Schneckenprofils, die durch einen Winkel α_1 und einen Radius r_1 festgelegt ist, derart gewählt wird, dass der Winkel α_1 im Bogenmaß größer oder gleich 0 und kleiner oder gleich 2π ist, wobei unter π die Kreiszahl zu verstehen ist (π≈3,14159), und der Radius r_1 größer oder gleich 0 und kleiner oder gleich dem Achsabstand a ist, und die Position dieses ersten Kreisbogens des erzeugenden Schneckenprofils, die sich durch das Positionieren von zwei verschiedenen Punkten dieses ersten Kreisbogens ergibt, entsprechend den besagten Anordnungsregeln festgelegt wird, wobei ein erster zu positionierender Punkt dieses ersten Kreisbogens bevorzugt ein zu diesem ersten Kreisbogen zugehörender Anfangspunkt ist und wobei ein zweiter zu positionierender Punkt dieses ersten Kreisbogens bevorzugt der zu diesem ersten Kreisbogen zugehörende Mittelpunkt ist,
- die Größen von weiteren n-2 Kreisbögen des erzeugenden Schneckenprofils, die durch die Winkel α_2, ..., α_(n-1) und die Radien r_2, ..., r_(n-1) festgelegt sind, derart gewählt werden, dass die Winkel α_2, ..., α_(n-1) im Bogenmaß größer oder gleich 0 und kleiner oder gleich 2π sind und die Radien r_2, ..., r_(n-1) größer oder gleich 0 und kleiner oder gleich dem Achsabstand a sind, und die Positionen dieser weiteren n-2 Kreisbögen des erzeugenden Schneckenprofils entsprechend den besagten Anordnungsregeln festgelegt sind,
- die Größe eines letzten Kreisbogens des erzeugenden Schneckenprofils, die durch einen Winkel α_n und einen Radius r_n festgelegt ist, dadurch gegeben ist, dass die Summe der n Winkel der n Kreisbögen des erzeugenden Schneckenprofils im Bogenmaß gleich 2π ist, wobei der Winkel α_n im Bogenmaß größer oder gleich 0 und kleiner oder gleich 2π ist, und der Radius r_n das erzeugende Schneckenprofil schließt, wobei der Radius r_n größer oder gleich 0 und kleiner oder gleich dem Achsabstand a ist, und die Position dieses letzten Kreisbogens des erzeugenden Schneckenprofils entsprechend den besagten Anordnungsregeln festgelegt ist,
- sich die n' Kreisbögen des erzeugten Schneckenprofils aus den n Kreisbögen des erzeugenden Schneckenprofils dadurch ergeben, dass
   ∘ die Anzahl der Kreisbögen n' des erzeugten Schneckenprofils gleich der Anzahl der Kreisbögen n des erzeugenden Schneckenprofils ist, wobei n' eine ganze Zahl ist,
   ∘ der Außenradius ra' des erzeugten Schneckenprofils gleich der Differenz des Achsabstandes minus des Kernradius ri des erzeugenden Schneckenprofils ist (ra'=a-ri),
   ∘ der Kernradius ri' des erzeugten Schneckenprofils gleich der Differenz des Achsabstandes minus des Außenradius ra des erzeugenden Schneckenprofils ist (ri'=a-ra),
   ∘ der Winkel a_i' des i'-ten Kreisbogens des erzeugten Schneckenprofils gleich dem Winkel a_i des i-ten Kreisbogens des erzeugenden Schneckenprofils ist, wobei i und i' ganze Zahlen sind, die gemeinsam alle Werte im Bereich von 1 bis zur Anzahl der Kreisbögen n beziehungsweise n' durchlaufen (α_1'=□α_1, □□□□ α_n'=□α_n),
   ∘ die Summe des Radius r_i' des i'-ten Kreisbogens des erzeugten Schneckenprofils und des Radius r_i des i-ten Kreisbogens des erzeugenden Schneckenprofils gleich dem Achsabstand a ist, wobei i und i' ganze Zahlen sind, die gemeinsam alle Werte im Bereich 1 bis zur Anzahl der Kreisbögen n beziehungsweise n' durchlaufen (r_1'+r_1=a, ..., r_n'+ r_n=a),
   ∘ der Mittelpunkt des i'-ten Kreisbogens des erzeugten Schneckenprofils einen Abstand von dem Mittelpunkt des i-ten Kreisbogens des erzeugenden Schneckenprofils besitzt, der gleich dem Achsabstand a ist, und der Mittelpunkt des i'-ten Kreisbogens des erzeugten Schneckenprofils einen Abstand von dem Drehpunkt des erzeugten Schneckenprofils besitzt, der gleich dem Abstand des Mittelpunkts des i-ten Kreisbogens des erzeugenden Schneckenprofils von dem Drehpunkt des erzeugenden Schneckenprofils ist, und die Verbindungslinie zwischen dem Mittelpunkt des i'-ten Kreisbogens des erzeugten Schneckenprofils und dem Mittelpunkt des i-ten Kreisbogens des erzeugenden Schneckenprofils eine Parallele zu einer Verbindungslinie zwischen dem Drehpunkt des erzeugten Schneckenprofils und dem Drehpunkt des erzeugenden Schneckenprofils ist, wobei i und i' ganze Zahlen sind, die gemeinsam alle Werte im Bereich 1 bis zur Anzahl der Kreisbögen n beziehungsweise n' durchlaufen (i'=i),
   o ein Anfangspunkt des i'-ten Kreisbogens des erzeugten Schneckenprofils in einer Richtung bezogen auf den Mittelpunkt des i'-ten Kreisbogens des erzeugten Schneckenprofils liegt, die entgegengesetzt derjenigen Richtung ist, die ein Anfangspunkt des i-ten Kreisbogens des erzeugenden Schneckenprofils bezogen auf den Mittelpunkt des i-ten Kreisbogens des erzeugenden Schneckenprofils besitzt, wobei i und i' ganze Zahlen sind, die gemeinsam alle Werte im Bereich 1 bis zur Anzahl der Kreisbögen n beziehungsweise n' durchlaufen (i'=i).

Aus dem allgemeinen Verfahren zur Erzeugung von ebenen, dicht kämmenden, selbstreinigenden, gleichsinnig drehenden Schneckenprofilen folgt für das erzeugte Schneckenprofil, dass
- das erzeugte Schneckenprofil geschlossen ist,
- das erzeugte Schneckenprofil konvex ist,
- jeder der Kreisbögen des erzeugten Schneckenprofils tangential in den nachfolgenden Kreisbogen des erzeugten Schneckenprofils übergeht, wobei ein Kreisbogen, dessen Radius gleich 0 ist, wie ein Kreisbogen behandelt wird, dessen Radius gleich eps ist, wobei eps eine sehr kleine positive reelle Zahl ist, die gegen 0 strebt (eps<<1, eps →0),
- jeder der Kreisbögen des erzeugten Schneckenprofils innerhalb oder auf den Grenzen eines Kreisrings mit dem Außenradius ra' und dem Kernradius ri' liegt, dessen Mittelpunkt auf dem Drehpunkt des erzeugten Schneckenprofils liegt,
- mindestens einer der Kreisbögen des erzeugten Schneckenprofils den Außenradius ra' des erzeugten Schneckenprofils berührt,
- mindestens einer der Kreisbögen des erzeugten Schneckenprofils den Kernradius ri' des erzeugten Schneckenprofils berührt.

Aus dem allgemeinen Verfahren zur Erzeugung von ebenen, dicht kämmenden, selbstreinigenden, gleichsinnig drehenden Schneckenprofilen folgt ferner, dass nur in dem Fall, in dem der Kernradius ri des erzeugenden Schneckenprofils gleich der Differenz des Achsabstandes a minus dem Außenradius ra des erzeugenden Schneckenprofils ist (ri=a-ra), der Außenradius ra' des erzeugten Schneckenprofils gleich dem Außenradius ra des erzeugenden Schneckenprofils und der Kernradius ri' des erzeugten Schneckenprofils gleich dem Kernradius ri des erzeugenden Schneckenprofils ist.

Besitzt das erzeugende Schneckenprofil einen Kreisbogen mit dem Radius r_i=0, so weist das Schneckenprofil an der Stelle des Kreisbogens einen Knick auf, dessen Größe durch den Winkel α_i gekennzeichnet ist. Besitzt das erzeugte Schneckenprofil einen Kreisbogen mit dem Radius r_i'=0, so weist das Schneckenprofil an der Stelle des Kreisbogens einen Knick auf, dessen Größe durch den Winkel α_i' gekennzeichnet ist.

Das allgemeine Verfahren zur Erzeugung von ebenen, dicht kämmenden, selbstreinigenden, gleichsinnig drehenden Schneckenprofilen ist ferner dadurch charakterisiert, dass es sich allein mit Winkellineal und Zirkel ausführen lässt. So wird der tangentiale Übergang zwischen dem i-ten und dem (i+1)-ten Kreisbogen des erzeugenden Schneckenprofils konstruiert, indem um den Endpunkt des i-ten Kreisbogens ein Kreis mit dem Radius r_(i+1) geschlagen wird und der näher zum Drehpunkt des erzeugenden Schneckenprofils gelegene Schnittpunkt dieses Kreises mit der Gerade, die durch den Mittelpunkt und den Endpunkt des i-ten Kreisbogens definiert ist, der Mittelpunkt des (i+1)-ten Kreisbogens ist. Praktischerweise wird man anstelle von Winkellineal und Zirkel ein Computerprogramm zur Konstruktion der Schneckenprofile verwenden.

Die nach dem allgemeinen Verfahren erzeugten Schneckenprofile sind unabhängig von einer Gangzahl z.

Das erzeugte Schneckenprofil kann ungleich dem erzeugenden Schneckenprofil sein. Wie der Fachmann anhand der Ausführungen leicht versteht, ist das allgemeine Verfahren insbesondere dazu geeignet, Übergangselemente zwischen Schneckenelementen unterschiedlicher Gangzahl zu erzeugen. Ausgehend von einem z-gängigen Schneckenprofil ist es möglich, das erzeugende und das erzeugte Schneckenprofil Schritt für Schritt so zu ändern, dass man schließlich ein Schneckenprofil mit einer Gangzahl z' ungleich z erhält. Es ist hierbei zulässig, die Anzahl der Kreisbögen während des Übergangs zu verringern oder zu vergrößern.

Typische, in der Praxis verwendete Schneckenprofile zeichnen sich dadurch aus, dass das erzeugende und das erzeugte Schneckenprofil für eine ungerade Gangzahl identisch sind und für eine gerade Gangzahl das erzeugte Schneckenprofil nach einer Rotation des erzeugenden oder des erzeugten Schneckenprofils um einen Winkel von π/z mit dem erzeugenden Schneckenprofil zur Deckung gebracht werden kann. Solche nach dem Stand der Technik bekannten Schneckenprofile mit der Gangzahl z sind dadurch gekennzeichnet, dass sie genau z Symmetrieebenen aufweisen, die senkrecht auf der Ebene des erzeugenden Schneckenprofils stehen und durch die Drehachse des erzeugenden Schneckenprofils führen. Analoges gilt für das erzeugte Schneckenprofil. Die Schneckenprofile bestehen jeweils aus 2*z Abschnitten mit einem Abschnittswinkel von π/z bezogen auf den jeweiligen Drehpunkt des dazugehörigen Schneckenprofils, die durch Rotation oder durch Spiegelung an den Symmetrieebenen untereinander zur Deckung gebracht werden können. Derartige Schneckenprofile werden als symmetrisch bezeichnet. In einem ersten speziellen Verfahren zur Erzeugung ebener, dicht kämmender, selbstreinigender, gleichsinnig drehender Schneckenprofile gibt es eine Gangzahl z, die Schneckenprofile in 2*z Abschnitte unterteilt. Mit diesem ersten speziellen Verfahren lassen sich jedoch nicht nur symmetrische Schneckenprofile erzeugen, bei denen sich die 2*z Abschnitte durch Rotation und / oder durch Spiegeln an den Symmetrieebenen untereinander zur Deckung bringen lassen, sondern auch asymmetrische.

Dieses erste spezielle Verfahren ist dadurch charakterisiert, dass
- eine Gangzahl z gewählt wird, wobei z eine ganze Zahl ist, die größer oder gleich 1 ist,
- die Anzahl der Kreisbögen n des erzeugenden Schneckenprofils so gewählt wird, dass sie ein ganzes Vielfaches p von 4*z ist,
- das erzeugende Schneckenprofil in 2*z Abschnitte eingeteilt wird, die dadurch gekennzeichnet sind, dass
   ∘ jeder Abschnitt durch zwei Geraden begrenzt ist, die zueinander einen Winkel im Bogenmaß von π/z bilden und die sich im Drehpunkt des erzeugenden Schneckenprofils schneiden, wobei diese beiden Geraden als Abschnittsgrenzen bezeichnet werden, wobei unter π die Kreiszahl zu verstehen ist (π≈3,14159),
   ∘ jeder dieser 2*z Abschnitte in einen ersten und einen zweiten Teil untergliedert wird,
   ∘ der erste Teil eines Abschnitts aus p Kreisbögen gebildet wird, die in aufsteigender oder absteigender Reihenfolge nummeriert sind,
   ∘ zu den p Kreisbögen zugehörige Winkel α_1, ..., α_p so gewählt werden, dass die Summe dieser Winkel gleich π/(2*z) ist, wobei die Winkel α_1, ..., α_p im Bogenmaß größer oder gleich 0 und kleiner oder gleich π/(2*z) sind,
   ∘ der zweite Teil eines Abschnitts aus p' Kreisbögen gebildet wird, die in umgekehrter Reihenfolge nummeriert sind, wie die Kreisbögen des ersten Teils eines Abschnitts, wobei p' eine ganze Zahl ist, die gleich p ist,
   ∘ zu den p' Kreisbögen zugehörige Winkel α_p', ..., α_1' dadurch bestimmt sind, dass der Winkel α_j' des j'-ten Kreisbogens des zweiten Teils eines Abschnitts gleich dem Winkel α_j des j-ten Kreisbogens des ersten Teils eines Abschnitts ist, wobei j und j' ganze Zahlen sind, die gemeinsam alle Werte im Bereich 1 bis zur Anzahl der Kreisbögen p beziehungsweise p' durchlaufen (α_1'=α_1, ..., α_p'=α_p),
   ∘ die Summe des Radius r_j' des j'-ten Kreisbogens des zweiten Teils eines Abschnitts und des Radius r_j des j-ten Kreisbogens des ersten Teils eines Abschnitts gleich dem Achsabstand a ist, wobei j und j' ganze Zahlen sind, die gemeinsam alle Werte im Bereich 1 bis zur Anzahl der Kreisbögen p beziehungsweise p' durchlaufen (r_1'+r_1=a, ..., r_p'+r_p=a),
   ∘ ein zu dem Kreisbogen, mit dem das Schneckenprofil im ersten Teil eines Abschnitts beginnt, zugehöriger Mittelpunkt und zugehöriger Anfangspunkt in Abhängigkeit von der Anordnung der Kreisbögen im oder gegen den Uhrzeigersinn auf eine der Abschnittsgrenzen dieses Abschnitts gelegt wird,
   ∘ ein zu dem Kreisbogen, mit dem das Schneckenprofil im ersten Teil eines Abschnitts endet, zugehöriger Endpunkt eine Gerade FP in einem Punkt tangiert, wobei die Gerade FP senkrecht auf der Winkelhalbierenden der beiden Abschnittgrenzen dieses Abschnitts steht und einen Abstand vom Drehpunkt des erzeugenden Schneckenprofils in Richtung dieses Abschnitts besitzt, der gleich dem halben Achsabstand ist, wobei die Winkelhalbierende wie die Abschnittsgrenzen durch den Drehpunkt des erzeugenden Schneckenprofils führt.

Aus diesem ersten speziellen Verfahren zur Erzeugung von ebenen, dicht kämmenden, selbstreinigenden, gleichsinnig drehenden Schneckenprofilen mit einer Gangzahl z folgt für das erzeugte Schneckenprofil, dass jeder der Abschnitte des erzeugten Schneckenprofils derart aufgebaut ist, dass die Radien der Kreisbögen des erzeugten Schneckenprofils in umgekehrter Reihenfolge gleich den Radien der Kreisbögen des erzeugenden Schneckenprofils sind.

Schneckenprofile, die gemäß dem ersten speziellen Verfahren erzeugt werden, bestehen aus 2*z Abschnitten, die voneinander verschieden sein können. Sind die Abschnitte voneinander verschieden, so liegen asymmetrische Schneckenprofile vor.

Bei symmetrischen Schneckenprofilen lassen sich alle 2*z Abschnitte durch Rotation und / oder durch Spiegelung an den Abschnittsgrenzen zur Deckung bringen. Die Abschnittsgrenzen liegen dann auf den Schnittgeraden der Symmetrieebenen des jeweiligen Profils mit der Ebene, in der das Profil liegt. Es ergibt sich dadurch ein zweites spezielles Verfahren zur Erzeugung ebener, symmetrischer, dicht kämmender, selbstreinigender, gleichsinnig drehender Schneckenprofile mit einer Gangzahl z. Dieses zweite spezielle Verfahren ist dadurch charakterisiert, dass
- nur ein erster Abschnitt des erzeugenden Schneckenprofils festgelegt wird, und
- die weiteren Abschnitte durch fortlaufende Spiegelung an den Abschnittsgrenzen erzeugt werden.
Auch die speziellen Verfahren sind dadurch charakterisiert, dass sie sich allein mit Winkellineal und Zirkel ausführen lassen. So wird der tangentiale Übergang zwischen dem j-ten und dem (j+1)-ten Kreisbogen des ersten Teils eines Abschnitts des erzeugenden Schneckenprofils konstruiert, indem um den Endpunkt des j-ten Kreisbogens ein Kreis mit dem Radius r_(j+1) geschlagen wird und der näher zum Drehpunkt des erzeugenden Schneckenprofils gelegene Schnittpunkt dieses Kreises mit der Gerade, die durch den Mittelpunkt und den Endpunkt des j-ten Kreisbogens definiert ist, der Mittelpunkt des (j+1)-ten Kreisbogens ist. Ferner wird bei aufsteigender Nummerierung der Kreisbögen der p-te Kreisbogen des ersten Teils eines Abschnitts des erzeugenden Schneckenprofils konstruiert, indem am Endpunkt des (p-1)-ten Kreisbogens eine Tangente an den (p-1)-ten Kreisbogen gelegt wird, der Schnittpunkt der Tangente mit der Gerade FP der Mittelpunkt eines Kreises ist, dessen Radius gleich der Länge der Strecke zwischen dem Endpunkt des (p-1)-ten Kreisbogens und dem Schnittpunkt der Tangente mit der Gerade FP ist, und indem der in Richtung des gewählten Uhrzeigersinns gelegene Schnittpunkt des Kreises mit der Gerade FP der gesuchte Berührpunkt des Endpunktes des p-ten Kreisbogens mit der Gerade FP ist. Praktischerweise wird man anstelle von Winkellineal und Zirkel ein Computerprogramm zur Konstruktion der Schneckenprofile verwenden.
Wie der Fachmann anhand der Ausführungen leicht versteht, sind auch die speziellen Verfahren dazu geeignet, Übergangselemente zwischen Schneckenelementen gleicher Gangzahl zu erzeugen. Ausgehend von einem z-gängigen Schneckenprofil ist es möglich, ein anderes z-gängiges Schneckenprofil zu erhalten, indem das Schneckenprofil im Übergang Schritt für Schritt geändert wird. Es ist hierbei zulässig, die Anzahl der Kreisbögen während des Übergangs zu verringern oder zu vergrößern.

Sowohl das allgemeine Verfahren als auch die speziellen Verfahren sind dazu geeignet, Profile von erfindungsgemäßen Schneckenelementen zu erzeugen. Hierzu sind die Kreisbögen zur Darstellung des erzeugenden und erzeugten Schneckenprofils so anzuordnen, dass die Schneckenprofile aus der Abfolge Abdichtungsbereich - Übergangsbereich - Kanalbereich - Übergangsbereich bestehen.

Hierbei gilt für den Abdichtungsbereich, der aus einer Abfolge von Kammbereich - Flankenbereich - Kammbereich besteht, bevorzugt, dass
∘ der Flankenbereich bezogen auf den Drehpunkt des Schneckenprofils einen Winkel δ_fb1 besitzt, der größer oder gleich dem halben Öffnungswinkel zwischen den beiden Gehäusezwickeln ist (δ_fb1≥arccos(0,5*a/ra)) und der bevorzugt größer oder gleich dem Öffnungswinkel zwischen den beiden Gehäusezwickeln ist (δ_fb1≥2*arccos(0,5*a/ra)),
∘ ein Kammbereich bezogen auf den Drehpunkt des Schneckenprofils einen Winkel δ_kb1 besitzt, der kleiner oder gleich der Differenz des Kammwinkels eines eingängigen Erdmenger-Schneckenprofils minus des Öffnungswinkels zwischen den beiden Gehäusezwickeln ist (δ_kb1≤π-4*arccos(0,5*a/ra)) und der bevorzugt kleiner oder gleich dem Kammwinkel eines zweigängigen Erdmenger-Schneckenprofils ist (δ_kb1≤π/2-2*arccos(0,5*a/ra)),
∘ der andere Kammbereich bezogen auf den Drehpunkt des Schneckenprofils einen Winkel δ_kb2 besitzt, der kleiner oder gleich der Differenz des Kammwinkels eines eingängigen Erdmenger-Schneckenprofils minus des Öffnungswinkels zwischen den beiden Gehäusezwickeln ist (δ_kb2≤π-4*arccos(0,5*a/ra)) und der bevorzugt kleiner oder gleich dem Kammwinkel eines zweigängigen Erdmenger-Schneckenprofils ist (δ_kb2≤π/2-2*arccos(0,5*a/ra)).

Die Summe der Winkel der Kamm- und Flankenbereiche δ_kb1, δ_kb2 und δ_fb1 des Abdichtungsbereichs liegt bevorzugt im Bereich von 0,75*δ_gz bis 2*δ_gb+δ_gz. In einer besonders bevorzugten Ausführungsform liegt die Summe der Winkel der Kamm- und Flankenbereiche δ_kb1, δ_kb2 und δ_fb1 des Abdichtungsbereichs im Bereich von δ_gz bis δ_gb+δ_gz.

Für den Kanalbereich, der aus einer Abfolge von Nutbereich - Flankenbereich - Nutbereich besteht, gilt bevorzugt, dass
∘ der Flankenbereich bezogen auf den Drehpunkt des Schneckenprofils einen Winkel δ_fb2 besitzt, der größer oder gleich dem halben Öffnungswinkel zwischen den beiden Gehäusezwickeln ist (δ_fb2≥arccos(0,5*a/ra)) und der bevorzugt größer oder gleich dem Öffnungswinkel zwischen den beiden Gehäusezwickeln ist (δ_fb2≥2*arccos(0,5*a/ra)), und der minimale Abstand des Flankenbereichs von dem Schneckenradius ra größer als die halbe Gangtiefe h ist,
∘ ein Nutbereich bezogen auf den Drehpunkt des Schneckenprofils einen Winkel δ_nb1 besitzt, der kleiner oder gleich der Differenz des Kammwinkels eines eingängigen Erdmenger-Schneckenprofils minus des Öffnungswinkels zwischen den beiden Gehäusezwickeln ist (δ_nb1≤π-4*arccos(0,5*a/ra)) und der bevorzugt kleiner oder gleich dem Kammwinkel eines zweigängigen Erdmenger-Schneckenprofils ist (δ_nb1≤π/2-2*arccos(0,5*a/ra)),
∘ der andere Nutbereich bezogen auf den Drehpunkt des Schneckenprofils einen Winkel δ_nb2 besitzt, der kleiner oder gleich der Differenz des Kammwinkels eines eingängigen Erdmenger-Schneckenprofils minus des Öffnungswinkels zwischen den beiden Gehäusezwickeln ist (δ_nb2≤π-4*arccos(0,5*a/ra)) und der bevorzugt kleiner oder gleich dem Kammwinkel eines zweigängigen Erdmenger-Schneckenprofils ist (δ_nb2≤π/2-2*arccos(0,5*a/ra)).

Die Summe der Winkel der Nut- und Flankenbereiche δ_nb1, δ_nb2 und δ_fb2 des Kanalbereichs liegt bevorzugt im Bereich von 0,75*δ_gz bis 2*δ_gb+δ_gz. In einer besonders bevorzugten Ausführungsform liegt die Summe der Winkel der Nut- und Flankenbereiche δ_nb1, δ_nb2 und δ_fb2 des Kanalbereichs im Bereich von δ_gz bis δ_gb+δ_gz.

Der Übergangsbereich ist dadurch charakterisiert, das er mit einem Flankenbereich anfängt und mit einem Flankenbereich endet. Bevorzugt besteht der Übergangsbereich aus einer Abfolge von Flankenbereich - Kammbereich - Flankenbereich oder aus einer Abfolge von Flankenbereich - Nutbereich - Flankenbereich oder aus einer Abfolge von Flankenbereich - Kammbereich - Flankenbereich - Nutbereich - Flankenbereich oder aus einer Abfolge von Flankenbereich - Nutbereich - Flankenbereich - Kammbereich - Flankenbereich. In einer besonders bevorzugten Ausführungsform besteht der Übergangsbereich aus einem Flankenbereich. In diesem Fall beginnt und endet der Übergangsbereich mit diesem einen besagten Flankenbereich.

Es empfiehlt sich, die genannten Verfahren zur Erzeugung von Schneckenprofilen auf einem Computer durchzuführen. Die Abmessungen der Schneckenelemente liegen dann in einer Form vor, in der sie einer CAD-Fräsmaschine zur Erzeugung der Schneckenelemente zugeführt werden können. Nachdem das Profil auf die beschriebene Weise erzeugt worden ist, können die erfindungsgemäßen Schneckenelemente z.B. mit einer Fräsmaschine erzeugt werden. Bevorzugte Materialien zur Erzeugung der Schneckenelemente sind Stähle, insbesondere Nitrierstähle und Edelstähle.

Gegenstand der vorliegenden Erfindung ist weiterhin die Verwendung der erfindungsgemäßen Schneckenelemente in mehrwelligen Schneckenmaschinen. Bevorzugt werden die erfindungsgemäßen Schneckenelemente in zweiwelligen Schneckenmaschinen eingesetzt. Die Schneckenelemente können in den mehrwelligen Schneckenmaschinen in Form von Knet- oder Förderelementen vorliegen. Es ist ebenso möglich, Knet- und Förderelemente in einer Scheckenmaschine miteinander zu kombinieren. Die erfindungsgemäßen Schneckenelemente können auch mit anderen Schneckenelementen, die nach dem Stand der Technik bekannt sind, kombiniert werden.

Die neuartigen erfindungsgemäßen Schneckenelemente zeichnen sich dadurch aus, dass sie die oben genannten Nachteile von nach dem Stand der Technik bekannten Schneckenelementen nicht aufweisen. Insbesondere ermöglichen die erfindungsgemäßen Schneckenelemente eine Abdichtung des Zwickelbereichs dadurch, dass sich jeweils ein Kammbereich in jeweils einem Gehäusezwickelbereich befindet, wodurch das Druckaufbauvermögen von auf derartigen Schneckenprofilen beruhenden Förderelementen groß ist.

Eine bevorzugte Ausführungsform erfindungsgemäßer Schneckenelemente verfügt über möglichst kleine Kammbereiche, wodurch die thermische und mechanische Produktbelastung minimiert wird.

In einer bevorzugten Ausführungsform erfindungsgemäßer Schneckenelemente weist der zwischen zwei Nutbereichen liegende Flankenbereich einen Abstand vom Gehäuse auf, der größer als die halbe Gangtiefe ist, wodurch der Strömungswiderstand klein gehalten wird.

In einer bevorzugten Ausführungsform weisen die Schneckenelemente Gegenstand der für alle Wellen eines Mehrwellenextruders bzw. die beiden Wellen eines Zweiwellenextruders ein identisches Schneckenprofil auf.

Die Erfindung wird nachstehend anhand der Figuren beispielhaft näher erläutert ohne sie jedoch auf diese zu beschränken. Alle Figuren wurden mit Hilfe eines Computerprogramms erzeugt.

Sinnvollerweise verwendet man zur Erzeugung und / oder Beschreibung von Schneckenprofilen und - elementen dimensionslose Kennzahlen, um die Übertragbarkeit auf unterschiedliche Extruderbaugrößen zu vereinfachen. Als Bezugsgröße für geometrische Größen wie zum Beispiel Längen oder Radien bietet sich der Achsabstand a an, da diese Größe an einem Extruder nicht verändert werden kann. Für den dimensionslosen Achsabstand folgt A=a/a=1. Für den dimensionslosen Schneckenaußenradius eines Schneckenprofils folgt RA=ra/a. Der dimensionslose Kernradius eines Schneckenprofils berechnet sich zu RI=ri/a. Die dimensionslose Gangtiefe eines Schneckenprofils berechnet sich zu H=h/a=RA-RI.

In den Figuren werden alle geometrischen Größen in ihrer dimensionslosen Form verwendet. Alle Winkelangaben erfolgen im Bogenmaß.

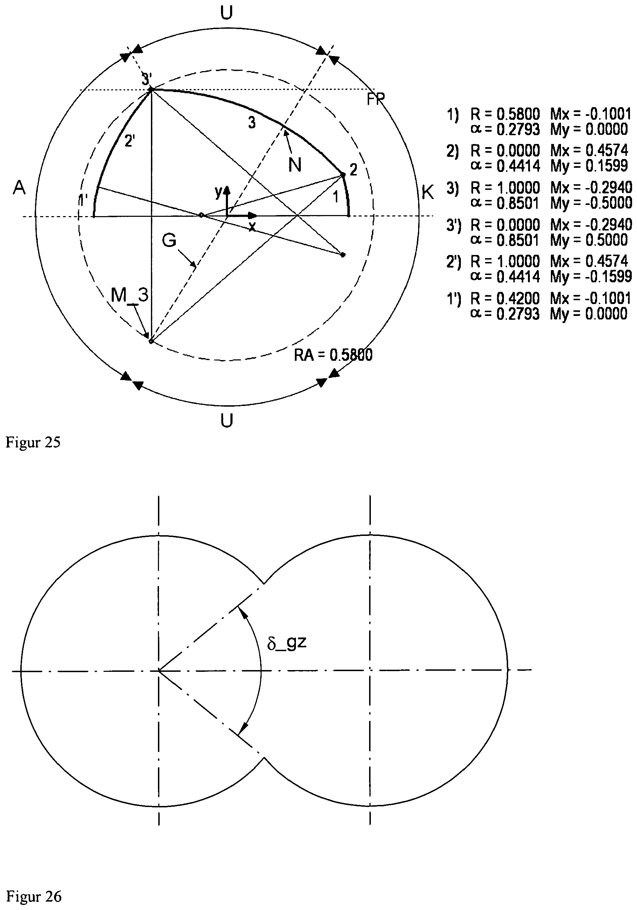

**Figur 25** zeigt im Querschnitt die Hälfte eines Schneckenprofils eines erfindungsgemäßen Schneckenelements. In der Mitte der Figur liegt das xy-Koordinatensystem, in dessen Ursprung sich der Drehpunkt des Schneckenprofils befindet. Die Kreisbögen des Schneckenprofils sind durch dicke, durchgezogene Linien gekennzeichnet, die mit den jeweiligen Nummern der Kreisbögen versehen sind. Die Mittelpunkte der Kreisbögen werden durch kleine Kreise dargestellt. Die Mittelpunkte der Kreisbögen sind mit dünnen, durchgezogenen Linien sowohl mit dem Anfangspunkt als auch mit dem Endpunkt des dazugehörigen Kreisbogens verbunden. Die Gerade FP wird durch eine dünne, gepunktete Linie dargestellt. Der Schneckenaußenradius RA wird durch eine dünne, gestrichelte Linie charakterisiert, dessen Zahlenwert rechts unten in der Figur auf vier signifikante Stellen angegeben wird. Rechts neben den Figuren werden zu jedem Kreisbogen der Radius R, der Winkel α und die x- und y-Koordinate des Kreisbogenmittelpunkts Mx und My jeweils auf vier signifikante Stellen angegeben. Durch diese Angaben ist das Schneckenprofil eindeutig definiert. Das Schneckenprofil ist spiegelsymmetrisch zur x-Achse, sodass sich das gesamte Schneckenprofil durch Spiegelung der gezeigten Hälfte an der x-Achse ergeben würde.

Die Bereiche eines Schneckenprofils, die gleich dem Schneckenaußenradius sind, werden als Kammbereiche bezeichnet. Im Beispiel der Figur 25 ist dies nur der Kreisbogen 3', der den Schneckenaußenradius berührt. Er besitzt einen Radius von R_3'=0, d.h. an dieser Stelle weist das Profil einen Knick auf. Der Mittelpunkt des Kreisbogens 3' fällt mit dem Knick zusammen. Die "Größe des Knicks" ist durch den Winkel α_3' gegeben (α_3'=0,8501), d.h. der Übergang vom Kreisbogen 3 auf den Kreisbogen 2' erfolgt durch Drehung um den Winkel α_3'. Oder anders ausgedrückt: eine Tangente an den Kreisbogen 3 im Mittelpunkt des Kreisbogen 3' schneidet eine Tangente an den Kreisbogen 2' ebenfalls im Mittelpunkt des Kreisbogens 3' in einem Winkel von α_3'. Unter Berücksichtigung des Kreisbogens 3' gehen jedoch alle benachbarten Kreisbögen 3→3', 3'→2' tangential ineinander über.

Die Bereiche eines Schneckenprofils, die gleich dem Kernradius sind, werden als Nutbereiche bezeichnet. Im Beispiel der Figur 25 ist dies nur ein Punkt N auf dem Kreisbogen 3. Der Punkt N wird erhalten, indem man eine Gerade G durch den Mittelpunkt M_3 des Kreisbogens 3 und den Drehpunkt des Profils legt. Diese Gerade G schneidet den Kreisbogen 3 im Punkt N.

Die Bereiche eines Schneckenprofils, die kleiner als der Schneckenaußenradius und größer als der Kernradius sind, werden als Flankenbereiche bezeichnet. Dies sind im Beispiel der Figur 25 der Kreisbogen 1, der Kreisbogen 2, der Kreisbogen 2', der Kreisbogen 1' und der Kreisbogen 3 mit Ausnahme des Punkts N. Insofern lässt sich für den gezeigten Profilabschnitt beginnend mit dem Kreisbogen 1' und endend mit dem Kreisbogen 1 die folgende Abfolge von Bereichen ablesen: Flanke - Flanke - Kamm - Flanke - Nut - Flanke - Flanke - Flanke.
Die Bereiche werden aufgrund der Achsensymmetrie des Profils durch Spiegelung an der x-Achse kopiert. Dadurch ergibt sich das Gesamtprofil mit der Abfolge: A - U - K - U, wobei A für einen Abdichtungsbereich, U für einen Übergangsbereich und K für einen Kanalbereich steht. Der Abdichtungsbereich weist eine Abfolge von Kammbereich - Flankenbereich - Kammbereich auf. Der Kanalbereich weist eine Abfolge von Nutbereich - Flankenbereich - Nutbereich auf. Der Übergangsbereich weist einen Flankenbereich auf.

Der Abdichtungsbereich ist dadurch charakterisiert, dass das Schneckenprofil beim Übergang vom Flankenbereich auf den Kammbereich einen Knick aufweist. Ferner ist das Schneckenprofil dieser Figur dadurch charakterisiert, dass der Übergang vom Abdichtungsbereich zum Übergangsbereich einen Knick aufweist. Der kleinste dimensionslose Abstand des Flankenbereichs des Kanalbereichs zum dimensionslosen Schneckenaußenradius RA beträgt 0,1001 und ist damit größer als die halbe dimensionslose Gangtiefe H/2=0,08.

Im Folgenden sind weitere erfindungsgemäße Schneckenelemente dargestellt. Dabei wird aus Übersichtsgründen auf die Angabe der Bereiche (Flankenbereich, Kammbereich, Nutbereich, Abdichtungsbereich, Kanalbereich, Übergangsbereich) in den Figuren verzichtet. Die Figuren enthalten jedoch alle Angaben, aus denen die Bestimmung der Bereiche vorgenommen werden kann. Ferner können Größen wie Öffnungswinkel zwischen den beiden Gehäusezwickeln und Kammwinkel anhand der Angaben in den Figuren leicht berechnet werden.

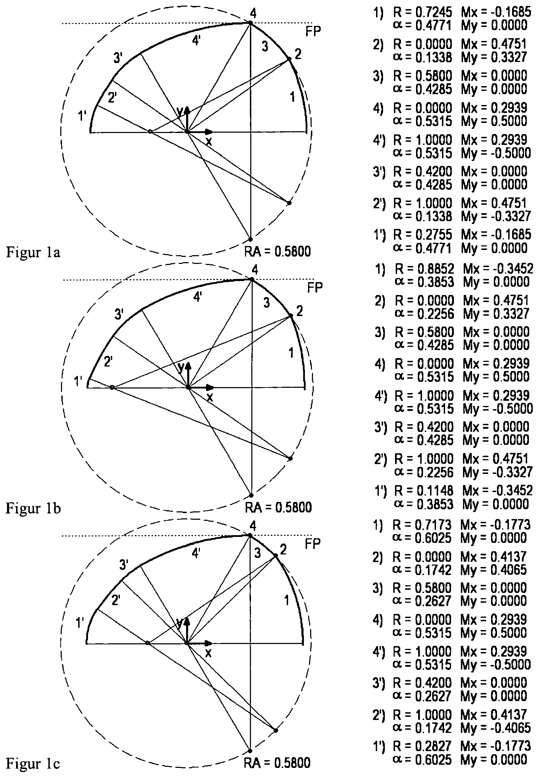

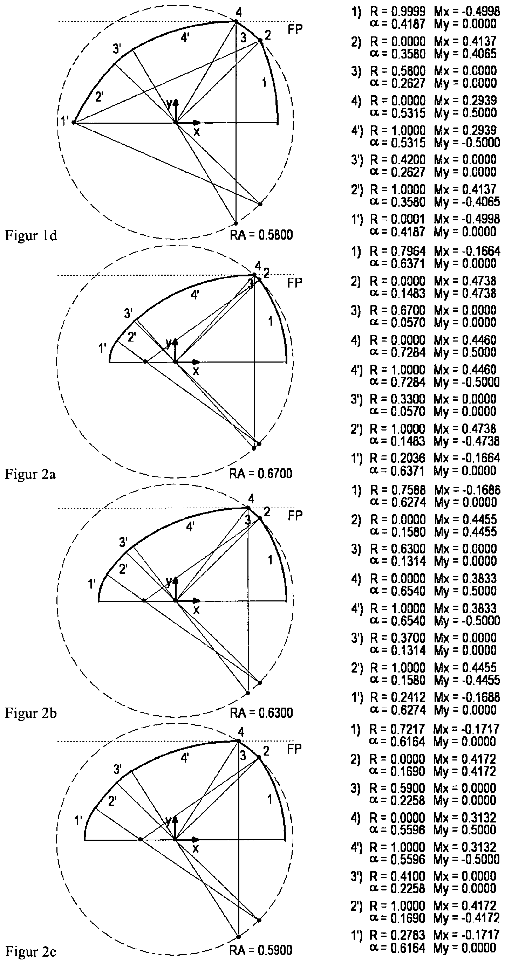

Die Figuren 1 bis 13 zeigen jeweils im Querschnitt die Hälfte eines Schneckenprofils eines erfindungsgemäßen Schneckenelements. Alle diese Figuren weisen den gleichen Aufbau auf, der nachfolgend im Detail beschrieben wird. In der Mitte der Figuren liegt das xy-Koordinatensystem, in dessen Ursprung sich der Drehpunkt des Schneckenprofils befindet. Die Kreisbögen des Schneckenprofils sind durch dicke, durchgezogene Linien gekennzeichnet, die mit den jeweiligen Nummern der Kreisbögen versehen sind. Die Mittelpunkte der Kreisbögen werden durch kleine Kreise dargestellt. Die Mittelpunkte der Kreisbögen sind mit dünnen, durchgezogenen Linien sowohl mit dem Anfangspunkt als auch mit dem Endpunkt des dazugehörigen Kreisbogens verbunden. Die Gerade FP wird durch eine dünne, gepunktete Linie dargestellt. Der Schneckenaußenradius RA wird durch eine dünne, gestrichelte Linie charakterisiert, dessen Zahlenwert rechts unten in der Figur auf vier signifikante Stellen angegeben wird. Rechts neben den Figuren werden zu jedem Kreisbogen der Radius R, der Winkel α und die x- und y-Koordinate des Kreisbogenmittelpunkts Mx und My jeweils auf vier signifikante Stellen angegeben. Durch diese Angaben ist das Schneckenprofil eindeutig definiert. Die Schneckenprofile sind jeweils spiegelsymmetrisch zur x-Achse, sodass sich die gesamten Schneckenprofile durch Spiegelung der gezeigten Hälfte an der x-Achse ergeben würden.

Schneckenprofile, bei denen die Hälfte des Schneckenprofils aus insgesamt 2 Kreisbögen bestehen, werden nachfolgend als 2-Kreis-Schneckenprofile bezeichnet. Schneckenprofile, bei denen die Hälfte des Schneckenprofils aus insgesamt 4 Kreisbögen bestehen, werden nachfolgend als 4-Kreis-Schneckenprofile bezeichnet. Schneckenprofile, bei denen die Hälfte des Schneckenprofils aus insgesamt 6 Kreisbögen bestehen, werden nachfolgend als 6-Kreis-Schneckenprofile bezeichnet. Schneckenprofile, bei denen die Hälfte des Schneckenprofils aus insgesamt 8 Kreisbögen bestehen, werden nachfolgend als 8-Kreis-Schneckenprofile bezeichnet.

**Figur 1****:** Die Figuren 1a bis 1d zeigen jeweils die Hälfte eines bevorzugten Schneckenprofils eines erfindungsgemäßen Schneckenelements, welches aus jeweils 8 Kreisbögen aufgebaut ist. In den Figuren 1a bis 1d beträgt der dimensionslose Schneckenaußenradius jeweils RA=0,58. In den Figuren 1a bis 1d beträgt die dimensionslose Gangtiefe jeweils H=0,16. Die weiteren geometrischen Größen, die die Schneckenprofile exakt beschreiben, können aus den Figuren entnommen werden. Charakteristisch für die Schneckenprofile in den Figuren 1a bis 1d ist, dass der Abdichtungsbereich die Kreisbögen 1 bis 4 umfasst, wobei der Flankenbereich den Kreisbogen 1 und der Kammbereich die Kreisbögen 2 bis 4 umfasst, wobei der dimensionslose Radius der Kreisbögen 2 und 4 jeweils gleich 0 und der dimensionslose Radius des Kreisbogens 3 gleich dem dimensionslosen Schneckenaußenradius RA ist und wobei die Kreisbögen des Kammbereichs vollständig auf dem dimensionslosen Schneckenaußenradius RA liegen und damit eine linienförmige Abdichtung des Zwickelbereichs vorliegt. Ferner ist für diese Schneckenprofile charakteristisch, dass der Übergangsbereich den Kreisbogen 4' umfasst, dessen dimensionsloser Radius gleich dem dimensionslosen Achsabstand A ist. Ferner sind diese Schneckenprofile dadurch gekennzeichnet, dass der Kanalbereich die Kreisbögen 1' bis 3' umfasst, wobei der Flankenbereich die Kreisbögen 1' und 2' und der Nutbereich den Kreisbogen 3' umfasst, wobei der dimensionslose Radius des Kreisbogens 2' gleich dem dimensionslosen Achsabstand A und der dimensionslose Radius des Kreisbogens 3' gleich dem dimensionslosen Kernradius RI ist und wobei der Kreisbogen des Nutbereichs vollständig auf dem dimensionslosen Kernradius RI liegt. In den Figuren 1a bis 1d sind die Abdichtungsbereiche dadurch gekennzeichnet, dass die Schneckenprofile jeweils beim Übergang vom Flankenbereich auf den Kammbereich einen Knick aufweisen. Ferner sind die Schneckenprofile dieser Figuren dadurch charakterisiert, dass der Übergang vom Abdichtungsbereich zum Übergangsbereich jeweils einen Knick aufweist. Den kleinsten dimensionslosen Abstand des Flankenbereichs des Kanalbereichs zum dimensionslosen Schneckenaußenradius RA weist Figur 1d auf. In der Figur 1d beträgt der besagte Abstand 0,0801 und ist damit größer als die halbe dimensionslose Gangtiefe H/2=0,08.

Aus den Figuren 1a bis 1d wird deutlich, dass die Größe des Kammbereichs des Abdichtungsbereichs eingestellt werden kann. Aus diesen Figuren wird ferner deutlich, dass der maximale Abstand des Flankenbereichs des Abdichtungsbereichs zum Schneckenaußenradius eingestellt werden kann.

Die Figuren 1b und 1c sind ferner dadurch gekennzeichnet, dass die Position des Anfangspunktes des Kreisbogens 1 und die Position des Endpunktes des Kreisbogens 1' jeweils identisch sind. Durch Spiegeln der Figur 1b oder der Figur 1c an der x-Achse und durch Zusammensetzen des Schneckenprofils aus dem Schneckenprofil der Figur 1b und dem gespiegelten Schneckenprofil der Figur 1c oder aus dem Schneckenprofil der Figur 1c und dem gespiegelten Schneckenprofil der Figur 1b ergeben sich Schneckenprofile eines erfindungsgemäßen Schneckenelements, bei dem die Kammbereiche des Abdichtungsbereichs unterschiedlich groß sind.

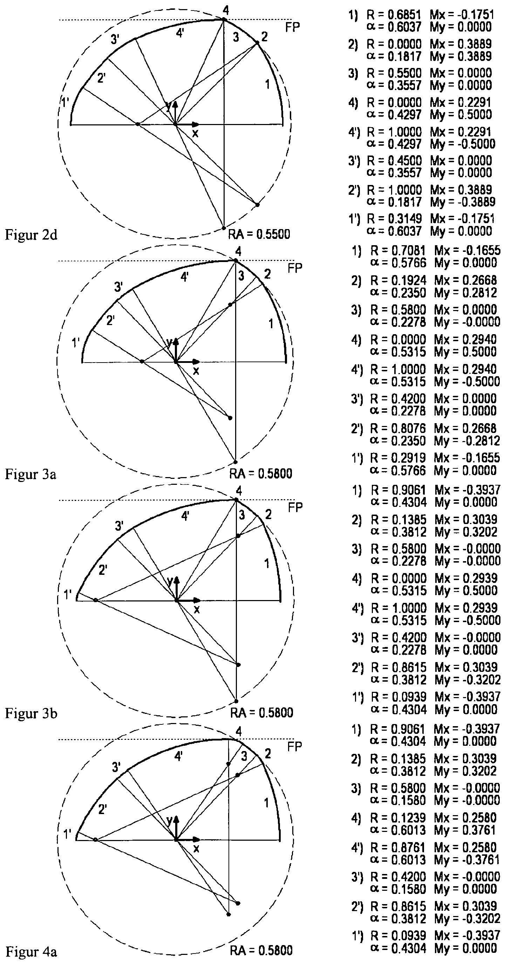

**Figur 2****:** Die Figuren 2a bis 2d zeigen jeweils die Hälfte eines bevorzugten Schneckenprofils eines erfindungsgemäßen Schneckenelements, welches aus jeweils 8 Kreisbögen aufgebaut ist. In den Figuren 2a bis 2d variiert der dimensionslose Schneckenaußenradius im Bereich von RA=0,55 bis RA=0,67. In den Figuren 2a bis 2d variiert die dimensionslose Gangtiefe im Bereich von H=0,10 bis H=0,34. Die weiteren geometrischen Größen, die die Schneckenprofile exakt beschreiben, können aus den Figuren entnommen werden. Charakteristisch für die Schneckenprofile in den Figuren 2a bis 2d ist, dass der Abdichtungsbereich die Kreisbögen 1 bis 4 umfasst, wobei der Flankenbereich den Kreisbogen 1 und der Kammbereich die Kreisbögen 2 bis 4 umfasst, wobei der dimensionslose Radius der Kreisbögen 2 und 4 jeweils gleich 0 und der dimensionslose Radius des Kreisbogens 3 gleich dem dimensionslosen Schneckenaußenradius RA ist und wobei die Kreisbögen des Kammbereichs vollständig auf dem dimensionslosen Schneckenaußenradius RA liegen und damit eine linienförmige Abdichtung des Zwickelbereichs vorliegt. Ferner ist für diese Schneckenprofile charakteristisch, dass der Übergangsbereich den Kreisbogen 4' umfasst, dessen dimensionsloser Radius gleich dem dimensionslosen Achsabstand A ist. Ferner sind diese Schneckenprofile dadurch charakterisiert, dass der Kanalbereich die Kreisbögen 1' bis 3' umfasst, wobei der Flankenbereich die Kreisbögen 1' und 2' und der Nutbereich den Kreisbogen 3' umfasst, wobei der dimensionslose Radius des Kreisbogens 2' gleich dem dimensionslosen Achsabstand A und der dimensionslose Radius des Kreisbogens 3' gleich dem dimensionslosen Kernradius RI ist und wobei der Kreisbogen des Nutbereichs vollständig auf dem dimensionslosen Kernradius RI liegt. In den Figuren 2a bis 2d sind die Abdichtungsbereiche dadurch gekennzeichnet, dass die Schneckenprofile jeweils beim Übergang vom Flankenbereich auf den Kammbereich einen Knick aufweisen. Ferner sind die Schneckenprofile dieser Figuren dadurch charakterisiert, dass der Übergang vom Abdichtungsbereich zum Übergangsbereich jeweils einen Knick aufweist. Den kleinsten dimensionslosen Abstand des Flankenbereichs des Kanalbereichs zum dimensionslosen Schneckenaußenradius RA weist Figur 2d auf. In der Figur 2d beträgt der besagte Abstand 0,06 und ist damit größer als die halbe dimensionslose Gangtiefe H/2=0,05.
**Figur 3****:** Die Figuren 3a und 3b zeigen jeweils die Hälfte eines bevorzugten Schneckenprofils eines erfindungsgemäßen Schneckenelements, welches aus jeweils 8 Kreisbögen aufgebaut ist. In den Figuren 3a und 3b beträgt der dimensionslose Schneckenaußenradius jeweils RA=0,58. In den Figuren 3a bis 3d beträgt die dimensionslose Gangtiefe jeweils H=0,16. Die weiteren geometrischen Größen, die die Schneckenprofile exakt beschreiben, können aus den Figuren entnommen werden. Charakteristisch für die Schneckenprofile in den Figuren 3a und 3b ist, dass der Abdichtungsbereich die Kreisbögen 1 bis 4 umfasst, wobei der Flankenbereich die Kreisbögen 1 und 2 und der Kammbereich die Kreisbögen 3 und 4 umfasst, wobei der dimensionslose Radius des Kreisbogens 3 gleich dem dimensionslosen Schneckenaußenradius RA und der dimensionslose Radius des Kreisbogens 4 gleich 0 ist und wobei die Kreisbögen des Kammbereichs vollständig auf dem dimensionslosen Schneckenaußenradius RA liegen und damit eine linienförmige Abdichtung des Zwickelbereichs vorliegt. Ferner ist für diese Schneckenprofile charakteristisch, dass der Übergangsbereich den Kreisbogen 4' umfasst, dessen dimensionsloser Radius gleich dem dimensionslosen Achsabstand A ist. Ferner sind diese Schneckenprofile dadurch gekennzeichnet, dass der Kanalbereich die Kreisbögen 1' bis 3' umfasst, wobei der Flankenbereich die Kreisbögen 1' und 2' und der Nutbereich den Kreisbogen 3' umfasst, wobei der dimensionslose Radius des Kreisbogens 3' gleich dem dimensionslosen Kernradius RI ist und wobei der Kreisbogen des Nutbereichs vollständig auf dem dimensionslosen Kernradius RI liegt. In den Figuren 3a und 3b sind die Abdichtungsbereiche dadurch charakterisiert, dass die Schneckenprofile jeweils beim Übergang vom Flankenbereich auf den Kammbereich keinen Knick aufweisen. Ferner sind die Schneckenprofile dieser Figuren dadurch charakterisiert, dass der Übergang vom Abdichtungsbereich zum Übergangsbereich jeweils einen Knick aufweist. Den kleinsten dimensionslosen Abstand des Flankenbereichs des Kanalbereichs zum dimensionslosen Schneckenaußenradius RA weist Figur 3b auf. In der Figur 3b beträgt der besagte Abstand 0,0924 und ist damit größer als die halbe dimensionslose Gangtiefe H/2=0,08.

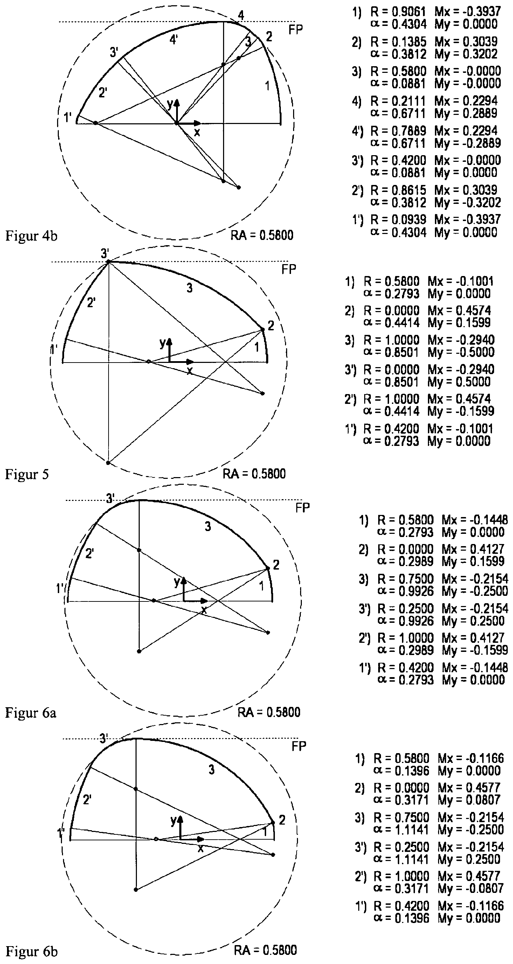

**Figur 4****:** Die Figuren 4a und 4b zeigen jeweils die Hälfte eines bevorzugten Schneckenprofils eines erfindungsgemäßen Schneckenelements, welches aus jeweils 8 Kreisbögen aufgebaut ist. In den Figuren 4a und 4b beträgt der dimensionslose Schneckenaußenradius jeweils RA=0,58. In den Figuren 4a bis 4b beträgt die dimensionslose Gangtiefe jeweils H=0,16. Die weiteren geometrischen Größen, die die Schneckenprofile exakt beschreiben, können aus den Figuren entnommen werden. Charakteristisch für die Schneckenprofile in den Figuren 4a und 4b ist, dass der Abdichtungsbereich die Kreisbögen 1 bis 3 umfasst, wobei der Flankenbereich die Kreisbögen 1 und 2 und der Kammbereich den Kreisbogen 3 umfasst, wobei der dimensionslose Radius des Kreisbogens 3 gleich dem dimensionslosen Schneckenaußenradius RA ist und wobei der Kreisbogen des Kammbereichs vollständig auf dem dimensionslosen Schneckenaußenradius RA liegt und damit eine linienförmige Abdichtung des Zwickelbereichs vorliegt. Ferner ist für diese Schneckenprofile charakteristisch, dass der Übergangsbereich die Kreisbögen 4 und 4' umfasst. Ferner sind diese Schneckenprofile dadurch charakterisiert, dass der Kanalbereich die Kreisbögen 1' bis 3' umfasst, wobei der Flankenbereich die Kreisbögen 1' und 2' und der Nutbereich den Kreisbogen 3' umfasst, wobei der dimensionslose Radius des Kreisbogens 3' gleich dem dimensionslosen Kernradius RI ist und wobei der Kreisbogen des Nutbereichs vollständig auf dem dimensionslosen Kernradius RI liegt. In den Figuren 4a und 4b sind die Abdichtungsbereiche dadurch charakterisiert, dass die Schneckenprofile jeweils beim Übergang vom Flankenbereich auf den Kammbereich keinen Knick aufweisen. Ferner sind die Schneckenprofile dieser Figuren dadurch charakterisiert, dass der Übergang vom Abdichtungsbereich zum Übergangsbereich jeweils keinen Knick aufweist. Der kleinste dimensionslose Abstand des Flankenbereichs des Kanalbereichs zum dimensionslosen Schneckenaußenradius RA ist in den Figuren 4a und 4b gleich groß. Der besagte Abstand beträgt 0,0924 und ist damit größer als die halbe dimensionslose Gangtiefe H/2=0,08.
Neben den in den Figuren 3a, 3b, 4a und 4b gezeigten Schneckenprofilen, können, wie dem Fachmann bewusst ist, Schneckenprofile gebildet werden, bei denen der Radius des Kreisbogens 2 gleich 0 und der Radius des Kreisbogens 4 größer 0 ist. Dadurch werden Schneckenprofile erhalten, die dadurch charakterisiert sind, dass der Abdichtungsbereich eines Schneckenprofils beim Übergang von Flankenbereich auf den Kammbereich einen Knick aufweist und der Übergang vom Abdichtungsbereich zum Übergangsbereich eines Schneckenprofils keinen Knick aufweist.

Das erfindungsgemäße Verfahren zur Erzeugung ebener, dicht kämmender, selbstreinigender und gleichsinnig drehender Schneckenprofile der Gangzahl z soll beispielhaft an dem Abschnitt eines Schneckenprofils in Figur 4a erläutert werden.

Das Schneckenprofil und damit der Abschnitt des Schneckenprofils liegen in einer Ebene. Der Einfachheit halber wird diese Ebene in die xy-Ebene eines kartesischen Koordinatensystems gelegt. Ebenfalls der Einfachheit halber wird der Drehpunkt des Schneckenprofils in den Ursprung des kartesischen Koordinatensystems gelegt (x=0, y=0).

Die Gangzahl z wird so gewählt, dass z größer oder gleich 1 ist. In dem vorliegenden Beispiel wird die Gangzahl zu z=1 gewählt. Die Anzahl der Kreisbögen n des Schneckenprofils wird so gewählt, dass n ein ganzes Vielfaches p von 4*z ist. In dem vorliegendem Beispiel wird die Anzahl der Kreisbögen zu n=16 gewählt, woraus p=4 resultiert. Der dimensionslose Schneckenaußenradius RA des Schneckenprofils wird so gewählt, dass er größer 0 und kleiner oder gleich dem dimensionslosen Achsabstand A ist. In dem vorliegenden Beispiel wird der dimensionslose Schneckenaußenradius des Schneckenprofils zu RA=0,58 gewählt. Der dimensionslose Kernradius RI des Schneckenprofils wird so gewählt, dass er größer oder gleich 0 und kleiner oder gleich dem dimensionslosen Schneckenaußenradius RA ist. In dem vorliegenden Beispiel wird der dimensionslose Kernradius des Schneckenprofils zu RI=A-RA=0,42 gewählt.
Die Kreisbögen des Schneckenprofils können im oder gegen den Uhrzeigersinn um die Drehachse des Schneckenprofils angeordnet werden. In dem vorliegenden Beispiel werden die Kreisbögen gegen den Uhrzeigersinn um die Drehachse des Schneckenprofils angeordnet.
Das Schneckenprofil wird in 2*z Abschnitte eingeteilt, die dadurch gekennzeichnet sind, dass jeder Abschnitt durch zwei Geraden begrenzt ist, die zueinander einen Winkel im Bogenmaß von π/z bilden und die sich im Drehpunkt des Schneckenprofils schneiden, wobei diese beiden Geraden als Abschnittsgrenzen bezeichnet werden. In dem vorliegenden Beispiel ergibt sich, dass das Schneckenprofil in zwei Abschnitte unterteilt wird. Der Einfachheit halber werden beide Abschnittsgrenzen auf die x-Achse des Koordinatensystems gelegt. In dem vorliegenden Beispiel wird im Folgenden nur der Abschnitt des Schneckenprofils betrachtet, der in positiver y-Richtung liegt.

Der Abschnitt des Schneckenprofils wird in einen ersten und einen zweiten Teil untergliedert, wobei der erste Teil aus p Kreisbögen und der zweite Teil aus p' Kreisbögen besteht, wobei p'=p ist. In dem vorliegenden Beispiel ergibt sich, dass p'=4 ist. Die Kreisbögen des ersten Teils des Abschnitts des Schneckenprofils können in aufsteigender oder absteigender Reihenfolge nummeriert sein. Die Kreisbögen des zweiten Teils des Abschnitts des Schneckenprofils sind in umgekehrter Reihenfolge wie die Kreisbögen des ersten Teils des Abschnittes des Schneckenprofils nummeriert. In dem vorliegenden Beispiel werden die Kreisbögen des ersten Teils des Abschnitts des Schneckenprofils in aufsteigender Reihenfolge, die Kreisbögen des zweiten Teils des Abschnitts des Schneckenprofils dementsprechend in absteigender Reihenfolge nummeriert.

Der Winkel α_1 des 1. Kreisbogens des ersten Teils des Abschnitts des Schneckenprofils wird so gewählt, dass er im Bogenmaß größer oder gleich 0 und kleiner oder gleich π/(2*z) ist. In dem vorliegenden Beispiel wird der Winkel des 1. Kreisbogens zu α_1=0,4304 gewählt. Der dimensionslose Radius R_1 des 1. Kreisbogens des ersten Teils des Abschnitts des Schneckenprofils wird erfindungsgemäß so gewählt, dass er größer oder gleich 0 und kleiner oder gleich dem Achsabstand A ist. In dem vorliegenden Beispiel wird der dimensionslose Radius des 1. Kreisbogens zu R_1=0,9061 gewählt. Die Position des 1. Kreisbogens des ersten Teils des Abschnitts des Schneckenprofils wird so gewählt, dass der 1. Kreisbogen innerhalb oder auf den Grenzen eines Kreisrings mit dem dimensionslosen Schneckenaußenradius RA und dem dimensionslosen Kernradius RI liegt, dessen Mittelpunkt auf dem Drehpunkt des Schneckenprofils liegt. Die Position wird bevorzugt durch die Positionierung des Anfangspunkts und des Mittelpunkts des 1. Kreisbogens festgelegt. In dem Verfahren liegen der Anfangs- und der Mittelpunkt des 1. Kreisbogens auf einer der Abschnittsgrenzen, wodurch sich der Anfangspunkt aus der Position des Mittelpunkts und des dimensionslosen Radius R _1 ergibt. In dem vorliegenden Beispiel wird der Mittelpunkt des 1. Kreisbogens auf die Koordinate Mx_1=-0,3937, My_1=0,0000 gelegt und der Anfangspunkt liegt damit auf der Koordinate x=0,5124, y=0,0000.
Die Winkel α_2, ..., α_(p-1) von p-2 weiteren Kreisbögen, also von 2 weiteren Kreisbögen des ersten Teils des Abschnitts des Schneckenprofils werden so gewählt, dass sie im Bogenmaß größer oder gleich 0 und kleiner oder gleich π/(2*z) sind. In dem vorliegenden Beispiel werden die Winkel der 2 weiteren Kreisbögen zu α_2=0,3812 und α_3=0,1580 gewählt. Die dimensionslosen Radien R_2, ..., R_(p-1) der 2 weiteren Kreisbögen des ersten Teils des Abschnitts des Schneckenprofils werden so gewählt, dass sie größer oder gleich 0 und kleiner oder gleich dem dimensionslosen Achsabstand A sind. In dem vorliegenden Beispiel werden die dimensionslosen Radien der 2 weiteren Kreisbögen zu R_2=0,1385 und R_3=0,5800 gewählt.

Gemäß den Anordnungsregeln werden die Kreisbögen so angeordnet, dass die Kreisbögen derart tangential ineinander übergehen, dass sich ein geschlossenes, konvexes Schneckenprofil ergibt, wobei ein Kreisbogen, dessen dimensionsloser Radius gleich 0 ist, wie ein Kreisbogen behandelt wird, dessen dimensionsloser Radius gleich eps ist, wobei eps eine sehr kleine positive reelle Zahl ist, die gegen 0 strebt (eps<<1, eps→0). Aus dieser Anordnungsregel folgt, dass der Endpunkt eines Kreisbogens gleich dem Anfangspunkt seines nachfolgenden Kreisbogens ist. Der geforderte tangentiale Übergang zwischen einem ersten Kreisbogen und einem zweiten, nachfolgenden Kreisbogen wird dadurch erfüllt, dass der Mittelpunkt dieses zweiten, nachfolgenden Kreisbogens so auf die Gerade, die durch den Endpunkt und den Mittelpunkt dieses ersten Kreisbogens gegeben ist, gelegt wird, dass der Abstand des Mittelpunkts dieses zweiten, nachfolgenden Kreisbogens von dem Endpunkt dieses ersten Kreisbogens gleich dem Radius dieses zweiten, nachfolgenden Kreisbogens ist und das Schneckenprofil konvex ist. Ein Kreisbogen, dessen Radius gleich 0 ist, wird wie ein Kreisbogen mit einem sehr kleinen Radius eps behandelt, wobei eps gegen 0 strebt, so dass sich der tangentiale Übergang weiterhin konstruieren lässt. Alternativ kann ein Kreisbogen, dessen Radius gleich 0 ist, so behandelt werden, dass das Schneckenprofil an der Position dieses Kreisbogens einen Knick aufweist, wobei die Größe des Knicks durch den Winkel dieses Kreisbogens gegeben ist. In dem vorliegenden Beispiel resultieren aus der beschriebenen Anordnungsregel die folgenden Positionen der Mittelpunkte der 2 weiteren Kreisbögen: Mx_2=0,3039, My_2=0,3202 und Mx_3=0,0000, My_3=0,0000. Der 3. Kreisbogen liegt auf dem dimensionslosen Schneckenaußenradius RA und die Anordnungsregel, dass mindestens ein Kreisbogen den dimensionslosen Schneckenaußenradius RA berührt, ist erfüllt.
Der Winkel α_4 des letzten Kreisbogens des ersten Teils des Abschnitts des Schneckenprofils ergibt sich daraus, dass die Summe der Winkel der 4 Kreisbögen des ersten Teils des Abschnitts des Schneckenprofils im Bogenmaß gleich π/(2*z) ist, wobei der Winkel α_4 im Bogenmaß größer oder gleich 0 und kleiner oder gleich π/(2*z) ist. In dem vorliegenden Beispiel ergibt sich der Winkel dieses letzten Kreisbogens zu α_4=0,6013. Der dimensionslose Radius R_4 des letzten Kreisbogens des ersten Teils des Abschnitts des Schneckenprofils ergibt sich erfindungsgemäß daraus, dass der Endpunkt dieses letzten Kreisbogens eine Gerade FP in einem Punkt tangiert, wobei die Gerade FP senkrecht auf der Winkelhalbierenden der beiden Abschnittgrenzen dieses Abschnitts steht und einen Abstand vom Drehpunkt des Schneckenprofils in Richtung dieses Abschnitts besitzt, der gleich dem halben Achsabstand ist, wobei die Winkelhalbierende wie die Abschnittsgrenzen durch den Drehpunkt des Schneckenprofils führt. Die Gerade FP ist in der Figur 4a als gepunktete Linie eingezeichnet. Der 4. Kreisbogen des ersten Teils des Abschnitts des Schneckenprofils wird konstruiert, indem am Endpunkt des 3. Kreisbogens eine Tangente an den 3. Kreisbogen gelegt wird, der Schnittpunkt der Tangente mit der Gerade FP der Mittelpunkt eines Kreises ist, dessen Radius gleich der Länge der Strecke zwischen dem Endpunkt des 3. Kreisbogens und dem Schnittpunkt der Tangente mit der Gerade FP ist, und indem der in Richtung des gewählten Uhrzeigersinns gelegene Schnittpunkt des Kreises mit der Gerade FP der gesuchte Berührpunkt des Endpunktes des 4. Kreisbogens mit der Gerade FP ist. Am Endpunkt des 4. Kreisbogens wird ein Lot auf die Gerade FP gefällt. Der Schnittpunkt dieses Lots mit der Geraden, die durch den Endpunkt und den Mittelpunkt des 3. Kreisbogens gegeben ist, ist der Mittelpunkt des 4. Kreisbogens. In dem vorliegenden Beispiel berechnet sich die Position des Mittelpunkts des 4. Kreisbogens zu Mx_4=0,2580, My_4=0,3761 und der dimensionslose Radius des 4. Kreisbogens ergibt sich zu R_4=0,1239.
Die Winkel α_p', ..., α_1' des zweiten Teils des Abschnitts des Schneckenprofils sind dadurch bestimmt, dass der Winkel α_j' des j'-ten Kreisbogens des zweiten Teils des Abschnitts gleich dem Winkel α_j des j-ten Kreisbogens des ersten Teils des Abschnitts ist, wobei j und j' ganze Zahlen sind, die gemeinsam alle Werte im Bereich 1 bis zur Anzahl der Kreisbögen p beziehungsweise p' durchlaufen (α_1'=α_1, ..., α_p'=α_p). In dem vorliegenden Beispiel berechnen sich die Winkel des zweiten Teils des Abschnitts zu α_1'=α_1=0,4304, α_2'=α_2=0,3812, α_3'=α_3=0,1580 und α_4'=α_4=0,6013.
Die dimensionslosen Radien R_p', ..., R_1' des zweiten Teils des Abschnitts des Schneckenprofils sind dadurch bestimmt, dass die Summe des dimensionslosen Radius R_j' des j'-ten Kreisbogens des zweiten Teils eines Abschnitts und des dimensionslosen Radius R_j des j-ten Kreisbogens des ersten Teils eines Abschnitts gleich dem dimensionslosen Achsabstand A ist, wobei j und j' ganze Zahlen sind, die gemeinsam alle Werte im Bereich 1 bis zur Anzahl der Kreisbögen p beziehungsweise p' durchlaufen (R_1'+R_1=A=1, ..., R_p'+R_p=A=1). In dem vorliegenden Beispiel berechnen sich die dimensionslosen Radien des zweiten Teils des Abschnitts zu R_1'=A-R_1=0,0939, R_2'=AR_2=0,8615, R_3'=A-R 3=0,4200 und R_4'=A-R_4=0,8761.
Die Position der Kreisbögen des zweiten Teils des Abschnitts des Schneckenprofils ergibt sich daraus, das die Kreisbögen tangential ineinander übergehen und das Schneckenprofil konvex ist. In dem vorliegenden Beispiel ergeben sich die nachfolgenden Koordinaten für die Mittelpunkte der 4 Kreisbögen des zweiten Teil des Abschnitts des Schneckenprofils: Mx_1'=-0,3937, My_1'=0,0000, Mx_2'=0,3039, My_2'=-0,3202, Mx_3'=0,0000, My_3'=0,0000 und Mx_4'=0,2580, My_4'=-0,3761. Der 3. Kreisbogen des zweiten Teils des Abschnitts des Schneckenprofils liegt auf dem dimensionslosen Kernradius RI und die Anordnungsregel, dass mindestens ein Kreisbogen den dimensionslosen Kernradius RI berührt, ist erfüllt.
Die Figuren 1 bis 4 zeigen Schneckenprofile von Schneckenelementen mit einer linienförmigen Abdichtung des Zwickelbereichs. Wie aus den Figuren ersichtlich ist, kann die Länge der linienförmigen Abdichtung durch Wahl der Parameter der Kreisbögen eingestellt werden. Ferner ist es möglich, den Übergang zwischen Kamm- und Flankenbereich beziehungsweise zwischen dem Abdichtungs- und dem Übergangsbereich mit oder ohne Knick im Schneckenprofil zu gestalten.
In den nachfolgenden Figuren werden Schneckenprofile von Schneckenelementen mit einer punktförmigen Abdichtung des Zwickelbereichs beschrieben. Es ist auch hier möglich, den Übergang zwischen Kamm- und Flankenbereich beziehungsweise zwischen dem Abdichtungs- und dem Übergangsbereich mit oder ohne Knick im Schneckenprofil zu gestalten.
**Figur 5****:** Die Figur 5 zeigt die Hälfte eines bevorzugten Schneckenprofils eines erfindungsgemäßen Schneckenelements, welches aus 6 Kreisbögen aufgebaut ist. In der Figur 5 beträgt der dimensionslose Schneckenaußenradius RA=0,58. In der Figur 5 beträgt die dimensionslose Gangtiefe H=0,16. Die weiteren geometrischen Größen, die das Schneckenprofil exakt beschreiben, können aus der Figur entnommen werden. Das Schneckenprofil ist identisch mit dem in Figur 25 gezeigten. Der Radius des Kreisbogens 3' ist gleich 0. Der Kreisbogen 3' liegt auf dem Schneckenaußenradius RA und bildet den Kammbereich des Abdichtungsbereichs. Es liegt eine punktförmige Abdichtung des Zwickelbereichs vor, wobei das Schneckenprofil am Punkt der Abdichtung einen Knick aufweist. Der Kanalbereich ist dadurch charakterisiert, dass der Radius des Kreisbogens 2 gleich 0 ist. Das Schneckenprofil weist daher an dieser Stelle einen Knick auf. In Figur 5 ist der minimale dimensionslose Abstand des Flankenbereichs des Kanalbereichs zum Schneckenaußenradius RA mit 0,1001 größer als die halbe dimensionslose Gangtiefe H/2=0,08.
**Figur 6****:** Die Figuren 6a bis 6b zeigen jeweils die Hälfte eines bevorzugten Schneckenprofils eines erfindungsgemäßen Schneckenelements, welches aus jeweils 6 Kreisbögen aufgebaut ist. Der dimensionslose Schneckenaußenradius beträgt RA=0,58. In den Figuren 6a und 6b beträgt die dimensionslose Gangtiefe jeweils H=0,16. Die weiteren geometrischen Größen, die die Schneckenprofile exakt beschreiben, können aus den Figuren entnommen werden. Der Radius des Kreisbogens 3' ist in beiden Figuren gleich 0,25. Charakteristisch für die Schneckenprofile in den Figuren 6a und 6b ist, dass der Kreisbogen 3' den Schneckenradius RA in einem Punkt tangiert. Der Tangierpunkt bildet den Kammbereich des Abdichtungsbereichs. Es liegt eine punktförmige Abdichtung des Zwickelbereichs vor, wobei das Schneckenprofil am Punkt der Abdichtung keinen Knick aufweist. Der Tangierpunkt teilt den Kreisbogen 3' in zwei Teile. Ein Teil gehört mit den Kreisbögen 1' und 2' zum Abdichtungsbereich. Der andere Teil gehört mit einem Teil des Kreisbogens 3 zum Übergangsbereich. Der Kanalbereich ist dadurch charakterisiert, dass der Radius des Kreisbogens 2 gleich 0 ist. Das Schneckenprofil weist daher an dieser Stelle einen Knick auf. In den Figuren 6a und 6b ist der minimale dimensionslose Abstand des Flankenbereichs des Kanalbereichs zum Schneckenaußenradius RA mit 0,1448 beziehungsweise 0,1166 größer als die halbe dimensionslose Gangtiefe H/2=0,08.

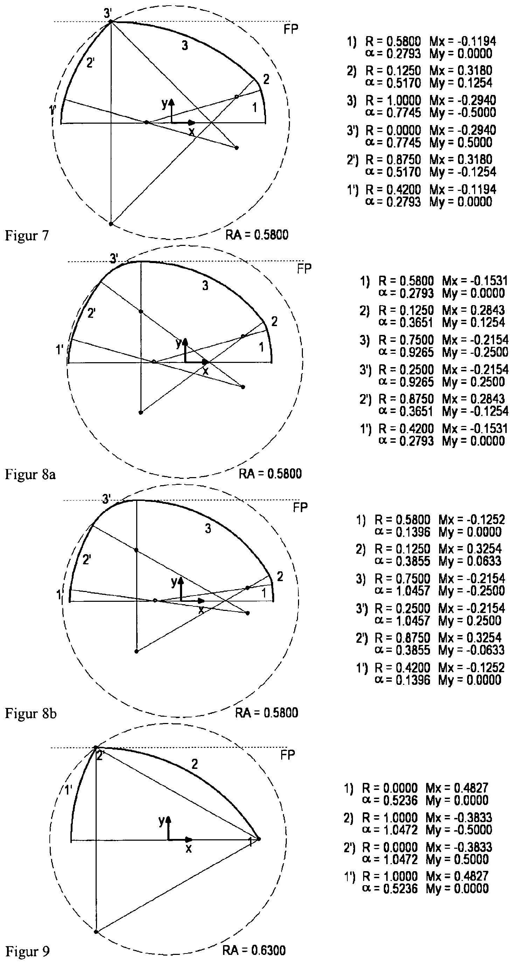

**Figur 7****:** Die Figur 7 zeigt die Hälfte eines bevorzugten Schneckenprofils eines erfindungsgemäßen Schneckenelements, welches aus 6 Kreisbögen aufgebaut ist. Der dimensionslose Schneckenaußenradius beträgt RA=0,58. In der Figur 7 beträgt die dimensionslose Gangtiefe H=0,16. Die weiteren geometrischen Größen, die das Schneckenprofil exakt beschreiben, können aus der Figur entnommen werden. Die Abdichtung des Zwickelbereichs erfolgt wie in Figur 5 über den Kreisbogen 3'. Im Vergleich zur Figur 5 ist der Kanalbereich in Figur 7 dadurch charakterisiert, dass der Radius des Kreisbogens 2 größer als 0 ist. Das Schneckenprofil weist daher an dieser Stelle keinen Knick auf. In Figur 7 ist der minimale dimensionslose Abstand des Flankenbereichs des Kanalbereichs zum Schneckenaußenradius RA mit 0,1194 größer als die halbe dimensionslose Gangtiefe H/2=0,08.

**Figur 8****:** Die Figuren 8a bis 8b zeigen jeweils die Hälfte eines bevorzugten Schneckenprofils eines erfindungsgemäßen Schneckenelements, welches aus jeweils 6 Kreisbögen aufgebaut ist. Der dimensionslose Schneckenaußenradius beträgt RA=0,58. In den Figuren 8a und 8b beträgt die dimensionslose Gangtiefe jeweils H=0,16. Die weiteren geometrischen Größen, die die Schneckenprofile exakt beschreiben, können aus den Figuren entnommen werden. Die Abdichtung des Zwickelbereichs erfolgt wie in Figur 6 über den Kreisbogen 3', welcher den Schneckenaußenradius RA an einem Punkt tangiert. Im Vergleich zur Figur 6 ist der Kanalbereich in Figur 8 dadurch charakterisiert, dass der Radius des Kreisbogens 2 größer als 0 ist. Das Schneckenprofil weist daher an dieser Stelle keinen Knick auf. In den Figuren 8a und 8b ist der minimale dimensionslose Abstand des Flankenbereichs des Kanalbereichs zum Schneckenaußenradius RA mit 0,1531 beziehungsweise 0,1252 größer als die halbe dimensionslose Gangtiefe H/2=0,08.
**Figur 9****:** Die Figur 9 zeigt die Hälfte eines bevorzugten Schneckenprofils eines erfindungsgemäßen Schneckenelements, welches aus 4 Kreisbögen aufgebaut ist. Der dimensionslose Schneckenaußenradius beträgt RA=0,63. In der Figur 9 beträgt die dimensionslose Gangtiefe H=0,26. Die weiteren geometrischen Größen, die das Schneckenprofil exakt beschreiben, können aus der Figur entnommen werden. Der Radius des Kreisbogens 2' ist gleich 0. Der Kreisbogen 2' liegt auf dem Schneckenaußenradius RA und bildet den Kammbereich des Abdichtungsbereichs. Es liegt eine punktförmige Abdichtung des Zwickelbereichs vor, wobei das Schneckenprofil am Punkt der Abdichtung einen Knick aufweist. Der Kanalbereich ist dadurch charakterisiert, dass der Radius des Kreisbogens 1 gleich 0 ist. Das Schneckenprofil weist daher an dieser Stelle einen Knick auf. In Figur 9 ist der minimale dimensionslose Abstand des Flankenbereichs des Kanalbereichs zum Schneckenaußenradius RA mit 0,1473 größer als die halbe dimensionslose Gangtiefe H/2=0,13.

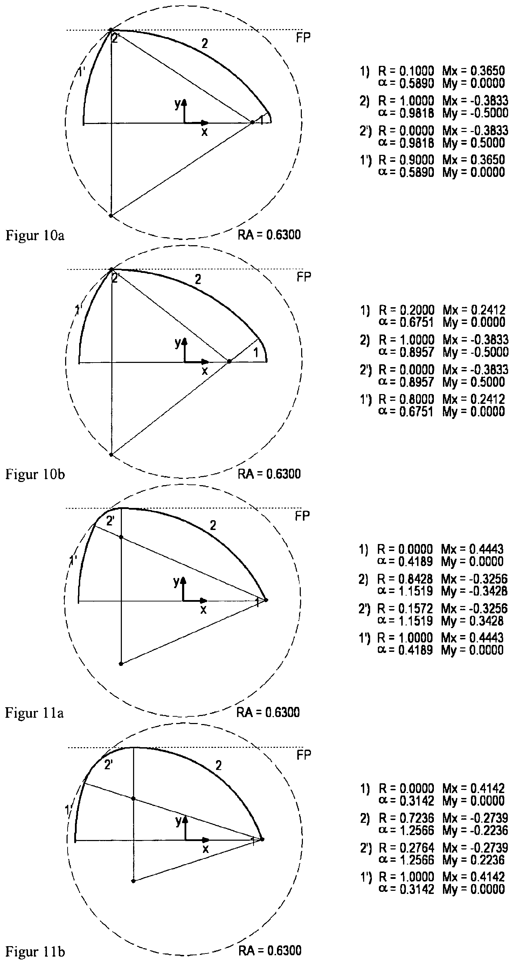

**Figur 10****:** Die Figuren 10a bis 10b zeigen jeweils die Hälfte eines bevorzugten Schneckenprofils eines erfindungsgemäßen Schneckenelements, welches aus jeweils 4 Kreisbögen aufgebaut ist. Der dimensionslose Schneckenaußenradius beträgt RA=0,63. In den Figuren 10a und 10b beträgt die dimensionslose Gangtiefe jeweils H=0,26. Die weiteren geometrischen Größen, die die Schneckenprofile exakt beschreiben, können aus den Figuren entnommen werden. Die Abdichtung des Zwickelbereichs erfolgt wie in Figur 9 über den Kreisbogen 2'. Im Vergleich zur Figur 9 ist der Kanalbereich in Figur 10, wobei der Radius des Kreisbogens 1 größer als 0 ist. Das Schneckenprofil weist daher an dieser Stelle keinen Knick auf. In den Figuren 10a und 10b ist der minimale dimensionslose Abstand des Flankenbereichs des Kanalbereichs zum Schneckenaußenradius RA mit 0,1650 beziehungsweise 0,1888 größer als die halbe dimensionslose Gangtiefe H/2=0,13.
**Figur 11****:** Die Figuren 11a bis 11b zeigen jeweils die Hälfte eines bevorzugten Schneckenprofils eines erfindungsgemäßen Schneckenelements, welches aus jeweils 4 Kreisbögen aufgebaut ist. Der dimensionslose Schneckenaußenradius beträgt RA=0,63. In den Figuren 11a und 11b beträgt die dimensionslose Gangtiefe jeweils H=0,26. Die weiteren geometrischen Größen, die die Schneckenprofile exakt beschreiben, können aus den Figuren entnommen werden. Der Radius des Kreisbogens 2' ist in den Figuren 11a und 11b gleich 0,1572 bzw. 0,2764. Charakteristisch für die Schneckenprofile in den Figuren 11a und 11b ist, dass der Kreisbogen 2' den Schneckenradius RA in einem Punkt tangiert. Der Tangierpunkt bildet den Kammbereich des Abdichtungsbereichs. Es liegt eine punktförmige Abdichtung des Zwickelbereichs vor, wobei das Schneckenprofil am Punkt der Abdichtung keinen Knick aufweist. Der Tangierpunkt teilt den Kreisbogen 2' in zwei Teile. Ein Teil gehört mit dem Kreisbögen 1' zum Abdichtungsbereich. Der andere Teil gehört mit einem Teil des Kreisbogens 2 zum Übergangsbereich. Der Kanalbereich ist dadurch charakterisiert, dass der Radius des Kreisbogens 1 gleich 0 ist. Das Schneckenprofil weist daher an dieser Stelle einen Knick auf. In den Figuren 11a und 11b ist der minimale dimensionslose Abstand des Flankenbereichs des Kanalbereichs zum Schneckenaußenradius RA mit 0,1857 beziehungsweise 0,2158 größer als die halbe dimensionslose Gangtiefe H/2=0,13.

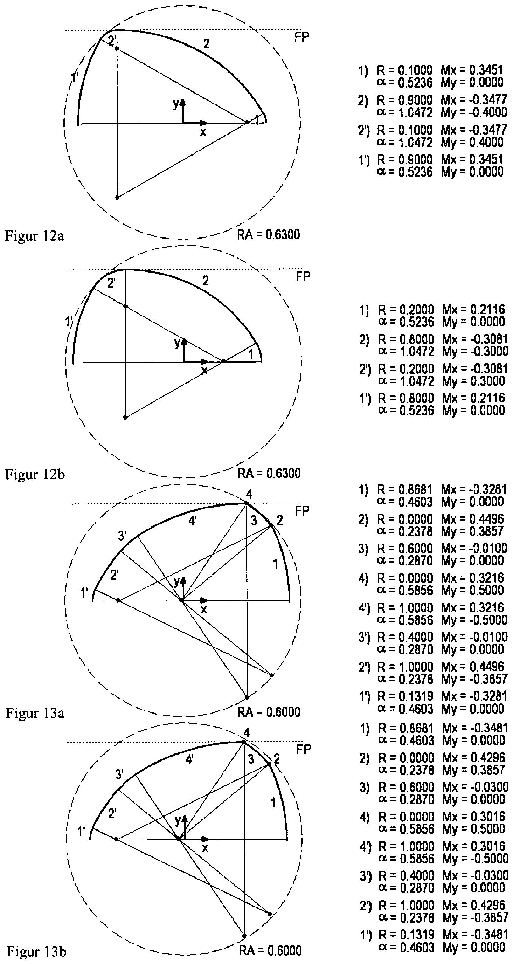

**Figur 12****:** Die Figuren 12a bis 12b zeigen jeweils die Hälfte eines bevorzugten Schneckenprofils eines erfindungsgemäßen Schneckenelements, welches aus jeweils 4 Kreisbögen aufgebaut ist. Der dimensionslose Schneckenaußenradius beträgt RA=0,63. In den Figuren 12a und 12b beträgt die dimensionslose Gangtiefe jeweils H=0,26. Die weiteren geometrischen Größen, die die Schneckenprofile exakt beschreiben, können aus den Figuren entnommen werden. Die Abdichtung des Zwickelbereichs erfolgt wie in Figur 11 über den Kreisbogen 2', welcher den Schneckenaußenradius RA an einem Punkt tangiert. Im Vergleich zur Figur 11 ist der Kanalbereich in Figur 12 dadurch charakterisiert, dass der Radius des Kreisbogens 1 größer als 0 ist. Das Schneckenprofil weist daher an dieser Stelle keinen Knick auf. In den Figuren 12a und 12b ist der minimale dimensionslose Abstand des Flankenbereichs des Kanalbereichs zum Schneckenaußenradius RA mit 0,1849 beziehungsweise 0,2184 größer als die halbe dimensionslose Gangtiefe H/2=0,13. Den Tangierpunkt des Kreisbogens 2' mit dem Schneckenaußenradius RA erhält man, in dem man den Schnittpunkt einer Gerade, die durch den Koordinatenursprung und den Mittelpunkt des Kreisbogens 2' führt, mit dem besagten Kreisbogen 2' berechnet. Den Tangierpunkt des Kreisbogens 2 mit dem Schneckenkemradius RI erhält man, in dem man den Schnittpunkt einer Gerade, die durch den Koordinatenursprung und den Mittelpunkt des Kreisbogens 2 führt, mit dem besagten Kreisbogen 2 berechnet.
In den Figuren 1 bis 4 liegt eine linienförmige Abdichtung des Zwickelbereichs vor. In den Figuren 5 bis 12 liegt eine punktförmige Abdichtung des Zwickelbereichs vor, wobei das Schneckenprofil in den Figuren 5, 7, 9 und 10 einen Knick besitzt und in den Figuren 6, 8, 11 und 12 keinen Knick besitzt. Wie der Fachmann erkennt, ist es mit den erfindungsgemäßen Schneckenprofilen somit möglich, die thermische und mechanische Beanspruchung der zu bearbeitenden viskosen Fluide gezielt an Be- und Verarbeitungserfordernisse anzupassen.
In den Figuren 1 bis 12 werden Hälften von Schneckenprofilen eines erfindungsgemäßen Schneckenelements bestehend aus maximal 8 Kreisbögen gezeigt. Die Offenbarung ist jedoch keinesfalls auf 8 Kreisbögen beschränkt. Vielmehr können beliebig viele Kreisbögen zur Erzeugung von erfindungsgemäßen Schneckenprofilen herangezogen werden.

**Figur 13****:** Alle eingängigen Schneckenprofile können längs der x-Achse in einem gewissen Umfang in positiver oder negativer x-Richtung verschoben werden, ohne ihre Selbstreinigung zu verlieren, da durch die Verschiebung längs der x-Achse weiterhin die Bedingung erfüllt bleibt, die Gerade FP in einem Punkt zu berühren. Die Figur 13 zeigt derartige Verschiebungen. Die Figuren 13a bis 13b zeigen jeweils die Hälfte eines bevorzugten Schneckenprofils eines erfindungsgemäßen Schneckenelements, welches aus jeweils 8 Kreisbögen aufgebaut ist. Der dimensionslose Schneckenaußenradius des unverschobenen Schneckenprofils beträgt RA=0,6. In den Figuren 13a und 13b beträgt die dimensionslose Gangtiefe des unverschobenen Schneckenprofils jeweils H=0,2. Die weiteren geometrischen Größen, die die Schneckenprofile exakt beschreiben, können aus den Figuren entnommen werden. In den Figuren 13a und 13b ist das gesamte Schneckenprofil um eine Strecke des 0,01- beziehungsweise 0,03-fachen Achsabstands nach links verschoben. Man erkennt, dass die Radien und Winkel der einzelnen Kreisbögen durch das Verschieben nicht verändert werden. Der Grad der linienförmigen Abdichtung des Zwickelbereichs durch den Kreisbogen 3 wird dadurch einstellbar. Allgemein ist durch das Verschieben des Schneckenprofils eines erfindungsgemäßen Schneckenelements der Grad einer linien- oder punktförmigen Abdichtung des Zwickelbereichs einstellbar. Insbesondere kann dadurch die mechanische und thermische Beanspruchung des viskosen Fluids im Bereich der Abdichtung gezielt eingestellt werden. Ein Schneckenprofil eines erfindungsgemäßen Schneckenelements wird bevorzugt um eine Strecke des 0- bis 0,05-fachen Achsabstandes, besonders bevorzugt um eine Strecke des 0- bis 0,025-fachen Achsabstandes verschoben.

Ein in x-Richtung verschobenes Schneckenprofil kann in einem zweiten Schritt in positiver oder negativer y-Richtung verschoben werden, ohne das dadurch die Selbstreinigung der Schneckenprofile verloren geht. Dadurch kommt es zu einer asymmetrischen Abdichtung des Zwickelbereichs. Beispielsweise kann der Grad der Abdichtung des Zwickelbereichs in den Kammbereichen abhängig von der Drehrichtung der Schneckenelemente erfolgen. Der maximale Abstand der Kammbereiche des Abdichtungsbereichs der Schneckenprofile vom Gehäuse liegt bevorzugt im Bereich des 0- bis 0,05-fachen Achsabstandes, besonders bevorzugt im Bereich des 0- bis 0,025-fachen Achsabstandes.

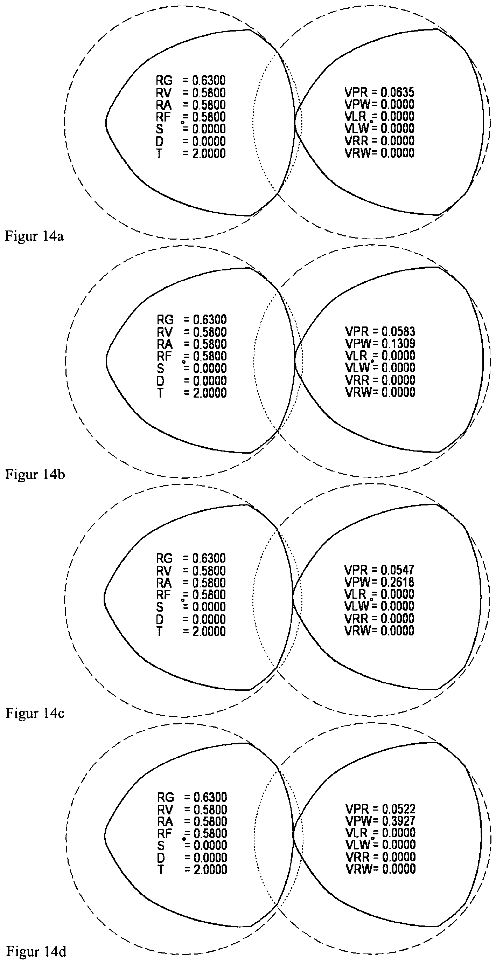

Die Figuren 14 bis 16 zeigen das erzeugende und das erzeugte Schneckenprofil innerhalb eines achtförmigen Schneckengehäuses. Innerhalb der beiden Schneckenprofile befinden sich Zahlenwertangaben zu folgenden Schneckengrößen:
- RG: Radius der beiden Gehäusebohrungen
- RV: Virtueller Gehäuseradius, der kleiner gleich dem Gehäuseradius RG ist
- RA: Schneckenaußenradius der dicht kämmenden, selbstreinigenden Schneckenprofile
- RF: Schneckenaußenradius der zu fertigenden Schneckenprofile
- S: Spiel zwischen den beiden zu fertigenden Schneckenprofilen
- D: Spiel zwischen den zu fertigenden Schneckenprofilen und dem Gehäuse
- T: Steigung eines Förder-, Misch- oder Übergangselements
- VPR: Größe der Verschiebung der ebenen, dicht kämmenden, selbstreinigenden Schneckenprofile, falls diese exzentrisch angeordnet werden
- VPW: Winkel der Verschiebung (Richtungsangabe) der ebenen, dicht kämmenden, selbstreinigenden Schneckenprofile, falls diese exzentrisch angeordnet werden
- VLR: Größe der Verschiebung des zu fertigenden Schneckenprofils der linken Welle innerhalb der Spiele
- VLW: Winkel der Verschiebung des zu fertigenden Schneckenprofils der linken Welle innerhalb der Spiele
- VRR: Größe der Verschiebung des zu fertigenden Schneckenprofils der rechten Welle innerhalb der Spiele
- VRW: Winkel der Verschiebung des zu fertigenden Schneckenprofils der rechten Welle innerhalb der Spiele
Das Schneckengehäuse, welches sich aus zwei gegenseitig durchdringenden Bohrungen mit jeweils dem Radius RG und dem Abstand A=1 ergibt, wird durch eine dünne, gestrichelte Linie dargestellt. Innerhalb der Durchdringung der beiden Gehäusebohrungen werden die beiden Bohrungen durch dünne, gepunktete Linien charakterisiert. Die Mittelpunkte der beiden Gehäusebohrungen sind identisch mit den beiden Drehpunkten der Schneckenprofile und sind jeweils durch einen kleinen Kreis charakterisiert, Die dicht kämmenden, selbstreinigenden Schneckenprofile werden durch eine dicke, durchgezogene Linie gekennzeichnet. Die Schneckenprofile in der Fertigung werden durch eine dünne, durchgezogene Linie dargestellt.
Dem Fachmann ist bekannt, dass zwischen dem Schneckenaußenradius RA des dicht kämmenden, selbstreinigenden Schneckenprofils, dem virtuellen Gehäuseradius RV, dem Spiel S zwischen den beiden zu fertigenden Schneckenprofilen und dem Spiel D zwischen den zu fertigenden Schneckenprofilen und dem Schneckengehäuse folgender Zusammenhang gilt: RA=RV-D+S/2.
Dem Fachmann ist ferner bekannt, dass zwischen dem Schneckenaußenradius RF des zu fertigenden Schneckenprofils, dem virtuellen Gehäuseradius RV und dem Spiel D zwischen den zu fertigenden Schneckenprofilen und dem Schneckengehäuse folgender Zusammenhang gilt: RF=RV-D.

Typischerweise ist der virtuelle Gehäuseradius RV gleich dem ausgeführten Gehäuseradius RG. Wird der virtuelle Gehäuseradius RV kleiner als der Gehäuseradius RG gewählt, so ergibt sich zwischen den Schneckenprofilen und dem Gehäuse ein zusätzliches Spiel. Dieses Spiel kann dazu genutzt werden, das erzeugende und das erzeugte Schneckenprofil unter Beibehaltung der Selbstreinigung exzentrisch zu verschieben. Die Exzentrizität ist durch Angabe der Größe der Verschiebung VPR und der Richtung der Verschiebung in Form eines Winkels VPW eindeutig charakterisiert.

**Figur 14****:** Die Figuren 14a bis 14d zeigen bevorzugte Ausführungsformen einer exzentrischen Positionierung der Schneckenprofile erfindungsgemäßer Schneckenelemente. Die geometrischen Kenngrößen können den einzelnen Figuren entnommen werden. Exzentrisch positionierte, eingängige, dicht kämmende, selbstreinigende Schneckenprofile sind dadurch charakterisiert, dass der Abstand der Schneckenprofile zum Gehäuse unabhängig von der Richtung der Verschiebung für die linke und rechte Welle gleich groß ist. Die Schneckenprofile in der Figur 14a sind soweit längs der Verbindungslinie der beiden Drehpunkte der Schneckenprofile verschoben, dass jeweils ein Punkt der Kammbereiche des Abdichtungsbereichs der Schneckenprofile das Gehäuse berührt, so dass eine Abdichtung des Zwickelbereichs erreicht wird. Die Schneckenprofile in den Figuren 14b bis 14d sind jeweils soweit verschoben, dass lediglich ein Punkt eines Kammbereichs des Abdichtungsbereichs der Schneckenprofile das Gehäuse berührt. Die Größe der dazu notwendigen Verschiebung hängt von der Richtung der Verschiebung ab. Es können ferner exzentrische Positionierungen der Schneckenprofile gewählt werden, bei dem kein Punkt der Kammbereiche des Abdichtungsbereichs der Schneckenprofile das Gehäuse berührt. Allgemein ist durch das exzentrische Positionieren des Schneckenprofils eines erfindungsgemäßen Schneckenelements der Grad einer linien- oder punktförmigen Abdichtung des Zwickelbereichs einstellbar. Insbesondere kann dadurch die mechanische und thermische Beanspruchung des viskosen Fluids im Bereich der Abdichtung gezielt eingestellt werden. Insbesondere kann der Grad der Abdichtung des Zwickelbereichs in den Kammbereichen abhängig von der Drehrichtung der Schneckenelemente angepasst werden. Der maximale Abstand der Kammbereiche des Abdichtungsbereichs der Schneckenprofile vom Gehäuse liegt bevorzugt im Bereich des 0- bis 0,05-fachen Achsabstandes, besonders bevorzugt im Bereich des 0- bis 0,025-fachen Achsabstandes.

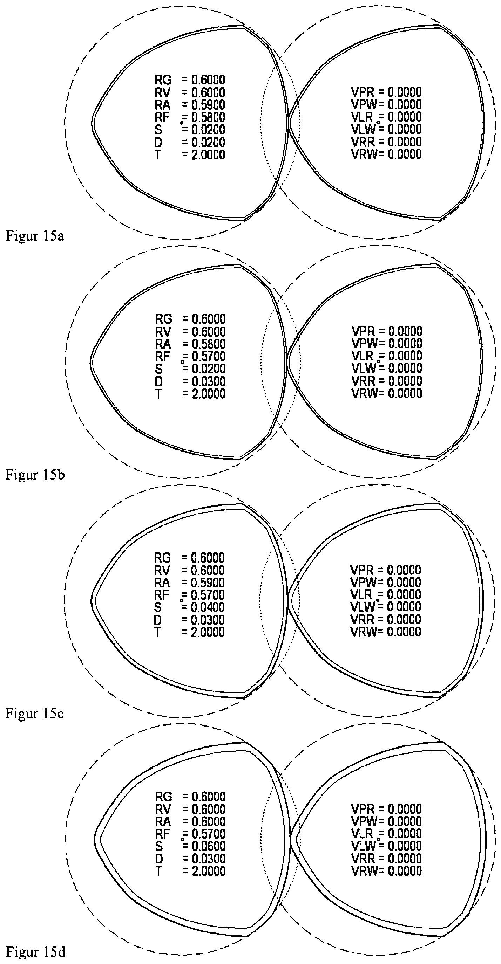

**Figur 15****:** Wie dem Fachmann bekannt ist, benötigen alle Schneckenelemente in der Praxis ein gewisses Spiel und zwar sowohl untereinander als auch gegenüber dem Gehäuse. Die Figuren 15a bis 15d zeigen verschiedene Spielstrategien. Die geometrischen Kenngrößen können den einzelnen Figuren entnommen werden. In Figur 15a wird eine Spielstrategie gezeigt, bei der das Spiel zwischen den zu fertigenden Schneckenprofilen und zwischen den zu fertigenden Schneckenprofilen und dem Gehäuse gleich groß ist. In Figur 15b wird eine Spielstrategie gezeigt, bei der das Spiel zwischen den zu fertigenden Schneckenprofilen kleiner ist als das Spiel zwischen den zu fertigenden Schneckenprofilen und dem Gehäuse. In Figur 15c wird eine Spielstrategie gezeigt, bei der das Spiel zwischen den zu fertigenden Schneckenprofilen größer ist als das Spiel zwischen den zu fertigenden Schneckenprofilen und dem Gehäuse. In Figur 15d wird eine weitere Ausführungsform nach Figur 15c mit besonders großen Spielen gezeigt. Typische, in der Praxis vorkommende Spiele liegen für das Spiel zwischen den zu fertigenden Schneckenprofilen im Bereich 0,002 bis 0,1. Typische, in der Praxis vorkommende Spiele liegen für das Spiel zwischen den zufertigenden Schneckenprofilen und dem Gehäuse im Bereich 0,002 bis 0,1. Typische, in der Praxis vorkommende Spiele sind über den Umfang des Schneckenprofils konstant. Es ist jedoch zulässig, sowohl das Spiel zwischen den zu fertigenden Schneckenprofilen als auch das Spiel zwischen den zu fertigenden Schneckenprofilen und dem Gehäuse über den Umfang der Schneckenprofile zu variieren.

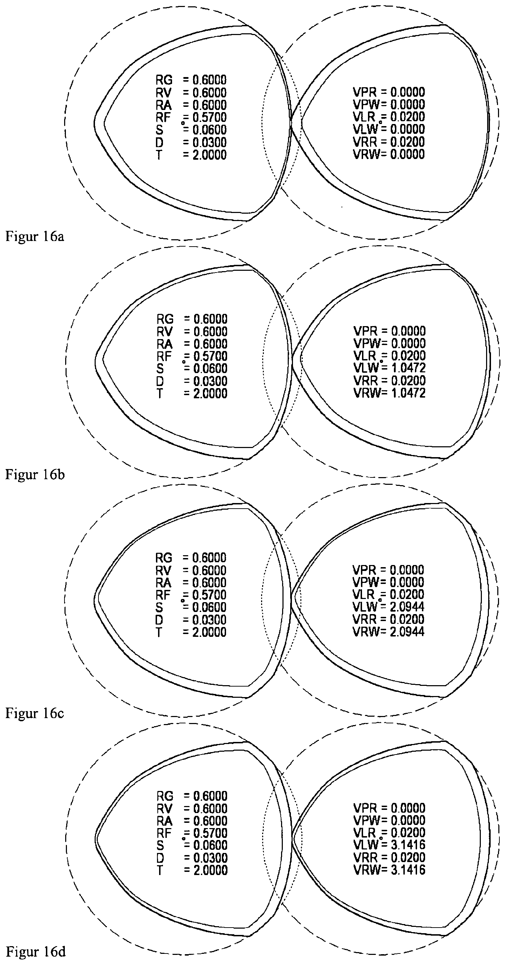

**Figur 16****:** Weiterhin ist es möglich, die zu fertigenden Schneckenprofile innerhalb der Spiele zu verschieben. Die Figuren 16a bis 16d zeigen eine Auswahl möglicher Verschiebungen. Die geometrischen Kenngrößen können den einzelnen Figuren entnommen werden. In den Figuren 16a bis 16d beträgt die Größe der Verschiebung für jeweils beide zu fertigenden Schneckenprofile VLR=VRR=0,02. In den Figuren 16a bis 16d wird die Richtung der Verschiebung für jeweils beide zu fertigende Schneckenprofile zwischen VLW=VRW=0 und VLW=VRW=π schrittweise variiert. Es ist zulässig, die beiden zu fertigenden Schneckenprofile unabhängig voneinander in verschiedene Richtungen und um verschiedene Größen zu verschieben. Hier bietet sich dem Fachmann eine weitere Möglichkeit, den Grad der Abdichtung des Zwickelbereichs durch die beiden Kammbereiche des Abdichtungsbereichs eines erfindungsgemäßen Schneckenprofils einzustellen. Insbesondere kann dadurch die mechanische und thermische Beanspruchung des viskosen Fluids im Bereich der Abdichtung gezielt eingestellt werden.
Eingängige Schneckenprofile, die nach dem Verfahren zur Erzeugung von dicht kämmenden, selbstreinigenden, gleichsinnig drehenden Schneckenprofilen der Gangzahl z erzeugt werden, können zur Fertigung von Schneckenelementen verwendet werden. Insbesondere können derartige Schneckenprofile zur Fertigung von Förderelementen, Mischelementen, Knetelementen und Übergangselementen verwendet werden.

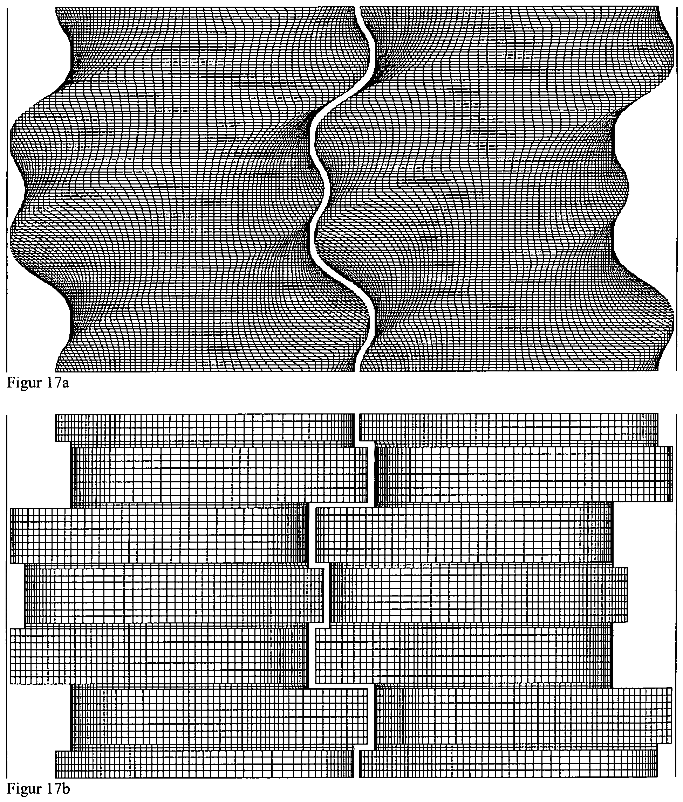

Die **Figur 17a** zeigt beispielhaft ein Paar eines eingängigen Förderelements, dessen Schneckenprofil analog zu den Figuren 1 und 2 aus 8 Kreisbögen aufgebaut ist. Der Gehäuseradius beträgt RG=0,6. Das Spiel zwischen den beiden Förderelementen beträgt S=0,02. Das Spiel zwischen den beiden Förderelementen und dem Gehäuse beträgt D=0,01. Die Steigung der Förderelemente beträgt T=1,2. Die Länge der Förderelemente beträgt 1,2, was einer Drehung der Schneckenprofile um einen Winkel von 2π entspricht. Das Gehäuse wird durch dünne, durchgezogene Linien links und rechts der beiden Förderelemente dargestellt. Auf den Oberflächen der beiden Förderelemente ist ferner ein mögliches Rechengitter dargestellt, welches zur Berechnung der Strömung in Zwei- und Mehrwellenextrudern verwendet werden kann.

Die **Figur 17b** zeigt beispielhaft ein Paar eines eingängigen Knetelements, dessen Schneckenprofil analog zu den Figuren 1 und 2 aus 8 Kreisbögen aufgebaut ist. Der Gehäuseradius beträgt RG=0,6. Das Spiel zwischen den Knetscheiben der beiden Knetelemente beträgt S=0,02. Das Spiel zwischen den Knetscheiben der beiden Knetelemente und dem Gehäuse beträgt D=0,01. Das Knetelement besteht aus 7 Knetscheiben, die jeweils um einen Winkel von π/3 rechtsgängig zueinander versetzt sind. Die erste und die letzte Knetscheibe besitzen eine Länge von 0,09. Die mittleren Knetscheiben besitzen eine Länge von 0,18. Die Nut zwischen den Knetscheiben besitzt eine Länge von 0,02. Das Gehäuse wird durch dünne, durchgezogene Linien links und rechts der beiden Knetelemente dargestellt. Auf den Oberflächen der beiden Knetelemente ist ferner ein mögliches Rechengitter dargestellt, welches zur Berechnung der Strömung in Zwei- und Mehrwellenextrudern verwendet werden kann.

Die Figuren 1 bis 17 zeigen Schneckenprofile und Schneckenelemente, in denen der dimensionslose Schneckenaußenradius RA die Werte 0,55, 0,58, 0,59, 0,6, 0,63 und 0,67 hat. Die Schneckenprofile erfindungsgemäßer Schneckenelemente und das Verfahren zur Erzeugung von erfindungsgemäßen Schneckenprofilen sind nicht auf diese diskreten Werte des dimensionslosen Schneckenaußenradius limitiert. Unter Anwendung des Verfahrens können eingängige Schneckenprofile mit einem dimensionslosen Schneckenaußenradius im Bereich von RA=0,51 und RA=0,707, bevorzugt im Bereich von RA=0,52 bis RA=0,7 erzeugt werden.
Überraschenderweise führen auch dreigängige Schneckenprofile, die im Wesentlichen in Richtung eines Nutbereichs eines dreigängigen Schneckenprofils exzentrisch positioniert sind, zu einer Abfolge von Abdichtungsbereich - Übergangsbereich - Kanalbereich - Übergangsbereich und damit zu erfindungsgemäßen Schneckenelementen.

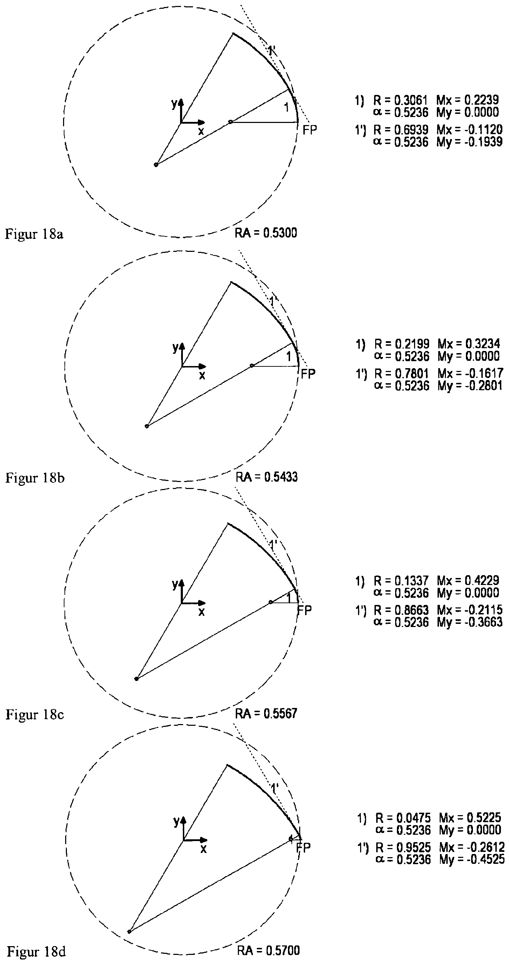

Die Figuren 18 bis 20 beschreiben zentrisch positionierte Schneckenprofile der Gangzahl 3, die nach dem Verfahren zur Erzeugung von dicht kämmenden, selbstreinigenden, gleichsinnig drehenden Schneckenprofilen der Gangzahl z erzeugt werden. In den Figuren 18 bis 20 wird immer ein Sechstel eines Schneckenprofils der Gangzahl 3 gezeigt.

**Figur 18****:** Die Figuren 18a bis 18d zeigen bevorzugte 2-Kreis-Schneckenprofile eines dreigängigen Schneckenprofils. Die Figuren 18a bis 18d unterscheiden sich durch den Schneckenaußenradius RA. In den Figuren 18a bis 18d ist der Radius R_1 des 1. Kreisbogens vom Schneckenaußenradius RA abhängig. In den Figuren 18a bis 18d besitzt der 1. Kreisbogen jeweils den Winkel α_1=π/6.

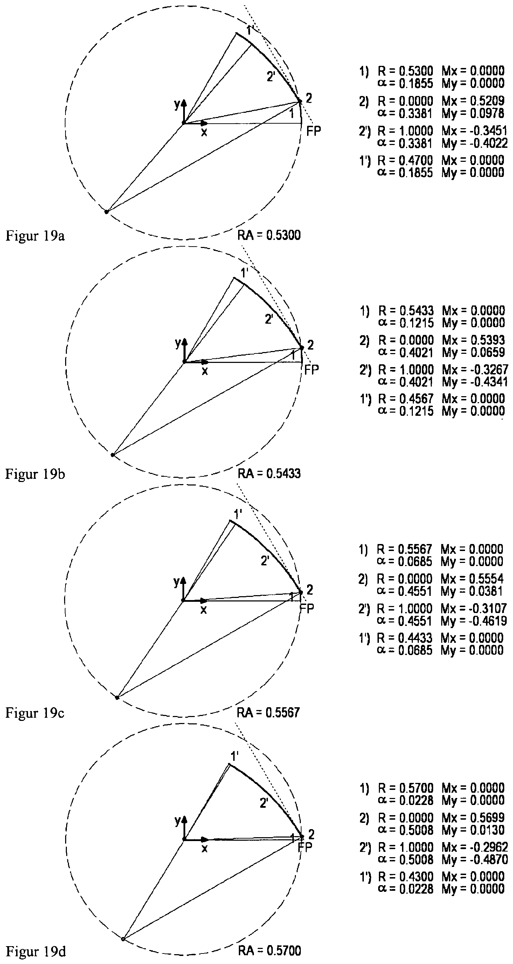

**Figur 19****:** Die Figuren 19a bis 19d zeigen bevorzugte 4-Kreis-Schneckenprofile eines dreigängigen Schneckenprofils. Die Figuren 19a bis 19d unterscheiden sich durch den Schneckenaußenradius RA. In den Figuren 19a bis 19d besitzt der 1. Kreisbogen jeweils den Radius R_1=RA. In den Figuren 19a bis 19d besitzt der 2. Kreisbogen jeweils den Radius R_2=0. In den Figuren 19a bis 19d ist der Winkel α_1 des 1. Kreisbogens vom Schneckenaußenradius RA abhängig. In den Figuren 19a bis 19d ist der Radius α_2 des 2. Kreisbogens vom Schneckenaußenradius RA abhängig.

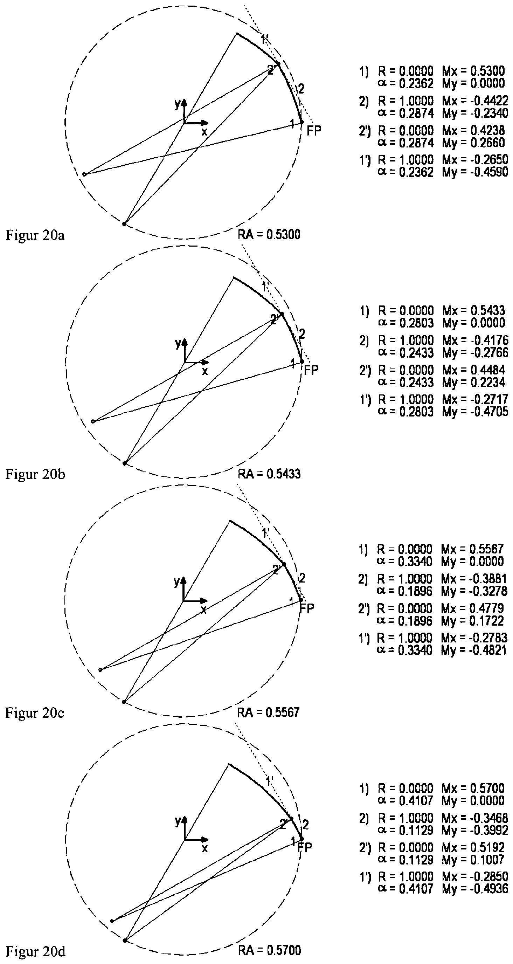

**Figur 20****:** Die Figuren 20a bis 20d zeigen weitere bevorzugte 4-Kreis-Schneckenprofile eines dreigängigen Schneckenprofils. Die Figuren 20a bis 20d unterscheiden sich durch den Schneckenaußenradius RA. In den Figuren 20a bis 20d besitzt der 1. Kreisbogen jeweils den Radius R_1=0. In den Figuren 20a bis 20d besitzt der 2. Kreisbogen jeweils den Radius R_2=A=1. In den Figuren 20a bis 20d ist der Winkel α_1 des 1. Kreisbogens vom Schneckenaußenradius RA abhängig. In den Figuren 20a bis 20d ist der Radius α_2 des 2. Kreisbogens vom Schneckenaußenradius RA abhängig.

In den Figuren 18 bis 20 wird ein Sechstel von dreigängigen Schneckenprofilen bestehend aus maximal 4 Kreisbögen gezeigt. Dreigängige Schneckenprofile sind jedoch keinesfalls auf 4 Kreisbögen beschränkt. Vielmehr können beliebig viele Kreisbögen zur Erzeugung von dreigängigen Schneckenprofilen herangezogen werden.

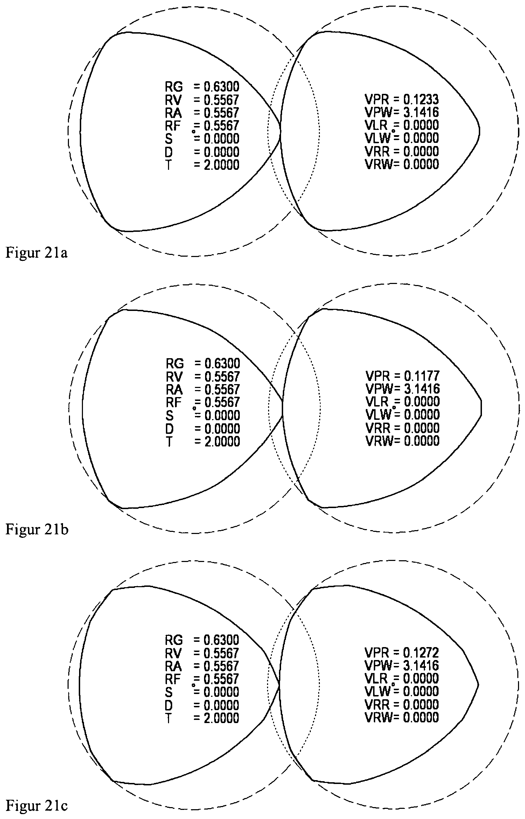

**Figur 21****:** Die Figuren 21a bis 21c zeigen bevorzugte Ausführungsformen einer exzentrischen Positionierung dreigängiger Schneckenprofile. Die Figur 21a zeigt eine exzentrische Positionierung eines dreigängigen Schneckenprofils nach Figur 18c. Die Figur 21b zeigt eine exzentrische Positionierung eines dreigängigen Schneckenprofils nach Figur 19c. Die Figur 21c zeigt eine exzentrische Positionierung eines dreigängigen Schneckenprofils nach Figur 20c. Der virtuelle Gehäuseradius beträgt RV=0,5567 und ist kleiner als der Gehäuseradius RG (RG=0,63). Die weiteren geometrischen Kenngrößen können den einzelnen Figuren entnommen werden. Exzentrisch positionierte, dreigängige, dicht kämmende, selbstreinigende Schneckenprofile sind dadurch charakterisiert, dass der minimale Abstand der Schneckenprofile zum Gehäuse unabhängig von der Richtung der Verschiebung für die linke und rechte Welle gleich groß ist. Die dreigängigen Schneckenprofile in den Figuren 21a bis 21c sind jeweils so exzentrisch positioniert, dass jeweils ein Punkt der Kammbereiche des Abdichtungsbereichs der Schneckenprofile das Gehäuse berührt, so dass eine Abdichtung des Zwickelbereichs erreicht wird. Das exzentrisch positionierte dreigängige Schneckenprofil führt zu einem Schneckenprofil mit einer Abfolge von Abdichtungsbereich - Übergangsbereich - Kanalbereich - Übergangsbereich. Die Abdichtung erfolgt also über zwei der drei Kämme eines dreigängigen Schneckenelements. Die dreigängigen Schneckenprofile werden in Richtung eines ihrer Nutbereiche aus der zentrischen Position verschoben. In den Figuren 21a bis 21c erfolgte die Verschiebung längs der Verbindungslinie der beiden Drehpunkte der Schneckenprofile. Die Größe der Verschiebung, mit der eine Abdichtung des Zwickelbereichs erreicht wird, hängt von dem gewählten Schneckenprofil ab.

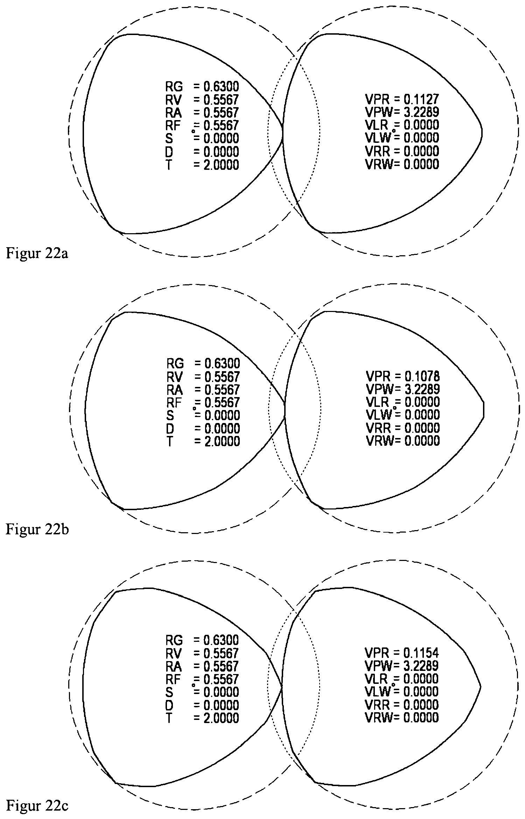

**Figur 22****:** Die Figuren 22a bis 22c zeigen weitere bevorzugte Ausführungsformen einer exzentrischen Positionierung dreigängiger Schneckenprofile. Die Figur 22a zeigt eine exzentrische Positionierung eines dreigängigen Schneckenprofils nach Figur 18c. Die Figur 22b zeigt eine exzentrische Positionierung eines dreigängigen Schneckenprofils nach Figur 19c. Die Figur 22c zeigt eine exzentrische Positionierung eines dreigängigen Schneckenprofils nach Figur 20c. Der virtuelle Gehäuseradius beträgt RV=0,5567 und ist kleiner als der Gehäuseradius RG (RG=0,63). Die weiteren geometrischen Kenngrößen können den einzelnen Figuren entnommen werden. Die Schneckenprofile in den Figuren 22a bis 22c sind jeweils so exzentrisch positioniert, dass lediglich ein Punkt eines Kammbereichs des Abdichtungsbereichs der Schneckenprofile das Gehäuse berührt. Die Größe der dazu notwendigen Verschiebung hängt von der Richtung der Verschiebung ab.

Es können ferner exzentrische Positionierungen der Schneckenprofile gewählt werden, bei dem kein Punkt der Kammbereiche des Abdichtungsbereichs der Schneckenprofile das Gehäuse berührt. Allgemein ist durch das exzentrische Positionieren des Schneckenprofils eines erfindungsgemäßen Schneckenelements der Grad einer linien- oder punktförmigen Abdichtung des Zwickelbereichs einstellbar. Insbesondere kann dadurch die mechanische und thermische Beanspruchung des viskosen Fluids im Bereich der Abdichtung gezielt eingestellt werden. Insbesondere kann der Grad der Abdichtung des Zwickelbereichs in den Kammbereichen abhängig von der Drehrichtung der Schneckenelemente angepasst werden. Der maximale Abstand der Kammbereiche des Abdichtungsbereichs der Schneckenprofile vom Gehäuse liegt bevorzugt im Bereich des 0- bis 0,05-fachen Achsabstandes, besonders bevorzugt im Bereich des 0- bis 0,025-fachen Achsabstandes.

Wie dem Fachmann bekannt ist, benötigen alle Schneckenelemente in der Praxis ein gewisses Spiel und zwar sowohl untereinander als auch gegenüber dem Gehäuse. Für die exzentrisch positionierten dreigängigen Schneckenprofile und den daraus resultierenden Schneckenelementen gelten die bereits genannten Spielstrategien und die bereits genannten Spielgrößen gemäß Figur 15. Weiterhin ist es möglich, die zu fertigenden Schneckenprofile innerhalb der Spiele zu verschieben. Es gelten diesbezüglich die Aussagen gemäß Figur 16.
In den Figuren 21 bis 22 werden exzentrisch positionierte dreigängige Schneckenprofile gezeigt, bei denen ein Sechstel des Schneckenprofils aus maximal 4 Kreisbögen besteht. Die Offenbarung ist jedoch nicht auf exzentrisch positionierte dreigängige Schneckenprofile beschränkt, bei denen ein Sechstel des Schneckenprofils aus maximal 4 Kreisbögen besteht. Vielmehr können beliebig viele Kreisbögen zur Erzeugung von erfindungsgemäßen Schneckenprofilen herangezogen werden.

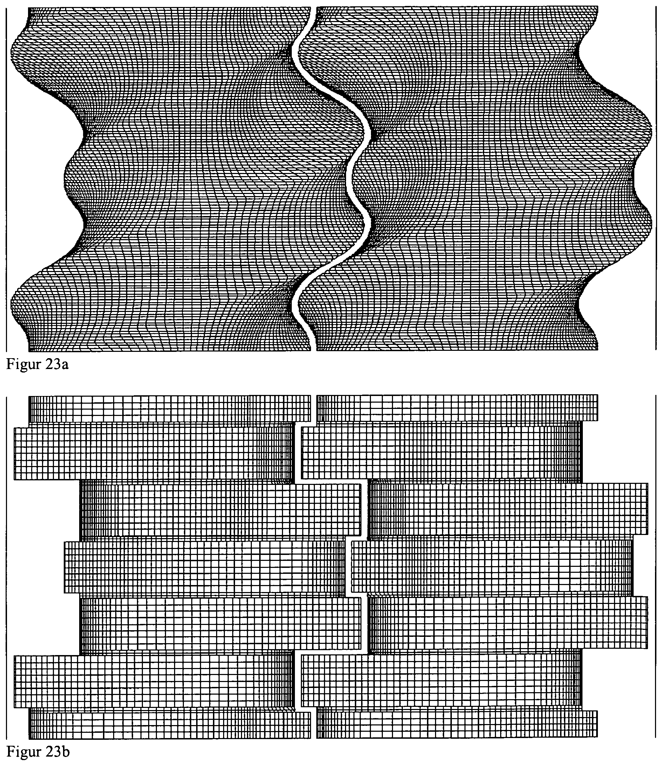

**Figur 23a** zeigt beispielhaft ein Paar eines exzentrischen dreigängigen Förderelements, das auf dem Schneckenprofil nach Figur 19c basiert. Der Gehäuseradius beträgt RG=0,63 und der virtuelle Gehäuseradius RV=0,5567. Das Spiel zwischen den beiden Förderelementen beträgt S=0,02. Das Spiel zwischen den beiden Förderelementen und dem Gehäuse beträgt D=0,01. Die Steigung der Förderelemente beträgt T=1,2. Die Länge der Förderelemente beträgt 1,2, was einer Drehung der Schneckenprofile um einen Winkel von 2π entspricht. Das Gehäuse wird durch dünne, durchgezogene Linien links und rechts der beiden Förderelemente dargestellt. Auf den Oberflächen der beiden Förderelemente ist ferner ein mögliches Rechengitter dargestellt, welches zur Berechnung der Strömung in Zwei- und Mehrwellenextrudern verwendet werden kann.

**Figur 23b** zeigt beispielhaft ein Paar eines exzentrischen dreigängigen Knetelements, das auf dem Schneckenprofil nach Figur 19c basiert. Der Gehäuseradius beträgt RG=0,63 und der virtuelle Gehäuseradius RV=0,5567. Das Spiel zwischen den Knetscheiben der beiden Knetelemente beträgt S=0,02. Das Spiel zwischen den Knetscheiben der beiden Knetelemente und dem Gehäuse beträgt D=0,01. Das Knetelement besteht aus 7 Knetscheiben, die jeweils um einen Winkel von π/3 rechtsgängig zueinander versetzt sind. Die erste und die letzte Knetscheibe besitzen eine Länge von 0,09. Die mittleren Knetscheiben besitzen eine Länge von 0,18. Die Nut zwischen den Knetscheiben besitzt eine Länge von 0,02. Das Gehäuse wird durch dünne, durchgezogene Linien links und rechts der beiden Knetelemente dargestellt. Auf den Oberflächen der beiden Knetelemente ist ferner ein mögliches Rechengitter dargestellt, welches zur Berechnung der Strömung in Zwei- und Mehrwellenextrudern verwendet werden kann.
Die Figuren 18 bis 20 zeigen dreigängige Schneckenprofile, in denen der dimensionslose Schneckenaußenradius RA die Werte 0,53, 0,5433, 0,5567 und 0,57 hat. Dreigängige Schneckenprofile sind nicht auf diese diskreten Werte des dimensionslosen Schneckenaußenradius limitiert. Unter Anwendung des Verfahrens können dreigängige Schneckenprofile mit einem dimensionslosen Schneckenaußenradius im Bereich von RA=0,505 bis RA=0,577, bevorzugt im Bereich von RA=0,51 bis RA=0,57 erzeugt werden.

Die Figuren 21 bis 23 zeigen exzentrisch positionierte dreigängige Schneckenprofile und Schneckenelemente, in denen der dimensionslose Gehäuseradius RG gleich 0,63 und der virtuelle Gehäuseradius RV gleich 0,5567 ist. Die exzentrisch positionierten dreigängigen Schneckenprofile erfindungsgemäßer Schneckenelemente und das Verfahren zur Erzeugung von erfindungsgemäßen Schneckenprofilen ist nicht auf diesen diskreten Wert des Gehäuseradius beziehungsweise des virtuellen Gehäuseradius limitiert. Unter Anwendung des erfindungsgemäßen Verfahrens können exzentrisch positionierte dreigängige Schneckenprofile in einem Gehäuse mit einem Radius RG im Bereich von 0,51 bis 0,707, bevorzugt im Bereich von 0,52 bis 0,7 positioniert werden, wobei der virtuelle Gehäuseradius mit einem Radius RV im Bereich von 0,505 bis 0,577, bevorzugt im Bereich von 0,51 bis 0,57 liegt.

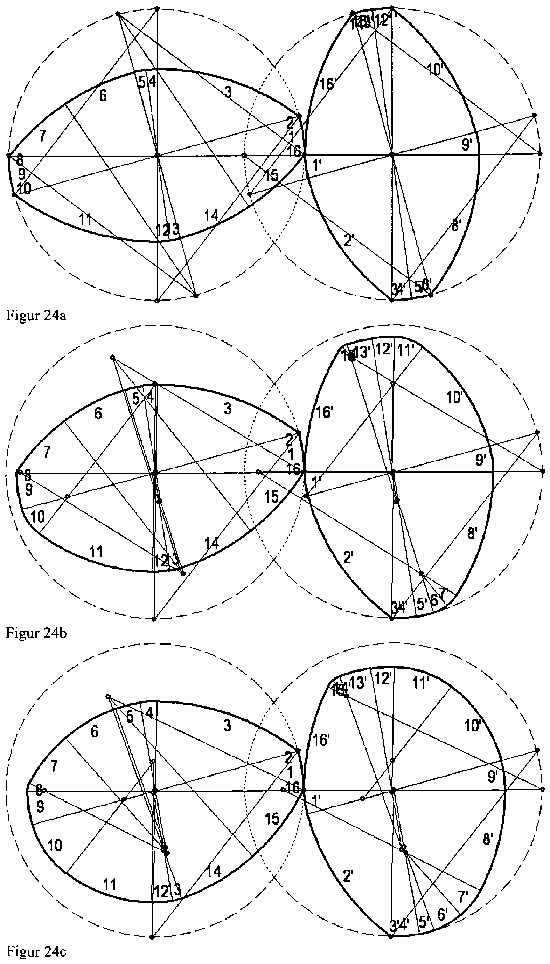

Die **Figuren 24a bis 24f** zeigen den Übergang von einem Paar zweigängiger Schneckenprofile auf ein Paar eingängiger Schneckenprofile. Alle diese Figuren weisen den gleichen Aufbau auf, der nachfolgend im Detail beschrieben wird. Das erzeugende Schneckenprofil wird durch das linke Schneckenprofil dargestellt. Das erzeugte Schneckenprofil wird durch das rechte Schneckenprofil dargestellt. Beide Schneckenprofile bestehen aus 16 Kreisbögen. Die Kreisbögen des erzeugenden und des erzeugten Schneckenprofils sind durch dicke, durchgezogene Linien gekennzeichnet, die mit den jeweiligen Nummern der Kreisbögen versehen sind. Bedingt durch die Vielzahl der Kreisbögen und bedingt durch die Erzeugung der Figuren mittels eines Computerprogramms kann es vorkommen, dass sich die Nummern einzelner Kreisbögen überlappen und daher schlecht lesbar sind, siehe zum Beispiel die Kreisbögen 3', 4' und die Kreisbögen 5', 6', 7' in Figur 24a. Trotz der teilweisen schlechten Lesbarkeit einzelner Nummern, wird der Aufbau der Profile aus dem Zusammenhang in Verbindung mit dieser Beschreibung dennoch deutlich.
Die Mittelpunkte der Kreisbögen werden durch kleine Kreise dargestellt. Die Mittelpunkte der Kreisbögen sind mit dünnen, durchgezogenen Linien sowohl mit dem Anfangspunkt als auch mit dem Endpunkt des dazugehörigen Kreisbogens verbunden. Der Schneckenaußenradius ist jeweils für das erzeugende und das erzeugte Schneckenprofil annähernd gleich groß. Im Bereich des Schneckengehäuses ist der Schneckenaußenradius durch eine dünne, gestrichelte Linie gekennzeichnet, im Zwickelbereich durch eine dünne, gepunktete Linie.

Die Figur 24a zeigt ein Paar von zweigängigen Schneckenprofilen, mit denen der Übergang gestartet wird. Das erzeugende und das erzeugte Schneckenprofil sind zueinander symmetrisch. Die Kreisbögen 1 und 9 des erzeugenden Schneckenprofils berühren auf ihrer gesamten Länge den Schneckenaußenradius. Die Kreisbögen 4, 5 und 12, 13 des erzeugenden Schneckenprofils berühren auf ihrer gesamten Länge den Kernradius. Die Kreisbögen 4', 5' und 12', 13' des erzeugten Schneckenprofils berühren auf ihrer gesamten Länge den Schneckenaußenradius. Die Kreisbögen 1' und 9' des erzeugten Schneckenprofils berühren auf ihrer gesamten Länge den Kernradius.

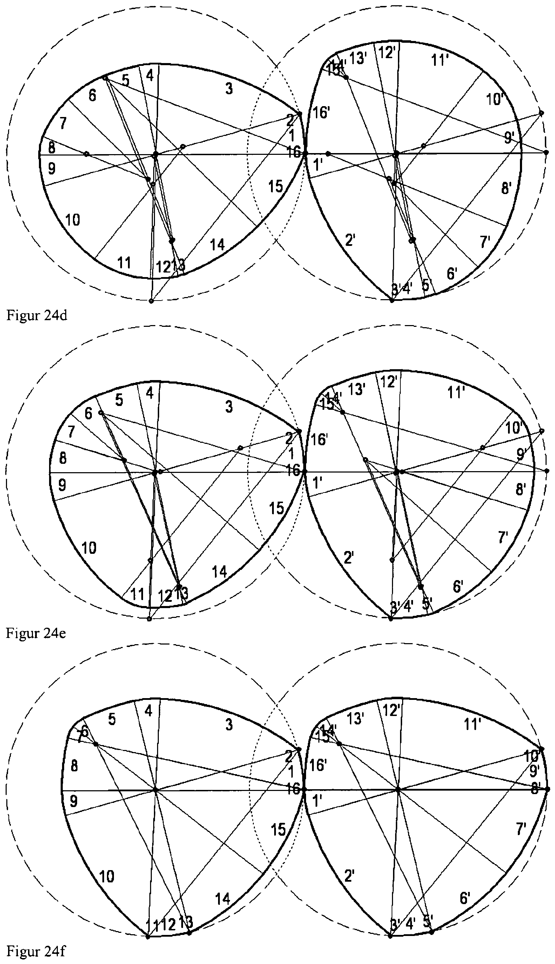

Die Figur 24f zeigt ein Paar von eingängigen Schneckenprofilen, mit denen der Übergang endet. Das erzeugende und das erzeugte Schneckenprofil sind zueinander symmetrisch. Die Kreisbögen 1 und 12 des erzeugenden Schneckenprofils berühren auf ihrer gesamten Länge den Schneckenaußenradius. Die Kreisbögen 4 und 9 des erzeugenden Schneckenprofils berühren auf ihrer gesamten Länge den Kernradius. Die Kreisbögen 4' und 9' des erzeugten Schneckenprofils berühren auf ihrer gesamten Länge den Schneckenaußenradius. Die Kreisbögen 1' und 12' des erzeugten Schneckenprofils berühren auf ihrer gesamten Länge den Kernradius.

Die Figur 24b zeigt ein Paar von Übergangsprofilen, bei denen der Übergang von den zweigängigen Schneckenprofilen zu den eingängigen Schneckenprofilen zu 20% vollzogen ist. Die Figur 24c zeigt ein Paar von Übergangsprofilen, bei denen der Übergang zu 40% vollzogen ist. Die Figur 24d zeigt ein Paar von Übergangsprofilen, bei denen der Übergang zu 60% vollzogen ist. Die Figur 24e zeigt ein Paar von Übergangsprofilen, bei denen der Übergang zu 80% vollzogen ist.

Der Übergang erfolgt dergestalt, dass immer der Kreisbogen 1 des erzeugenden Schneckenprofils auf seiner gesamten Länge den dimensionslosen Schneckenaußenradius RA berührt, wodurch der zugehörige Kreisbogen 1' des erzeugten Schneckenprofils auf seiner gesamten Länge den dimensionslosen Kernradius RI' berührt. Der Übergang erfolgt dergestalt, dass immer der Kreisbogen 4' des erzeugten Schneckenprofils den dimensionslosen Schneckenaußenradius RA' berührt, wodurch der zugehörige Kreisbogen 4 des erzeugenden Schneckenprofils den dimensionslosen Kernradius RI berührt. Dadurch, dass immer ein Kreisbogen des erzeugenden und des erzeugten Schneckenprofils auf dem Schneckenaußenradius liegt oder ihn berührt, wird während des gesamten Übergangs die Abreinigung der Gehäuseinnenoberfläche gewährleistet. Ferner ist aus den Figuren 24b bis 24e ersichtlich, dass das erzeugende und das erzeugte Schneckenprofil asymmetrisch sind. Ein Paar von Übergangselementen besteht immer aus einem ersten Übergangselement, welches auf den erzeugenden Übergangsprofilen beruht, und aus einem zweiten Übergangselement, welches auf den erzeugten Übergangsprofilen beruht.
Die Figur 24 zeigt Übergangsprofile, in denen der dimensionslose Schneckenaußenradius des erzeugenden Schneckenprofils und der dimensionslose Schneckenaußenradius des erzeugten Schneckenprofils im Bereich von RA=RA'=0,6146 bis RA=RA'=0,6288 liegen. Das Verfahren zur Erzeugung von ebenen, dicht kämmenden, selbstreinigenden, gleichsinnig drehenden Schneckenprofilen ist nicht auf diesen Bereich des dimensionslosen Schneckenaußenradius limitiert. Unter Anwendung des Verfahrens können Schneckenprofile mit einem dimensionslosen Schneckenaußenradius des erzeugenden Schneckenprofils zwischen RA größer 0 und RA kleiner oder gleich 1, bevorzugt im Bereich von RA=0,52 bis RA=0,707 erzeugt werden. Unter Anwendung des Verfahrens können Schneckenprofile mit einem dimensionslosen Schneckenaußenradius des erzeugten Schneckenprofils zwischen RA' größer 0 und RA' kleiner oder gleich 1, bevorzugt im Bereich von RA'=0,52 bis RA'=0,707 erzeugt werden.

Das Verfahren zur Erzeugung ebener, dicht kämmender, selbstreinigender und gleichsinnig drehender Schneckenprofile soll beispielhaft an dem Paar von Schneckenprofilen in Figur 24d erläutert werden.

Das erzeugende und erzeugte Schneckenprofil liegen r in einer Ebene. Der Einfachheit halber wird diese Ebene in die xy-Ebene eines kartesischen Koordinatensystems gelegt. Ebenfalls der Einfachheit halber wird der Drehpunkt des erzeugenden Schneckenprofils in den Ursprung des kartesischen Koordinatensystems gelegt (x=0, y=0). Der dimensionslose Achsabstand zwischen den beiden Drehpunkten des erzeugenden und des erzeugten Schneckenprofils beträgt A=1. Der Einfachheit halber wird der Drehpunkt des erzeugten Schneckenprofils auf die Koordinate x=A=1, y=0 gelegt.

Die Anzahl der Kreisbögen n des erzeugenden Schneckenprofils wird so gewählt, dass n größer oder gleich 1 ist. In dem vorliegendem Beispiel wird die Anzahl der Kreisbögen zu n=16 gewählt. Der dimensionslose Schneckenaußenradius RA des erzeugenden Schneckenprofils wird so gewählt, dass er größer 0 und kleiner oder gleich dem dimensionslosen Achsabstand A ist. In dem vorliegenden Beispiel wird der dimensionslose Schneckenaußenradius des erzeugenden Schneckenprofils zu RA=0,6203 gewählt. Der dimensionslose Kernradius RI des erzeugenden Schneckenprofils wird so gewählt, dass er größer oder gleich 0 und kleiner oder gleich dem dimensionslosen Schneckenaußenradius RA ist. In dem vorliegenden Beispiel wird der dimensionslose Kernradius des erzeugenden Schneckenprofils zu RI=0,3798 gewählt. Die Kreisbögen des erzeugenden Schneckenprofils können im oder gegen den Uhrzeigersinn um die Drehachse des erzeugenden Schneckenprofils angeordnet werden. In dem vorliegenden Beispiel werden die Kreisbögen gegen den Uhrzeigersinn um die Drehachse des erzeugenden Schneckenprofils angeordnet.

Der Winkel α_1 des 1. Kreisbogens des erzeugenden Schneckenprofils wird so gewählt, dass er im Bogenmaß größer oder gleich 0 und kleiner oder gleich 2π ist. In dem vorliegenden Beispiel wird der Winkel des 1. Kreisbogens zu α_1 =0,2744 gewählt. Der dimensionslose Radius R_1 des 1. Kreisbogens des erzeugenden Schneckenprofils wird erfindungsgemäß so gewählt, dass er größer oder gleich 0 und kleiner oder gleich dem dimensionslosen Achsabstand A ist. In dem vorliegenden Beispiel wird der dimensionslose Radius des 1. Kreisbogens zu R_1=RA=0,6203 gewählt. Die Position des 1. Kreisbogens des erzeugenden Schneckenprofils wird so gewählt, dass der 1. Kreisbogen innerhalb oder auf den Grenzen eines Kreisrings mit dem dimensionslosen Außenradius RA und dem dimensionslosen Innenradius RI liegt, dessen Mittelpunkt auf dem Drehpunkt des erzeugenden Schneckenprofils liegt. Die Position wird bevorzugt durch die Positionierung des Anfangspunkts und des Mittelpunkts des 1. Kreisbogens festgelegt. In dem vorliegenden Beispiel wird der Anfangspunkt des 1. Kreisbogens auf die Koordinate x=RA=0,6203, y=0,0000 und der Mittelpunkt des 1. Kreisbogens auf die Koordinate Mx_1 =0,0000, My_1 =0,0000 gelegt. Damit liegt der 1. Kreisbogen auf dem Schneckenaußenradius RA und die Anordnungsregel, dass mindestens ein Kreisbogen den Schneckenaußenradius RA berührt, ist erfüllt.
Die Winkel α_2, ..., α_(n-1) von n-2 weiteren Kreisbögen, also 14 weiteren Kreisbögen des erzeugenden Schneckenprofils werden so gewählt, dass sie im Bogenmaß größer oder gleich 0 und kleiner oder gleich 2π sind. In dem vorliegenden Beispiel werden die Winkel dieser 14 weiteren Kreisbögen zu α_2=0,6330, α_3=0,6330, α_4=0,2208, α_5=0,1864, α_6=0,4003, α_7=0,4003, α_8=0,3934, α_9=0,2744, α_10=0,6330, α_11=0,6330, α_12=0,2208, α_13=0,1864, α_14=0,4143 und α_15=0,4143 gewählt. Die dimensionslosen Radien R_2, ..., R_(n-1) dieser 14 weiteren Kreisbögen des erzeugenden Schneckenprofils werden so gewählt, dass sie größer oder gleich 0 und kleiner oder gleich dem dimensionslosen Achsabstand A sind. In dem vorliegenden Beispiel werden die dimensionslosen Radien dieser weiteren 14 Kreisbögen zu R_2=0,0000, R_3=1,0000, R_4=0,3797, R_5=0,7485, R_6=0,4726, R_7=0,4726, R_8=0,1977, R_9=0,4827, R_10=0,6000, R_11=0,4000, R_12=0,5173, R_13=0,1485, R_14=0,8887 und R_15=0,8887 gewählt. Gemäß den Anordnungsregeln werden die Kreisbögen so angeordnet, dass die Kreisbögen derart tangential ineinander übergehen, dass sich ein geschlossenes, konvexes Schneckenprofil ergibt, wobei ein Kreisbogen, dessen dimensionsloser Radius gleich 0 ist, wie ein Kreisbogen behandelt wird, dessen dimensionsloser Radius gleich eps ist, wobei eps eine sehr kleine positive reelle Zahl ist, die gegen 0 strebt (eps<<1, eps→0). Aus dieser Anordnungsregel folgt, dass der Endpunkt eines Kreisbogens gleich dem Anfangspunkt seines nachfolgenden Kreisbogens ist. Der geforderte tangentiale Übergang zwischen einem ersten Kreisbogen und einem zweiten, nachfolgenden Kreisbogen wird dadurch erfüllt, dass der Mittelpunkt dieses zweiten, nachfolgenden Kreisbogens so auf die Gerade, die durch den Endpunkt und den Mittelpunkt dieses ersten Kreisbogens gegeben ist, gelegt wird, dass der Abstand des Mittelpunkts dieses zweiten, nachfolgenden Kreisbogens von dem Endpunkt dieses ersten Kreisbogens gleich dem Radius dieses zweiten, nachfolgenden Kreisbogens ist und das Schneckenprofil konvex ist. Ein Kreisbogen, dessen Radius gleich 0 ist, wird wie ein Kreisbogen mit einem sehr kleinen Radius eps behandelt, wobei eps gegen 0 strebt, so dass sich der tangentiale Übergang weiterhin konstruieren lässt. Alternativ kann ein Kreisbogen, dessen Radius gleich 0 ist, so behandelt werden, dass das Schneckenprofil an der Position dieses Kreisbogens einen Knick aufweist, wobei die Größe des Knicks durch den Winkel dieses Kreisbogens gegeben ist. In dem vorliegenden Beispiel resultieren aus der beschriebenen Anordnungsregel die folgenden Positionen der Mittelpunkte der 14 weiteren Kreisbögen: Mx_2=0,5971, My_2=0,1681, Mx_3=-0,0187, My_3=-0,6198, Mx_4=0,0001, My_4=0,0002, Mx_5=0,0699, My_5=-0,3619, Mx_6=-0,0316, My_6=-0,1054, Mx_7=-0,0316, My_7=-0,1054, Mx_8=-0,2855, My_8=0,0000, Mx_9=-0,0005, My_9=0,0000, Mx_10=0,1124, My_10=0,0318, Mx_11=-0,0107, My_11=-0,1258, Mx_12=-0,0072, My_12=-0,0086, Mx_13=0,0626, My_13=-0,3707, Mx_14=-0,2097, My_14=0,3176, Mx_15=-0,2097, My_15=0,3176. Der Endpunkt des 4. Kreisbogens bzw. der Anfangspunkt des 5. Kreisbogens liegt auf dem dimensionslosen Kernradius RI des erzeugenden Schneckenprofils und die Anordnungsregel, dass mindestens ein Kreisbogen den dimensionslosen Kernradius RI berührt, ist erfüllt.
Der Winkel α-16 des letzten Kreisbogens des erzeugenden Schneckenprofils ergibt sich daraus, dass die Summe der Winkel der 16 Kreisbögen des erzeugenden Schneckenprofils im Bogenmaß gleich 2π ist, wobei der Winkel α_16 im Bogenmaß größer oder gleich 0 und kleiner oder gleich 2π ist. In dem vorliegenden Beispiel ergibt sich der Winkel dieses letzten Kreisbogens zu α_16=0,3654. Der dimensionslose Radius R_16 des letzten Kreisbogens des erzeugenden Schneckenprofils ergibt sich erfindungsgemäß daraus, dass dieser letzte Kreisbogen das erzeugende Schneckenprofil schließt. Da der Endpunkt des 15. Kreisbogens gleich dem Anfangspunkt des ersten Kreisbogens ist, ergibt sich der Radius des 16. Kreisbogens zu R_16=0,0000. Der Mittelpunkt des 16. Kreisbogen liegt damit in den Koordinaten Mx_16=0,6203, My_16=0,0000.
Die Anordnungsregel, dass alle Kreisbögen des erzeugenden Schneckenprofils innerhalb oder auf den Grenzen eines Kreisrings mit dem dimensionslosen Außenradius RA und dem dimensionslosen Kernradius RI liegen, dessen Mittelpunkt auf dem Drehpunkt des erzeugenden Schneckenprofils liegt, ist durch die im vorliegenden Beispiel getroffene Wahl der Winkel und Radien der 16 Kreisbögen und deren Positionierung ebenfalls erfüllt
Das erzeugte Schneckenprofil ergibt sich aus dem erzeugenden Schneckenprofil. Die Anzahl der Kreisbögen n' des erzeugten Schneckenprofils ist gleich der Anzahl der Kreisbögen n des erzeugenden Schneckenprofils. In dem vorliegendem Beispiel ergibt sich die Anzahl der Kreisbögen des erzeugten Schneckenprofils zu n'=16. Der dimensionslose Schneckenaußenradius RA' des erzeugten Schneckenprofils ist erfindungsgemäß gleich der Differenz des dimensionslosen Achsabstandes A minus des dimensionslosen Kernradius RI des erzeugenden Schneckenprofils. In dem vorliegenden Beispiel ergibt sich der dimensionslose Schneckenaußenradius des erzeugten Schneckenprofils zu RA'=A-RI=0,6202. Der dimensionslose Kernradius RI' des erzeugten Schneckenprofils ist gleich der Differenz des dimensionslosen Achsabstandes A minus des dimensionslosen Schneckenaußenradius RA des erzeugenden Schneckenprofils. In dem vorliegenden Beispiel ergibt sich der dimensionslose Kernradius des erzeugten Schneckenprofils zu RI'=A-RA=0,3797.

Der Winkel α_i' des i'-ten Kreisbogens des erzeugten Schneckenprofils ist gleich dem Winkel α_i des i-ten Kreisbogens des erzeugenden Schneckenprofils, wobei i und i' ganze Zahlen sind, die gemeinsam alle Werte im Bereich von 1 bis zur Anzahl der Kreisbögen n beziehungsweise n' durchlaufen. In dem vorliegenden Beispiel ergeben sich die Winkel der 16 Kreisbögen des erzeugten Schneckenprofils zu α_1'=α_1=0,2744, α_2'=α_2=0,6330, α_3'=α_3=0,6330, α_4'=α_4=0,2208, α_5'=α_5=0,1864, α_6'=α_6=0,4003, α_7'=α_7=0,4003, α_8'=α_8=0,3934, α_9'=α_9=0,2744, α_10'=α_10=0,6330, α_11'=α_11=0,6330, α_12'=α_12=0,2208, α_13'=α_13=0,1864, α_14'=α_14=0,4143, α_15'=α_15=0,4143 und α_16'=α_16=0,3654.

Die Summe des dimensionslosen Radius R_i' des i'-ten Kreisbogens des erzeugten Schneckenprofils und des dimensionslosen Radius R_i des i-ten Kreisbogens des erzeugenden Schneckenprofils ist gleich dem dimensionslosen Achsabstand A, wobei i und i' ganze Zahlen sind, die gemeinsam alle Werte im Bereich 1 bis zur Anzahl der Kreisbögen n beziehungsweise n durchlaufen (R_1'+R_1=A=1, ..., R_n'+R_n=A=1). In dem vorliegenden Beispiel ergeben sich die Radien der 16 Kreisbögen des erzeugten Schneckenprofils zu R_1'=A-R_1=1-0,6203=0,3797, R_2'=A-R_2=1-0,0000=1,0000, R_3'=A-R_3=1-1,0000=0,0000, R_4'=A-R_4=1-0,3797=0,6203, R_5'=A-R_5=1-0,7485=0,2515, R_6'=A-R_6=1-0,4726=0,5274, R_7'=A-R_7=1-0,4726=0,5274, R_8'=A-R_8=1-0,1977=0,8023, R_9'=A-R_9=1-0,4827=0.5173, R_10'=A-R_10=1-0,6000=0,4000, R_11'=AR_11=1-0,4000=0,6000, R_12'=A-R_12=1-0,5173=0,4827, R_13'=A-R_13=1-0,1485=0,8515, R_14'=A-R_14=1-0,8887=0,1113 R_15'=A-R_15=1-0,8887=0,1113 und R_16'=A-R_16=1-0,0000=1,0000.

Der Mittelpunkt des i'-ten Kreisbogens des erzeugten Schneckenprofils besitzt einen Abstand von dem Mittelpunkt des i-ten Kreisbogens des erzeugenden Schneckenprofils, der gleich dem dimensionslosen Achsabstand A ist, und der Mittelpunkt des i'-ten Kreisbogens des erzeugten Schneckenprofils besitzt einen Abstand von dem Drehpunkt des erzeugten Schneckenprofils, der gleich dem Abstand des Mittelpunkts des i-ten Kreisbogens des erzeugenden Schneckenprofils von dem Drehpunkt des erzeugenden Schneckenprofils ist, und die Verbindungslinie zwischen dem Mittelpunkt des i'ten Kreisbogens des erzeugten Schneckenprofils und dem Mittelpunkt des i-ten Kreisbogens des erzeugenden Schneckenprofils ist eine Parallele zu einer Verbindungslinie zwischen dem Drehpunkt des erzeugten Schneckenprofils und dem Drehpunkt des erzeugenden Schneckenprofils, wobei i und i' ganze Zahlen sind, die gemeinsam alle Werte im Bereich 1 bis zur Anzahl der Kreisbögen n beziehungsweise n' durchlaufen (i'=i). Durch die Positionierung des Drehpunktes des erzeugenden Schneckenprofils in den Punkt x=0, y=0 und durch die Positionierung des Drehpunktes des erzeugten Schneckenprofils in den Punkt x=A=1, y=0 ergibt sich die x-Koordinate eines Kreismittelpunkts Mx_i' des erzeugten Schneckenprofils aus der Addition der x-Koordinate des Kreismittelpunkts Mx_i des erzeugenden Schneckenprofils plus des dimensionslosen Achsabstandes A und die y-Koordinate des Kreismittelpunkts My_i' des erzeugten Schneckenprofils ist gleich der y-Koordinate des Kreismittelpunkts My_i des erzeugenden Schneckenprofils. In dem vorliegenden Beispiel ergeben sich die Positionen der Mittelpunkte der 16 Kreisbögen des erzeugten Schneckenprofils zu Mx_1'=1,0000, My_1'=0,0000, Mx_2'=1,5971, My_2'=0,1681, Mx_3'=0,9813, My_3'=-0,6198, Mx_4'=1,0001, My_4'=0,0002, Mx_5'=1,0699, My_5'=-0,3619, Mx_6'=0,9684, My_6'=-0,1054, Mx_7'=0,9684, My_7'=-0,1054, Mx_8'=0,7145, My_8'=0,0000, Mx_9'=0,9995, My_9'=0,0000, Mx_10'=1,1124, My_10'=0,0318, Mx_11'=0,9893, My_11'=-0,1258, Mx_12'=0,9928, My_12'=-0,0086, Mx_13'=1,0626, My_13'=-0,3707, Mx_14'=0,7903, My_14'=0,3176, Mx_15'=0,7903, My_15'=0,3176 und Mx_16'=1,6203, My_16'=0,0000.

Ein Anfangspunkt des i'-ten Kreisbogens des erzeugten Schneckenprofils liegt in einer Richtung bezogen auf den Mittelpunkt des i'-ten Kreisbogens des erzeugten Schneckenprofils, die entgegengesetzt derjenigen Richtung ist, die ein Anfangspunkt des i-ten Kreisbogens des erzeugenden Schneckenprofils bezogen auf den Mittelpunkt des i-ten Kreisbogens des erzeugenden Schneckenprofils besitzt, wobei i und i' ganze Zahlen sind, die gemeinsam alle Werte im Bereich 1 bis zur Anzahl der Kreisbögen n beziehungsweise n' durchlaufen (i'=i). In dem vorliegenden Beispiel liegt daher beispielsweise der Anfangspunkt des 1. Kreisbogens des erzeugten Schneckenprofils auf der Koordinate x=0,6203, y=0.

Aus dem Verfahren zur Erzeugung von ebenen, dicht kämmenden, selbstreinigenden, gleichsinnig drehenden Schneckenprofilen folgt in dem vorliegenden Beispiel für das erzeugte Schneckenprofil, dass alle 16 Kreisbögen des erzeugten Schneckenprofils tangential ineinander übergehen und ein geschlossen, konvexes Schneckenprofil bilden. Auch liegen alle 16 Kreisbögen des erzeugten Schneckenprofils innerhalb oder auf den Grenzen eines Kreisrings mit dem dimensionslosen Außenradius RA' und dem dimensionslosen Kernradius RI', dessen Mittelpunkt auf dem Drehpunkt des erzeugten Schneckenprofils liegt. Ferner liegt der 1. Kreisbogen des erzeugten Schneckenprofils auf dem dimensionslosen Kernradius RI' und die Anordnungsregel, dass mindestens ein Kreisbogen den dimensionslosen Kernradius RI' berührt, ist erfüllt. Ferner liegt der Endpunkt des 4. Kreisbogens bzw. der Anfangspunkt des 5. Kreisbogens des erzeugten Schneckenprofils auf dem dimensionslosen Schneckenaußenradius RA' des erzeugten Schneckenprofils und die Anordnungsregel, dass mindestens ein Kreisbogen den dimensionslosen Schneckenaußenradius RA' berührt, ist erfüllt.
Figur 26 zeigt ein achtförmiges Schneckengehäuse mit zwei Bohrungen. Der Bereich in dem sich zwei Gehäusebohrungen durchdringen, wird als Zwickelbereich bezeichnet. Die beiden Schnittpunkte von zwei Gehäusebohrungen werden als Gehäusezwickel bezeichnet. Zusätzlich ist der Öffnungswinkel δ_gz zwischen den beiden Gehäusezwickeln eingezeichnet.

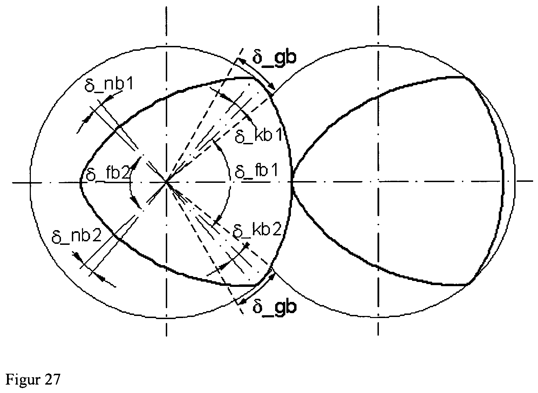

**Figur 27** zeigt die Winkel δ_fb1, 8_fb2, δ_nb1, δ_nb2, δ_kb1, δ_kb2 und δ_gb anhand eines erfindungsgemäßen Schneckenprofils.

In den Figuren werden maximal 16 Kreisbögen zur Beschreibung eines erzeugenden oder eines erzeugten Schneckenprofils verwendet. Die Verfahren sind jedoch keinesfalls auf maximal 16 Kreisbögen beschränkt. Vielmehr können beliebig viele Kreisbögen zur Erzeugung von Schneckenprofilen herangezogen werden. Insbesondere ist es dadurch möglich, Schneckenprofile, die nicht aus Kreisbögen aufgebaut und damit nicht selbstreinigend sind, durch eine ausreichend hohe Anzahl an Kreisbögen mit einer gewünschten Genauigkeit zu approximieren.
Aus einem (erzeugenden oder erzeugten) Schneckenprofil lässt sich das Längsschnittprofil berechnen. Bevorzugt wird jeder Kreisbogen eines Schneckenprofils genutzt, um mittels einer expliziten Funktion einen zu diesem Kreisbogen gehörigen Teil des Längsschnitts zu berechnen.
Zur Berechnung des Abstandes s eines Punktes eines Kreisbogens eines Schneckenprofils von der Drehachse wird in einem ersten Schritt der Schnittpunkt (Sx, Sy) einer Gerade g, dadurch charakterisiert, dass die besagte Gerade in der Ebene des Schneckenprofils liegt, durch den Drehpunkt des Schneckenprofils führt und die Orientierung der Gerade durch den Winkel ϕ gegeben ist, mit einem Kreisbogen kb, charakterisiert durch seinen Radius r und die Lage seines Mittelpunktes (Mx, My), bestimmt. In einem zweiten Schritt wird der Abstand s des Schnittpunktes (Sx, Sy) vom Drehpunkt des Schneckenprofils berechnet. Die Berechnung eines Schnittpunkts einer Geraden mit einem Kreisbogen lässt sich durch eine explizite Funktion darstellen. Gleiches gilt für die Abstandsberechnung. Für den Abstand gilt daher s=s(ϕ, r, Mx, My). Der Winkel ϕ lässt sich bei bekannter Steigung t eines Schneckenelements über ϕ/2π*t in eine axiale Position z_ax umrechnen, so dass für den Abstand s=s(z_ax, r, Mx, My)=s(ϕ/2π*t, r, Mx, My) gilt. Die Funktion s(z_ax, r, Mx, My) beschreibt den gesuchten Längsschnitt für einen Kreisbogen des Schneckenprofils.

## Patentansprüche

1. Schneckenelemente mit dicht kämmenden, selbstreinigenden, gleichsinnig drehenden Schneckenprofilen für mehrwellige Schneckenmaschinen mit paarweise gleichsinnigen und paarweise exakt abschabenden Schneckenwellen, wobei erzeugendes und erzeugtes Schneckenprofil eine Abfolge von Abdichtungsbereich - Übergangsbereich - Kanalbereich - Übergangsbereich aufweisen, wobei ein Abdichtungsbereich eine Abfolge von Kammbereich - Flankenbereich - Kammbereich ist, ein Kanalbereich eine Abfolge von Nutbereich - Flankenbereich - Nutbereich ist und ein Übergangsbereich eine Abfolge von Schneckenprofilbereichen ist, die mit einem Flankenbereich anfängt und mit einem Flankenbereich endet, **dadurch gekennzeichnet, dass**
der Abdichtungsbereich der Schneckenelemente dadurch charakterisiert ist, dass
∘ der Flankenbereich bezogen auf den Drehpunkt des Schneckenprofils einen Winkel δ_fb1 besitzt, der größer oder gleich dem halben Öffnungswinkel zwischen den beiden Gehäusezwickeln ist, δ_fb1≥arccos(0,5*a/ra), und der bevorzugt größer oder gleich dem Öffnungswinkel zwischen den beiden Gehäusezwickeln ist, δ_fb1≥2*arccos(0,5* a/ra), wobei ra ein Schneckenaußenradius und a ein Achsabstand zwischen den Drehachsen des erzeugenden und des erzeugten Schneckenprofils ist,
∘ ein Kammbereich bezogen auf den Drehpunkt des Schneckenprofils einen Winkel δ_kb1 besitzt, der kleiner oder gleich der Differenz des Kammwinkels eines eingängigen Erdmenger-Schneckenprofils minus des Öffnungswinkels zwischen den beiden Gehäusezwickeln ist, δ_kb1≤π-4*arccos(0,5*a/ra), und der bevorzugt kleiner oder gleich dem Kammwinkel eines zweigängigen Erdmenger-Schneckenprofils ist, δ_kb1≤π/2-2*arccos(0,5*a/ra),
∘ der andere Kammbereich bezogen auf den Drehpunkt des Schneckenprofils einen Winkel δ_kb2 besitzt, der kleiner oder gleich der Differenz des Kammwinkels eines eingängigen Erdmenger-Schneckenprofils minus des Öffnungswinkels zwischen den beiden Gehäusezwickeln ist, δ_kb2≤π-4*arccos(0,5*a/ra), und der bevorzugt kleiner oder gleich dem Kammwinkel eines zweigängigen Erdmenger-Schneckenprofils ist, δ_kb2≤π/2-2*arccos(0,5*a/ra),
und der Kanalbereich der Schneckenelemente dadurch charakterisiert ist, dass
∘ der Flankenbereich bezogen auf den Drehpunkt des Schneckenprofils einen Winkel δ_fb2 besitzt, der größer oder gleich dem halben Öffnungswinkel zwischen den beiden Gehäusezwickeln ist, δ_fb2≥arccos(0,5*a/ra), und der bevorzugt größer oder gleich dem Öffnungswinkel zwischen den beiden Gehäusezwickeln ist, δ_fb2≥2*arccos(0,5*a/ra), und der minimale Abstand des Flankenbereichs von dem Schneckenaußenradius ra größer als die halbe Gangtiefe h ist,
∘ ein Nutbereich bezogen auf den Drehpunkt des Schneckenprofils einen Winkel δ_nb1 besitzt, der kleiner oder gleich der Differenz des Kammwinkels eines eingängigen Erdmenger-Schneckenprofils minus des Öffnungswinkels zwischen den beiden Gehäusezwickeln ist, δ_nb1≤π-4*arccos(0,5*a/ra), und der bevorzugt kleiner oder gleich dem Kammwinkel eines zweigängigen Erdmenger-Schneckenprofils ist, δ_nb1≤π/2-2*arccos(0,5*a/ra),
∘ der andere Nutbereich bezogen auf den Drehpunkt des Schneckenprofils einen Winkel δ_nb2 besitzt, der kleiner oder gleich der Differenz des Kammwinkels eines eingängigen Erdmenger-Schneckenprofils minus des Öffnungswinkels zwischen den beiden Gehäusezwickeln ist, δ_nb2≤π-4*arccos(0,5*a/ra), und der bevorzugt kleiner oder gleich dem Kammwinkel eines zweigängigen Erdmenger-Schneckenprofils ist, δ_nb2≤π/2-2*arccos(0,5*a/ra).

2. Schneckenelemente nach Anspruch 1, **dadurch gekennzeichnet, dass** die Summe der Winkel der Kamm- und Flankenbereiche δ_kb1, δ_kb2 und δ_fb1 des Abdichtungsbereichs bevorzugt im Bereich von 0,75*δ_gz bis 2*δ_gb+δ_gz und besonders bevorzugt im Bereich von δ_gz bis δ_gb+δ_gz liegt und die Summe der Winkel der Nut- und Flankenbereiche δ_nb1, δ_nb2 und δ_fb2 des Kanalbereichs bevorzugt im Bereich von 0,75*δ_gz bis 2*δ_gb+δ_gz und besonders bevorzugt im Bereich von δ_gz bis δ_gb+δ_gz liegt.

3. Schneckenelemente nach Anspruch 1 oder 2, **dadurch gekennzeichnet, dass** der Übergangsbereich aus einem Flankenbereich besteht.

4. Schneckenelemente nach einem der Ansprüche 1 bis 3, mit Schneckenprofilen, die eine linienförmige Abdichtung des Zwickelbereichs hervorrufen.

5. Schneckenelemente nach einem der Ansprüche 1 bis 4, mit Schneckenprofilen, die eine punktförmige Abdichtung des Zwickelbereichs hervorrufen.

6. Schneckenelemente nach einem der Ansprüche 1 bis 5, **dadurch gekennzeichnet, dass** der maximale Abstand der Kammbereiche des Abdichtungsbereichs der Schneckenprofile vom Gehäuse bevorzugt im Bereich des 0- bis 0,05-fachen Achsabstandes, besonders bevorzugt im Bereich des 0- bis 0,025-fachen Achsabstandes liegt.

7. Schneckenelemente nach einem der Ansprüche 1 bis 6 mit einer Gangzahl z=1.

8. Schneckenelemente nach Anspruch 7 mit 8-Kreis-Schneckenprofilen.

9. Schneckenelemente nach einem der Ansprüche 1 bis 6 mit einer Gangzahl z=3 und einer exzentrischen Positionierung.

10. Schneckenelemente nach einem der Ansprüche 1 bis 9, **dadurch gekennzeichnet, dass** sie als Förderelemente oder Mischelemente ausgebildet sind.

11. Schneckenelemente nach einem der Ansprüche 1 bis 9, **dadurch gekennzeichnet, dass** sie als Knetelemente ausgebildet sind.

12. Schneckenelemente nach einem der Ansprüche 1 bis 9, **dadurch gekennzeichnet, dass** sie als Übergangselemente ausgebildet sind.

13. Verwendung von Schneckenelementen nach einem der Ansprüche 1 bis 12 in einer Mehrwellenschneckenmaschine.

## Claims

1. Screw elements with tightly intermeshing, self-cleaning, co-rotating screw profiles for multishaft screw-type machines with pairs of co-rotating and fully abrading screw shafts, wherein the generating and the generated screw profile have a sequence of sealing region - transition region - channel region - transition region, wherein a sealing region comprises a sequence of tip region - flank region - tip region, a channel region comprises a sequence of groove region - flank region - groove region and a transition region comprises a sequence of screw profile regions which begins with a flank region and ends with a flank region, **characterized in that** the sealing region of the screw elements is **characterized in that**
∘ the flank region relative to the point of rotation of the screw profile has an angle δ_*fb*1 which is greater than or equal to half the opening angle between the two barrel intersection points, δ_*fb*1≥arccos(0.5**a*/*ra*), and is preferably greater than or equal to the opening angle between the two barrel intersection points, δ_*fb*1≥2*arccos(0.5**a*/*ra*), where ra is a screw outer radius and a is an axial spacing between the axes of rotation of the generating and the generated screw profile,
∘ one tip region relative to the point of rotation of the screw profile has an angle δ_*kb*1 which is smaller than or equal to the difference of the tip angle of a one-flight Erdmenger screw profile minus the opening angle between the two barrel intersection points, δ_*kb*1≤π-4*arccos(0.5**a*/*ra*), and which is preferably smaller than or equal to the tip angle of a two-flight Erdmenger screw profile, δ_*kb*1≤π/2-2*arccos(0.5**a*/*ra*),
∘ the other tip region relative to the point of rotation of the screw profile has an angle δ_*kb*2 which is smaller than or equal to the difference of the tip angle of a one-flight Erdmenger screw profile minus the opening angle between the two barrel intersection points, δ_*kb*2≤-π-4*arccos(0.5**a*/*ra*), and which is preferably smaller than or equal to the tip angle of a two-flight Erdmenger screw profile, δ_*kb*2≤π/2-2*arccos(0.5**a*/*ra*),
and the channel region of the screw elements is **characterized in that**
∘ the flank region relative to the point of rotation of the screw profile has an angle δ_*fb*2 which is greater than or equal to half the opening angle between the two barrel intersection points, δ_*fb*2≥arccos(0.5**a*/*ra*), and which is preferably greater than or equal to the opening angle between the two barrel intersection points, δ_*fb*2≥2*arccos(0.5**a*/*ra*), and the minimum distance between the flank region and the screw outer radius ra is larger than half the flight depth *h,*
∘ one groove region relative to the point of rotation of the screw profile has an angle δ_*nb*1 which is smaller than or equal to the difference of the tip angle of a one-flight Erdmenger screw profile minus the opening angle between the two barrel intersection points, δ_*nb*1≤π-4*arccos(0.5**a*/*ra*), and which is preferably smaller than or equal to the tip angle of a two-flight Erdmenger screw profile, δ_*nb*1≤π/2-2*arccos(0.5**a*/*ra*),
∘ the other groove region relative to the point of rotation of the screw profile has an angle δ_*nb*2 which is smaller than or equal to the difference of the tip angle of a one-flight Erdmenger screw profile minus the opening angle between the two barrel intersection points, δ_*nb*2≤π-4*arccos(0.5**a*/*ra*), and which is preferably smaller than or equal to the tip angle of a two-flight Erdmenger screw profile, δ_*nb*2≤π/2-2*arccos(0.5**a*/*ra*).

2. Screw elements according to Claim 1, **characterized in that** the sum of the angles of the tip and flank regions δ_kb1, δ_kb2 and δ_fb1 of the sealing region preferably lies in the range from 0.75*δ_gz to 2*δ_gb+δ_gz and particularly preferably lies in the range from δ_gz to δ_gb+δ_gz, and the sum of the angles of the groove and flank regions δ_nb1, δ_nb2 and δ_fb2 of the channel region preferably lies in the range from 0.75*δ_gz to 2*δ_gb+δ_gz and particularly preferably lies in the range from δ_gz to δ_gb+δ_gz.

3. Screw elements according to Claim 1 or 2, **characterized in that** the transition region consists of a flank region.

4. Screw elements according to one of Claims 1 to 3, with screw profiles which cause linear sealing of the intermeshing zone.

5. Screw elements according to one of Claims 1 to 4, with screw profiles which cause punctiform sealing of the intermeshing zone.

6. Screw elements according to one of Claims 1 to 5, **characterized in that** the maximum spacing of the tip regions of the sealing region of the screw profiles from the barrel preferably lies in the range from 0 times to 0.05 times the axial spacing, particularly preferably in the range from 0 times to 0.025 times the axial spacing.

7. Screw elements according to one of Claims 1 to 6 with a flight number z of 1.

8. Screw elements according to Claim 7 with 8 circle screw profiles.

9. Screw elements according to one of Claims 1 to 6 with a flight number z of 3 and eccentric positioning.

10. Screw elements according to one of Claims 1 to 9, **characterized in that** they are configured as conveying elements or mixing elements.

11. Screw elements according to one of Claims 1 to 9, **characterized in that** they are configured as kneading elements.

12. Screw elements according to one of Claims 1 to 9, **characterized in that** they are configured as transition elements.

13. Use of screw elements according to one of Claims 1 to 12 in a multiple-shaft screw machine.

## Revendications

1. Eléments de vis sans fin avec des profils de vis sans fin engrenant étroitement, autonettoyants et tournant dans le même sens pour des machines à vis sans fin à plusieurs arbres de même sens par paires et se raclant exactement par paires, dans lesquels des profils de vis sans fin générateur et généré présentent une succession composée de: zone d'étanchéité - zone de transition - zone de canal - zone de transition, dans lesquels une zone d'étanchéité est une succession de zone d'engrènement- zone de flanc - zone d'engrènement, une zone de canal est une succession de zone de rainure - zone de flanc - zone de rainure et une zone de transition est une succession de zones de profils de vis sans fin, qui commence avec une zone de flanc et qui se termine avec une zone de flanc, **caractérisés en ce que** la zone d'étanchéité des éléments de vis sans fin est **caractérisée en ce que**
∘ la zone de flanc possède, par rapport au centre de rotation du profil de vis sans fin, un angle δ_fb1, qui est supérieur ou égal à la moitié de l'angle d'ouverture entre les deux coins de boîtier, δ_fb1 ≥ arccos(0,5*a/ra), et qui est de préférence supérieur ou égal à l'angle d'ouverture entre les deux coins de boîtier δ_fb1 ≥ 2*arccos(0,5*a/ra), dans lequel ra est un rayon extérieur de vis sans fin et a est une distance axiale entre les axes de rotation des profils de vis sans fin générateur et généré,
∘ une zone d'engrènement possède, par rapport au centre de rotation du profil de vis sans fin, un angle δ_kb1, qui est inférieur ou égal à la différence de l'angle d'engrènement d'un profil de vis sans fin d'Erdmenger à une entrée moins l'angle d'ouverture entre les deux coins de boîtier, δ_kb1 ≤ π-4*(arccos(0,5*a/ra), et qui est de préférence inférieur ou égal à l'angle d'engrènement d'un profil de vis sans fin d'Erdmenger à deux entrées, δ_kb1 ≤ π/2-2*arccos(0,5*a/ra),
∘ l'autre zone d'engrènement possède, par rapport au centre de rotation du profil de vis sans fin, un angle δ_kb2, qui est inférieur ou égal à la différence de l'angle d'engrènement d'un profil de vis sans fin d'Erdmenger à une entrée moins l'angle d'ouverture entre les deux coins de boîtier, δ_kb2 ≤ π:-4*arccos(0,5*a/ra), et qui est de préférence inférieur ou égal à l'angle d'engrènement d'un profil de vis sans fin d'Erdmenger à deux entrées, δ_kb2 ≤ π/2-2*arccos(0,5*a/ra),
et la zone de canal des éléments de vis sans fin est **caractérisée en ce que**
∘ la zone de flanc possède, par rapport au centre de rotation du profil de vis sans fin, un angle δ_fb2, qui est supérieur ou égal à la moitié de l'angle d'ouverture entre les deux coins de boîtier, δ_fb2 ≥ arccos(0,5*a/ra), et qui est de préférence supérieur ou égal à l'angle d'ouverture entre les deux coins de boîtier, δ_fb2 ≥ 2*arccos(0,5*a/ra), et la distance minimale de la zone de flanc du rayon extérieur de vis sans fin ra est supérieure à la moitié de la profondeur de pas h,
∘ une zone de rainure possède, par rapport au centre de rotation du profil de vis sans fin, un angle δ_nb1, qui est inférieur ou égal à la différence de l'angle d'engrènement d'un profil de vis sans fin d'Erdmenger à une entrée moins l'angle d'ouverture entre les deux coins de boîtier, δ_nb1 ≤ π-4*arccos(0,5*a/ra), et qui est de préférence inférieur ou égal à l'angle d'engrènement d'un profil de vis sans fin d'Erdmenger à deux entrées, δ_nb1 ≤ π/2-2*arccos(0,5*a/ra),
∘ l'autre zone de rainure possède, par rapport au centre de rotation du profil de vis sans fin, un angle δ_nb2, qui est inférieur ou égal à la différence de l'angle d'engrènement d'un profil de vis sans fin d'Erdmenger à une entrée moins l'angle d'ouverture entre les deux coins de boîtier, δ_nb2 ≤ π:-4*arccos(0,5*a/ra), et qui est de préférence inférieur ou égal à l'angle d'engrènement d'un profil de vis sans fin d'Erdmenger à deux entrées, δ_nb2 ≤ π/2-2*arccos(0,5*a/ra).

2. Eléments de vis sans fin selon la revendication 1, **caractérisés en ce que** la somme des angles des zones d'engrènement et de flanc δ_kb1, δ_kb2 et δ_fb1 de la zone d'étanchéité se situe de préférence dans la plage de 0,75*δ_gz à 2*δ_gb+δ_gz, et en particulier de préférence dans la plage de δ_gz à δ_gb+δ_gz, et la somme des angles des zones de rainure et de flanc δ_nb1, δ_nb2 et δ_fb2 de la zone de canal se situe de préférence dans la plage de 0,75*δ_gz à 2*δ_gb+δ_gz, et en particulier de préférence dans la plage de δ_gz à δ_gb+δ_gz.

3. Eléments de vis sans fin selon la revendication 1 ou 2, **caractérisés en ce que** la zone de transition se compose d'une zone de flanc.

4. Eléments de vis sans fin selon l'une quelconque des revendications 1 à 3, avec des profils de vis sans fin, qui assurent une étanchéité linéaire de la zone de coin.

5. Eléments de vis sans fin selon l'une quelconque des revendications 1 à 3, avec des profils de vis sans fin qui assurent une étanchéité ponctuelle de la zone de coin.

6. Eléments de vis sans fin selon l'une quelconque des revendications 1 à 5, **caractérisés en ce que** la distance maximale des zones d'engrènement de la zone d'étanchéité des profils de vis sans fin par rapport au boîtier se situe de préférence dans la plage de 0 à 0,05 fois la distance axiale, en particulier de préférence dans la plage de 0 à 0,025 fois la distance axiale.

7. Eléments de vis sans fin selon l'une quelconque des revendications 1 à 6, avec un nombre de pas z = 1.

8. Eléments de vis sans fin selon la revendication 7 avec 8 profils de vis sans fin circulaires.

9. Eléments de vis sans fin selon l'une quelconque des revendications 1 à 6, avec un nombre de pas z = 3 et un positionnement excentrique.

10. Eléments de vis sans fin selon l'une quelconque des revendications 1 à 9, **caractérisés en ce qu'**ils sont réalisés sous forme d'éléments de transport ou d'éléments de mélange.

11. Eléments de vis sans fin selon l'une quelconque des revendications 1 à 9, **caractérisés en ce qu'**ils sont réalisés sous forme d'éléments de malaxage.

12. Eléments de vis sans fin selon l'une quelconque des revendications 1 à 9, **caractérisés en ce qu'**ils sont réalisés sous forme d'éléments de transfert.

13. Utilisation d'éléments de vis sans fin selon l'une quelconque des revendications 1 à 12 dans une machine à vis sans fin à plusieurs arbres.
